# EUROPEAN PATENT APPLICATION

(11) **EP 3 748 748 A1**
(43) Date of publication of application: **09.12.2020**
(21) Application number: 18903722.9
(22) Date of filing: 29.05.2018
(51) Int. Cl.: H01M 8/02, H01M 8/04

(54) **FUEL CELL AND CELL UNIT THEREOF, AND ELECTRIC STACK STRUCTURE**

(30) Priority: 31.01.2018 WO PCT/CN2018/074657
(71) Applicant: SHANGHAI SUNBRIDGE POWER TECHNOLOGIES CO., LTD, Shanghai 201806 (CN)
(72) Inventor: CHENG, Jianhua, Shanghai 201806 (CN)
(74) Representative: EP&C
(86) International application number: PCT/CN2018/088816
(87) International publication number: WO 2019/148711

(57) **Abstract**

The present invention provides a fuel cell and a cell unit thereof, and an electric stack structure. The fuel cell has an internal common channel structure constituted by openings in various shapes two-dimensionally arranged in the plane of the cell unit. The two-dimensional arrangement of the openings has periodicity or periodicity of fluctuation to a certain extent, and the fuel fluid, cooling medium, and oxidation fluid are evenly provided and discharged to the fuel cell in the in-plane direction and stack direction of the cell unit. Provision of a sealing material in the opening in each layer of the cell unit guides the fuel fluid, the cooling medium, and the oxidation fluid to properly flow into the corresponding layer.

## Description

### Related Application

The present application claims priority over the application entitled "Fuel Cell, and Cell Unit Thereof, and Cell Stack Structure Body" respectfully submitted on January 31, 2018, with PCT Application No. CN2018/074657.

### Field of the Invention

The present invention relates to a fuel cell, particularly, a cell unit and a cell stack structure body, having high output density and high capacity.

### Background of the Invention

The fuel cell is a device that generates power by a chemical reaction between hydrogen and oxygen via an electrolyte. Owing to its potential for reducing the environmental burdens, the implementation and the widespread use of the fuel cells are receiving much attention. Also, depending on the types of electrolyte in use, the fuel cells have different temperatures for generating power and different characteristics. Mainly, the fuel cells are classified according to the types of electrolyte being used. The fuel cells are broadly classified into 4 types, namely; polymer electrolyte fuel cell (PEFC), solid oxide fuel cell (SOFC), phosphoric acid (PAFC) and molten carbonate fuel cell (MCFC).

For example, the polymer electrolyte fuel cell (PEFC) is provided with a membrane electrode assembly (MEA) that arranges an anode electrode on one side of the polymeric ion exchange membrane and a cathode electrode on the other side. MEA is sandwiched in between a pair of separators to constitute a cell. The operating temperature of PEFC is low ranging from 60 to 90 degrees centigrade. The advantage of using PEFC is in that it can exhibit a good output efficiency at a small device size. Mostly, PEFC is being utilized in a fuel cell vehicle. PEFC is also utilized in a solar battery, a backup battery for remote antenna, and a drone used in depopulated area.

A structure in which the electrolyte membrane is sandwiched by a positive electrode plate and a negative electrode plate is known as a cell. There are many minute channels formed on the positive electrode (the oxygen electrode) and the negative electrode (the hydrogen electrode) of the cell. The power generating reaction takes place when the externally supplied oxygen and hydrogen pass through these channels that sandwich the electrolyte membrane. Since the output of a single cell is limited, therefore, many cells are piled up to constitute a single package so that the required output may be obtained. This is known as the stacked-type fuel cell.

The fuel cell desires to have a high output density and a high capacity (high energy density) . That is, to generate the fuel cell' s power efficiently, an individual cell that constitutes the fuel cell stack must generate power efficiently. For this purpose, the fuel cell needs be designed so that various fluids such as hydrogen, cooling water and air are supplied to each cell uniformly. The output of a fuel cell is proportional to the membrane area and is not proportional to the fuel cell volume. In attempt to achieve a high-output and a small-sized stacked fuel cell, it is most effective to increase the cell area (catalyst reaction area) and to reduce the pitch for stacking the cells. The power generation current of the stack is effectively increased by enlarging the catalyst reaction area. Also, the output density of the fuel cell is increased by reducing the pitch.

However, just by enlarging the cell area and reducing the pitch for stacking the cells it would result in the increase in the pressure loss when various fluids such as hydrogen, cooling water and air pass through the inner planes of the cells. The excessive pressure loss will lead to a drop in the power generation efficiency. Some measures are needed to reduce the pressure loss as much as possible.

Furthermore, the cell area could not have been increased by using the conventional technology due to the peripheral arrangement of the manifolds and the crossing of the various flows that have resulted in the flow resistances of the fuel fluid, the cooling medium and the oxidizing fluid.

According to the fuel cells disclosed in the non-patent document 1 and the patent document 2, they lack in flexibility for extending the catalyst reaction area within 2 dimensions since the manifolds are arranged at a periphery of the catalyst layer. Also, regarding the fuel cell for vehicle disclosed in the non-patent document 1, its flow channel distribution is intersecting 3 dimensionally, therefore, the enlargement of the catalyst reaction area is even more difficult for this fuel cell. Also, according to the fuel cell disclosed in patent document 1, since a gutter of the channel formed on the separator is deep, therefore, a local strain stress was applied on a layer having power generation function, that contacts a corner of the channel gutter. This has caused a decline of durability. There is a disadvantage of significant problem affecting the fuel cell lifetime.

The patent document 3 discloses a fuel cell having low aspect ratio at width direction, and providing a plurality of fuel fluid channel openings, cooling medium channel openings and oxidizing fluid channel openings at two outer peripheries facing the MEA. Although this type of design may be advantageous in enlarging the catalyst reaction area 2 dimensionally, however, when one continues to enlarge the area in the width direction, the pressure loss of various fluids that passes through the inner planes of the cell unit still remains to be large to an unacceptable extent.

The number of cells for stacking could not have been increased by using the conventional technology because a high pressure of the gases supplied to the manifolds, and the flow resistances of the fuel fluid, the cooling medium and the oxidizing gas need be dealt with. According to the conventional problems, the fuel cell stack for vehicle, due to its space restriction, the increase in the number of cells for stacking is limited.

### Prior Art Documents

Patent Document 1: Japanese Laid-open Application Publication No. 2017-147134
Patent Document 2: Japanese Laid-open Application Publication No. 2016-096015
Patent Document 3: International Patent Publication No. WO2014/136965

Non-patent Document 1: Product Information for 2016 Toyota Sedan type fuel cell powered vehicle MIRAI

### Contents of the Invention

### Problems to be solved by the Invention

Also, in patent document 1, the channels formed in the fuel cell have a complex 3-dimensional flow distribution. For this reason, the enlargement of the catalyst reaction area is not possible for this fuel cell, which is a key factor for increasing the fuel cell performance. Accordingly, the mechanism becomes complex, at the same time, this will cause a problem in the elevated manufacturing cost of the fuel cell totally.

The purpose of the present invention is to provide a stacked-type fuel cell having a high output density and a high capacity (high energy density) that can be manufactured at a low cost.

### Means to solve the Problem

The purpose of the present invention is achievable by providing a fuel cell comprised as follows.

According to one aspect of the present invention, a cell unit that comprises a first separator and a second separator opposite to each other; and a membrane electrode assembly placed between the first and second separators; wherein the membrane electrode assembly includes a catalyst coated membrane, a first gas diffusion layer and a second gas diffusion layer provided to a first side and a second side of the catalyst coated membrane, respectively; wherein the cell unit includes the first separator and the second separator, a plurality of fuel fluid openings, a plurality of cooling medium openings, and a plurality of oxidizing fluid openings of the electrode membrane assembly that pass through an extension plane of the cell unit; wherein at least one of the fuel fluid openings, at least one of the cooling medium openings, and at least one of the oxidizing fluid openings, are arranged at a center area of the cell unit; wherein at least one of the fuel fluid openings, at least one of the cooling medium openings, and at least one of the oxidizing fluid openings, are arranged at a center area of the cell unit. As for the first gas diffusion layer, at least one of the fuel fluid openings includes a fuel fluid port for allowing the fuel fluid to flow through the first gas diffusion layer in the extended direction of the cell unit; and as for the second gas diffusion layer, at least one of the fuel fluid openings includes a sealing material for preventing the fuel fluid to flow through the second gas diffusion layer in the extended direction of the cell unit.
As for the second gas diffusion layer, at least one of the oxidizing fluid openings includes an oxidizing fluid port for allowing the oxidizing fluid to flow through the second gas diffusion layer in the extended direction of the cell unit; and as for the first gas diffusion layer, at least one of the oxidizing fluid openings includes a sealing material for preventing the oxidizing fluid to flow through the first gas diffusion layer in the extended direction of the cell unit. As for the first gas diffusion layer, the catalyst coated membrane, and the second gas diffusion layer, at least one of the cooling medium openings includes a sealing material for preventing the cooling medium flow through the first gas diffusion layer, the catalyst coated membrane and the second gas diffusion layer, in the extended direction of the cell unit.

According to the embodiments of the present invention, the catalyst coated membrane includes an electrolyte membrane, a first catalyst layer and a second catalyst layer provided to a first side and a second side of the electrolyte membrane, respectively.

According to the embodiments of the present invention, the membrane electrode assembly further includes a CCM holder film for holding the catalyst coated membrane; wherein the fuel fluid openings, the cooling medium openings, and the oxidizing fluid openings penetrate the CCM holder film; wherein the CCM holder film comprises a sealing material at least to the side wall of the fuel fluid openings, the cooling medium openings, and the oxidizing fluid openings.

According to the embodiments of the present invention, the CCM holder film includes a fitting structure; and the catalyst coated membrane is engaged by the fitting structure.

According to the embodiments of the present invention, the fuel fluid openings, the cooling medium openings, and the oxidizing fluid openings are periodically repeated throughout the cell unit or periodically repeated with fluctuation to some extent, and each periodic repeat is comprised of at least one or a plurality of basic units of the same kind or at least one or a plurality of basic units of the different kinds; wherein the cell unit includes an edge structure that terminates the periodic repeat of the basic units, at the edge portions other than the center area and between the boundaries of the basic units of the different kinds.

According to the embodiments of the present invention, the fuel fluid openings, the cooling medium openings, and the oxidizing fluid openings positioned at the cell unit are configured with the basic units; wherein the cell unit comprises the edge structure that terminates the basic units at the edge portions other than the center area.

According to the embodiments of the present invention, the fuel fluid openings, the cooling medium openings, and the oxidizing fluid openings include the supply openings and the exhaust openings, respectively.

According to the embodiments of the present invention, the basic units are configured with at least two fuel fluid openings, at least two cooling medium openings, and at least two oxidizing fluid openings.

According to the embodiments of the present invention, the basic unit is a unit having a minimum repeat arrangement periodicity of the pattern of various openings formed in accordance with Bravais lattice arrangement in 2 dimensions.

According to the embodiments of the present invention, at the first gas diffusion layer, at least one of the fuel cell openings is an opening which is completely open or an opening which is partially sealed; and/or; and at the second gas diffusion layer, at least one of the oxidizing fluid openings is an opening which is completely open or an opening which is partially sealed.

According to the embodiments of the present invention, the catalyst coated membrane, the first gas diffusion layer and the second gas diffusion layer form the cell unit by using a laminating method.

According to the embodiments of the present invention, at least some of the shapes of the fuel fluid openings, the cooling medium openings, and the oxidizing fluid openings are designed as an all-directional type, that is, a divergent angle and/or a convergent angle for various fluid flow in and/or out of ports corresponding to the first quadrant, the second quadrant, the third quadrant and fourth quadrant are greater than 1 degree and less than 180 degrees.

According to the embodiments of the present invention, at least some of the shapes of the fuel fluid openings, the cooling medium openings, and the oxidizing fluid openings are designed as a half-directional type, that is, a divergent angle and/or a convergent angle for various fluids flow in and/or out of ports corresponding to the first quadrant and the fourth quadrant or the second quadrant and the third quadrant are 1 degree and more and 90 degrees and less.

According to the embodiments of the present invention, at least some of the shapes of the fuel fluid openings, the cooling medium openings, and the oxidizing fluid openings are designed as follows: a divergent angle and/or a convergent angle for various fluids flow in and/or out of the ports arranged solely to any one quadrant among the four quadrants are 1 degree and more and 90 degrees and less; and a divergent angle and/or convergent angle for various fluids flow in and/or out of the ports having any two adjacent quadrants among the four quadrants are 1 degree and more and 180 degrees and less.

According to the embodiments of the present invention, at least one of the fuel fluid openings, at least one of the cooling medium openings, and at least one of the oxidizing fluid openings have plane shapes including polygons, deformed polygons, non-circular, circular and their elongated shapes, or their combinations.

According to the embodiments of the present invention, a fuel fluid guide channel for the first gas diffusion layer is installed, at a periphery of the fuel fluid port near to the catalyst coated membrane; wherein fuel fluid guide channel connects a fuel fluid supply guide channel and a fuel fluid exhaust guide channel, positioned at both ends of the first gas diffusion layer.

According to the embodiments of the present invention, an oxidizing fluid guide channel is installed near to the oxidizing fluid port and the catalyst coated membrane; wherein the oxidizing fluid guide channel connects an oxidizing fluid supply guide channel and an oxidizing fluid exhaust guide channel, positioned at both ends of the second gas diffusion layer.

According to the embodiments of the present invention, the first gas diffusion layer superimposes with a fuel fluid supply and exhaust channel provided at a side of the catalyst coated membrane, and with a fuel fluid supply and exhaust channel provided at a side of the separator; wherein the second gas diffusion layer superimposes with an oxidizing fluid supply and exhaust channel provided at a side of the catalyst coated membrane, and with the oxidizing fluid supply and exhaust channel provided at a side of the separator.

According to the embodiments of the present invention, as for the edge structure that terminates the extension in 2 dimensions of the all-directional type openings, in case of placing one of the supply openings for various fluids at the center, then one of the exhaust openings is divided into four to be placed at a corner, or one of the exhaust openings is divided into two to be placed at an edge, by utilizing the characteristics of flow in and/or out radially from the ports of the all-directional type openings; and as for the edge structure that terminates the extension in 2 dimensions of the half-directional type openings, in case of placing one of the supply openings for various fluids at the center, then one of the exhaust openings is divided into two to be placed at a corner, or one of the exhaust openings is divided into two to be placed at an edge, or one of the exhaust openings is directly placed at the other edge, by utilizing the characteristics of flow in and/or out in a circular-arc like manner from the ports of the half-directional type openings.

According to the another aspect of the present invention, a cell stack structure body formed by stacking a plurality of cell units, comprises: the fuel fluid openings, the cooling medium openings, and the oxidizing fluid openings of the plurality of cell units that are superimposed with each other to form their respective internal common manifolds of the cell stack structure body; wherein the internal common manifolds are used to supply and exhaust the fuel fluid, the cooling medium, and the oxidizing fluid to the plurality of cell units.

According to the embodiments of the present invention, between the adjacent separators of the adjacent cell units of the cell stack structure, which is for providing the cooling medium flow, there is at least one of the cooling medium openings of the separators that includes a port for cooling medium of the separator where the cooling medium flows in the extended direction of the cell unit.

According to the embodiments of the present invention, the separators include, at both its sides, a cooling medium guide channel which is connected to a cooling medium supply channel and a cooling medium exhaust channel.

According to the embodiments of the present invention, wherein an interval between upper surfaces of the first separators of the adjacent cell units is 0.1 mm or more and 1.3 mm or less.

According to another aspect of the present invention, a fuel cell having the cell stack structure comprises: a first end plate; a second end plate; and the cell stack structure body sandwiched by the first end plate and the second end plate from both sides; wherein at least either one of the first end plate or the second end plate includes the external common manifolds that correspond to the internal common manifolds for supplying and exhausting the fuel fluid, the cooling medium, and the oxidizing fluid.

### Brief Description of the Drawings

Fig. 1 shows the configuration of the stacked-type fuel cell, according to the embodiments of the present invention.
Fig. 1 (A) is an external view showing the configuration of the stacked -type fuel cell.
Fig. 1 (B) is a cross-sectional view showing the configuration of the stacked-type fuel cell.
Fig. 1 (C) is a cross-sectional view showing the configuration of the cell unit.
Fig. 2 (A), (B) and (C) are conceptual plan views for explaining the arrangement of openings 11, 12, 13 formed within the plane of the cell unit 8, that applied the regularity of extension of Bravais lattice in 2 dimensions, according to the embodiments of the present invention.
Fig. 3 is a drawing for explaining various shapes of the openings in accordance with the embodiments of the present invention; (A) shows all-directional type opening; (B), (C) and (E) show half-directional type openings; and (D) shows semi-directional type opening.
Fig. 4 (A) is a plan view for explaining one example of the regularity of the arrangement of the all-directional type openings 11, 12, 13 formed within the plane of the cell unit 8, according to the first embodiment of the present invention.
Fig. 4 (B) is a partially enlarged view indicating the flow direction in and out of the port of the all-directional type opening of Fig. 4 (A).
Figs. 5 (A) and (B) are drawings showing the all-directional flow of the reaction gases flowing in and out of the ports having different shapes, for the all-directional type openings 11, 12, 13 formed within the plane of the cell unit 8 of Fig. 4.
Fig. 6 (A) is a schematic plan view showing the structure of the CCM sheet M100 which is a generic term for the CCM membrane M101, the CCM holder film M102 for holding it, and the openings 11, 12, 13 perforating the CCM holder film M102, according to the embodiments of the present invention.
Fig. 6 (B) is a cross-sectional view of the CCM sheet M100 along the line II-II of Fig. 6 (A), according to the embodiments of the present invention.
Fig. 7 is a drawing for explaining the anode side channel of the CCM sheet M100, according to the first embodiment of the present invention.
Fig. 7 (A) is a 3-dimensional cross-section view of the cell unit 8 along the line II-II of Figs. 7 (B) and (C).
Fig. 7 (B) is a plan view showing the anode side gas diffusion layer 4 that appears when removing the anode side separator 6.
Fig. 7 (C) is a plan view of the CCM sheet M100 side facing the anode side gas diffusion layer 4.
Fig. 8 is a drawing for explaining the cathode side channel of the CCM sheet M100, according to the first embodiment of the present invention.
Fig. 8 (A) is a 3-dimensional cross-section view of the laminated cell unit 8 along the line II-II of Figs. 8 (B) and (C).
Fig. 8 (B) is a plan view showing the cathode side gas diffusion layer 5 that appears when removing the cathode side separator 7.
Fig. 8 (C) is a plan view of the CCM sheet M100 side facing the cathode side gas diffusion layer 5.
Fig. 9 is a drawing for explaining the channel formed on the anode side separator 6, according to the first embodiment of the present invention.
Fig. 9 (A) is a 3-dimensional cross-section view of the cell unit 8 along the line II-II of Fig. 9 (B).
Fig. 9 (B) is a plan view showing the structure of one of the faces of the anode side separator 6 where the port of the all-directional type opening for fuel fluid 11 and the fuel fluid channel 31 are formed.
Fig. 10 is a drawing for explaining the channel formed on the cathode side separator 7, according to the first embodiment of the present invention.
Fig. 10 (A) is a 3-dimensional cross-section view of the cell unit 8 along the line II-II of Fig. 10 (B).
Fig. 10 (B) is a plan view showing the structure of one of the faces of the cathode side separator 7 where the port of the all-directional type opening for oxidizing fluid 13 and the oxidizing fluid channel 33 are formed.
Fig. 11 is a drawing for explaining the cooling medium channel formed between the anode side separator 6 and the cathode side separator 7, according to the first embodiment of the present invention.
Fig. 11 (A) is a 3-dimensional cross-section view of the cell unit 8 along the line II-II of Fig. 11 (B).
Fig. 11 (B) is a plan view showing the structure of the side facing the separators 6 and 7 where the port of all-directional type opening for cooling medium 12 and the cooling medium channel 32 are formed.
Fig. 12 is a drawing for explaining the edge structure of the first embodiment of the present invention.
Fig. 12 (A) shows the all-directional type opening arrangement pattern E001 which is extended in 2 dimensions within the plane of the cell unit 8, and two edge post-processing all-directional type opening assigned areas E002 and E004 indicated by a thick line.
Fig. 12 (B) shows the cell unit 8 having the edge processed opening assigned structure E003 acquired by cutting the edge post-processing all-directional type opening assigned area E002 from the all-directional type opening arrangement pattern E001, and the cell stack structure body 9 made from this cell unit 8.
Fig. 13 is a drawing showing the plane shape of the all-directional type opening having the edge structure, according to the embodiments of the present invention.
Fig. 13 (A) shows a fully-shaped all-directional type opening.
Fig. 13 (B) shows two shapes of the all-directional type openings that divided the fully-shaped into two.
Fig. 13 (C) shows the shape of the all-directional type opening that divided the fully-shaped into four.
Fig. 14 (A) is a schematic plan view for explaining one example of the regularity of the arrangement of the half-directional type openings 11, 12, 13 formed within the plane of the cell unit 8, according to the second embodiment of the present invention.
Fig. 14 (B) is a partially enlarged view indicating the flow direction in and out of the port of the half-directional type opening of Fig. 14 (A) .
Figs. 15 (A) and (B) are drawings showing the half-directional flow of the reaction gases flowing in and out of the ports having different shapes, for the half-directional type openings 11, 12, 13 formed within the plane of the cell unit 8 of Fig. 14.
Fig. 16 is a drawing for explaining the anode side channel of the CCM sheet M100, according to the second embodiment of the present invention.
Fig. 16 (A) is a 3-dimentiosnal cross-section view of the cell unit 8 along the line II-II of Figs. 16 (B) and (C).
Fig. 16 (B) is a plan view showing the anode side gas diffusion layer 4 that appears when removing the anode side separator 6.
Fig. 16 (C) is a plan view of the CCM sheet M100 side facing the anode side gas diffusion layer 4.
Fig. 17 is a drawing for explaining the cathode side channel of the CCM sheet M100, according to the second embodiment of the present invention.
Fig. 17 (A) is a 3-dimensional cross-section view of the cell unit 8 along the line II-II of Figs. 17 (B) and (C).
Fig. 17 (B) is a plan view showing the cathode side gas diffusion layer 5 that appears when removing the cathode side separator 7;
Fig. 17 (C) is a plan view of the CCM sheet M100 side facing the cathode side gas diffusion layer 5.
Fig. 18 is a drawing for explaining the channel formed on the anode side separator 6, according to the second embodiment of the present invention.
Fig. 18 (A) is a 3-dimensional cross-section view of the cell unit 8 along the line II-II of Fig. 18 (B).
Fig. 18 (B) is a plan view showing the structure of one of the faces of the anode side separator 6 where the port of the half-directional type opening for fuel fluid 11 and the fuel fluid channel 31 are formed.
Fig. 19 is a drawing for explaining the channel formed on the cathode side separator 7, according to the second embodiment of the present invention.
Fig. 19 (A) is a 3-dimensional cross-section view of the cell unit 8 along the line II-II of Fig. 19 (B).
Fig. 19 (B) is a plan view showing the structure of one of the faces of the cathode side separator 7 where port of the half-directional type opening for oxidizing fluid 13 and the oxidizing fluid channel 33 are formed.
Fig. 20 is a drawing for explaining the cooling medium channel formed between the anode side separator 6 and the cathode side separator 7, according to the second embodiment of the present invention.
Fig. 20 (A) is a 3-dimensional cross-sectional view of the cell unit 8 along the line II-II of Fig. 20 (B).
Fig. 20 (B) is a plan view showing the structure of the side facing the separators 6 and 7 where the port of half-directional type opening for cooling medium 12 and the cooling medium channel 32 are formed.
Fig. 21 is a drawing for explaining the edge structure of the second embodiment of the present invention.
Fig. 21 (A) shows the half-directional type opening arrangement pattern E001 which is extended in 2 dimensions within the plane of the cell unit 8, and the edge post-processing half-directional type opening assigned area E002 and E004 indicated by a thick line.
Fig. 21 (B) shows the cell unit 8 having the edge processed opening assigned structure E003 acquired by cutting the edge post-processing half-directional type opening assigned area E002 from the half-directional type opening arrangement pattern E001, and the cell stack structure body 9 made from this cell unit 8.

### Reference Signs List

1 Electrolyte membrane
2 Anode side catalyst layer
3 Cathode side catalyst layer
4 Anode side gas diffusion layer
5 Cathode side gas diffusion layer
6 Anode side separator
7 Cathode side separator
8 Cell unit
9 Cell stack structure body
11 Openings for fuel fluid
11A Fuel fluid supply opening
11B Fuel fluid exhaust opening
12 Openings for cooling medium
12A Cooling medium supply opening
12B Cooling medium exhaust opening
13 Openings for oxidizing fluid
13A Oxidizing fluid supply opening
13B Oxidizing fluid exhaust opening
14 Vector A
15 Vector B
16 Basic unit of repeating arrangement of openings in accordance with 2 Bravais lattice in 2 dimensions
17 Minimum power generating element
18 Basic segment
   SB1 Basic segment, edge structure for terminating the extension in the 2 directions of B-axis
   SB2 Basic segment, edge structure for terminating the extension in the 2 directions of B-axis
   SB3 Basic segment, edge structure for terminating the extension in the 2 directions of B-axis
   SA1 Basic segment, edge structure for terminating the extension in the 2 directions of A-axis
   SA2 Basic segment, edge structure for terminating the extension in the 2 directions of A-axis
   SA3 Basic segment, edge structure for terminating the extension in the 2 directions of A-axis
      P1 to P5 Ports
19 Sealing material
31 Supply and exhaust channel for fuel fluid
32 Supply and exhaust channel for cooling medium
33 Supply and exhaust channel for oxidizing fluid
41 Internal common manifold for fuel fluid
41A Fuel fluid supply internal common manifold
41B Fuel fluid exhaust internal common manifold
42 Internal common manifold for cooling medium
42A Cooling medium supply internal common manifold
42B Cooling medium exhaust internal common manifold
43 Internal common manifold for oxidizing fluid
43A Oxidizing fluid supply internal common manifold
43B Oxidizing fluid exhaust internal common manifold
51 External common manifold for fuel fluid
51A Fuel fluid supply external common manifold
51B Fuel fluid exhaust external common manifold
52 External common manifold for cooling medium
52A Cooling medium supply external common manifold
52B Cooling medium exhaust external common manifold
53 External common manifold for oxidizing fluid
53A Oxidizing fluid supply external common manifold
53B Oxidizing fluid exhaust external common manifold
101 Endplate
102 Endplate
B B row of openings
C Stack direction of cell unit
Th Thickness of cell unit
M100 CCM sheet
M101 CCM membrane
M102 CCM holder film
M103 Fitting structure
31M1 Fuel fluid, first guide channel, CCM sheet side of anode side gas diffusion layer 4
31M1A Fuel fluid, supply, first guide channel, CCM sheet side of anode side gas diffusion layer 4
31M1B Fuel fluid, exhaust, first guide channel, CCM sheet side of anode side gas diffusion layer 4
31M2 Fuel fluid, second guide channel, CCM sheet side of anode side gas diffusion layer 4
31M2A Fuel fluid, supply, second guide channel, CCM sheet side of anode side gas diffusion layer 4
31M2B Fuel fluid, exhaust, second guide channel, CCM sheet side of anode side gas diffusion layer 4
31S1 Fuel fluid, first guide channel, separator 6 side of anode side gas diffusion layer 4
31S1A Fuel fluid, supply, first guide channel, separator 6 side of anode side gas diffusion layer 4
31S1B Fuel fluid, exhaust, first guide channel, separator 6 side of anode side gas diffusion layer 4
31S2 Fuel fluid, second guide channel, separator 6 side of anode side gas diffusion layer 4
31S2A Fuel fluid, supply, second guide channel, separator 6 side of anode side gas diffusion layer 4
31S2B Fuel fluid, exhaust, second guide channel, separator 6 side of anode side gas diffusion layer 4
31S0 Fuel fluid, main channel, separator 6 side of anode side gas diffusion layer 4
33M1 Oxidizing fluid, first guide channel, CCM sheet side of cathode side gas diffusion layer 5
33M1A Oxidizing fluid, supply, first guide channel, CCM sheet side of cathode side gas diffusion layer 5
33M1B Oxidizing fluid, exhaust, first guide channel, CCM sheet side of cathode side gas diffusion layer 5
33M2 Oxidizing fluid, second guide channel, CCM sheet side of cathode side gas diffusion layer 5
33M2A Oxidizing fluid, supply, second guide channel, CCM sheet side of cathode side gas diffusion layer 5
33M2B Oxidizing fluid, exhaust, second guide channel, CCM sheet side of cathode side gas diffusion layer 5
33S1 Oxidizing fluid, first guide channel, separator 7 side of cathode side gas diffusion layer 5
33S1A Oxidizing fluid, supply, first guide channel, separator 7 side of cathode side gas diffusion layer 5
33S1B Oxidizing fluid, exhaust, first guide channel, separator 7 side of cathode side gas diffusion layer 5
33S2 Oxidizing fluid, second guide channel, separator 7 side of cathode side gas diffusion layer 5
33S2A Oxidizing fluid, supply, second guide channel, separator 7 side of cathode side gas diffusion layer 5
33S2B Oxidizing fluid, exhaust, second guide channel, separator 7 side of cathode side gas diffusion layer 5
33S0 Oxidizing fluid, main channel, separator 7 side of cathode side gas diffusion layer 5
32S1 Cooling medium, the first guide channel
32S1A Cooling medium, supply, the first guide channel
32S1B Cooling medium, exhaust, the first guide channel
32S0 Cooling medium, main channel
E001 2-dimensional extension opening arrangement pattern
E002 Edge post-processing opening assigned area
E003 Edge processed opening assigned structure

### Preferred Embodiments of the Invention

In order to understand more clearly the above objectives, features, and advantages of the present invention, specific embodiments of the present invention will now be described in detail with reference to the drawings.

In the following description, many specific details are set forth in order to provide a thorough understanding of the present invention, however, the present invention may be embodied in other ways than those set forth herein. The present invention is not limited by the specific embodiments disclosed.

As shown in this application and the claims, words such as "a", "one," "one type," and/or "corresponding" being used do not particularly indicate single element, and it can include plural elements unless the context clearly indicates otherwise. In general, the terms "including" and "comprising" are meant to simply include the explicitly identified steps and elements, but these steps and elements do not constitute an exclusive element. The method or apparatus of the present invention may also include other steps or elements .

Herein, the preferred embodiment of the stacked-type fuel cell for the present invention is exemplified and described in detail with reference to the drawings. In the description below, the polymer electrolyte fuel cell (PEFC) is taken as an example. However, the materials, dimensions, shapes, angles and the relative layout positions of the components mentioned in the embodiments of the present invention are not intended to limit the scope of the present invention unless otherwise stated specifically in the present patent specification.

According to one aspect of the present invention, the cell unit comprises a first separator and a second separator opposite to each other, as well as a membrane electrode assembly laminated between the first and second separators. The cell unit includes the first separator, the second separator, a plurality of fuel fluid openings, a plurality of cooling medium openings, and a plurality of oxidizing fluid openings of the membrane electrode assembly that pass through an extension plane of the cell unit. According to this cell unit, at least one of fuel fluid openings, at least one of cooling medium openings, and at least one of oxidizing fluid openings, are arranged at a center area of the cell unit. As for the first gas diffusion layer, at least one of the fuel fluid openings includes a fuel fluid port for allowing the fuel fluid to flow through the first gas diffusion layer in the extended direction of the cell unit; and as for in the second gas diffusion layer, at least one of the fuel fluid openings includes a sealing material for preventing the fuel fluid to flow through the second gas diffusion layer in the extended direction of the cell unit. As for the second gas diffusion layer, at least one of the oxidizing fluid openings includes an oxidizing fluid port for allowing the oxidizing fluid to flow through the second gas diffusion layer in the extended direction of the cell unit; and as for the first gas diffusion layer, at least one of the oxidizing fluid openings includes a sealing material for preventing the oxidizing fluid to flow through the first gas diffusion layer in the extended direction of the cell unit. As for the first gas diffusion layer, the catalyst coated membrane, and the second gas diffusion layer, at least one of the cooling medium openings includes a sealing material for preventing the cooling medium flow through the first gas diffusion layer, the catalyst coated membrane and the second gas diffusion layer, in the extended direction of the cell unit.

The openings arranged in the center area can balance the flow of the fuel fluid, the cooling medium, and the oxidizing fluid in the cell unit even more, as compared with the openings arranged only at the end portions. One can understand that the openings can be arranged at a portion of the center area. In the context of the present invention, the scope of the term "center area" should be understood broadly without being limited to a small portion in the center of a cell unit. For example, the area of the center area can reach 80% or more of the surface of the cell.

According to the embodiments of the present invention, the fuel fluid openings, the cooling medium openings, and the oxidizing fluid openings are periodically repeated throughout the cell unit or periodically repeated with fluctuation to some extent, and each periodic repeat is comprised of at least one or a plurality of basic units of the same kind or at least one or a plurality of basic units of the different kinds. According to the embodiments, the openings are arranged, not only to the center area but also to the edge portions other than the center area. The cell unit includes an edge structure that terminates the periodic repeat of the basic unit, at the edge portions other than the center area. In case of a periodic repeat of openings includes the basic units of different kinds, an edge structure that terminates the periodic repeat of the basic unit can be provided between the boundaries of the basic units of the different kinds . In a simplified embodiment, a plurality of fuel fluid openings, a plurality of cooling medium openings, and a plurality of oxidizing fluid openings are configured with one basic unit throughout the cell. Further, the cell unit may have an edge structure that terminates the basic unit in the edge portion other than the center area.

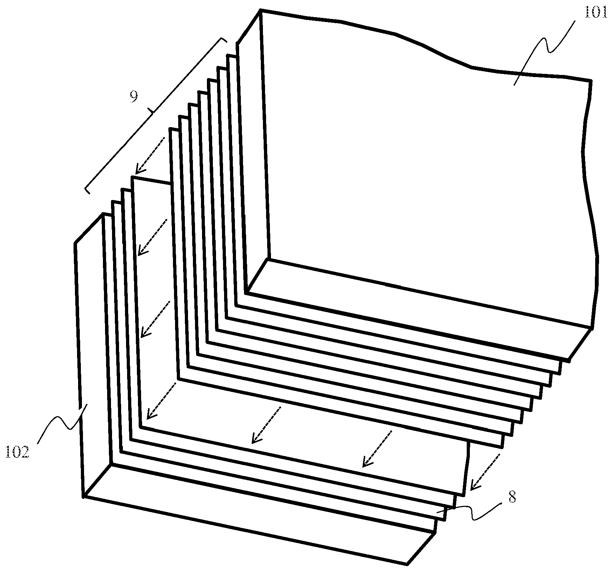

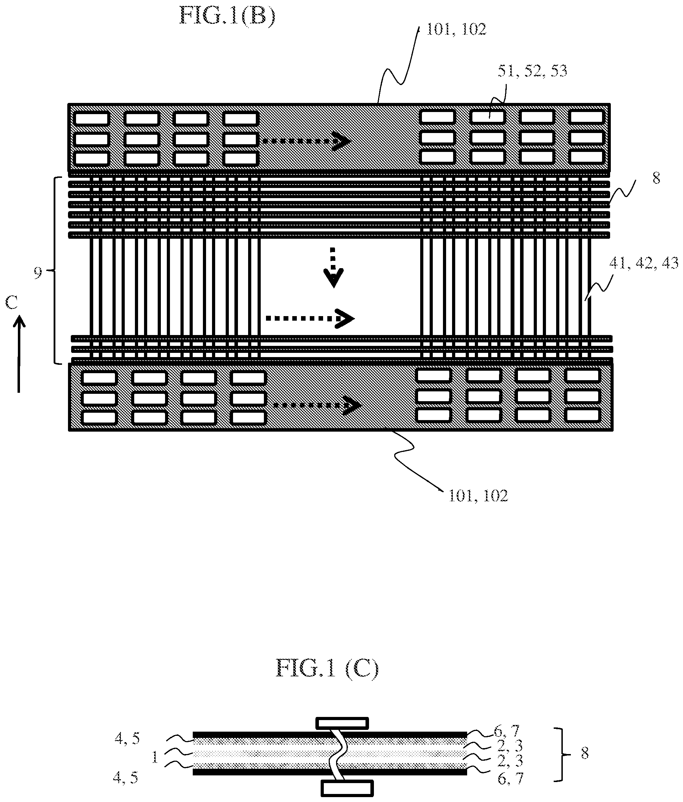

Hereinbelow, the embodiments of the present invention will be described in detail by referring to the appropriate drawings. Among the referred drawings, Fig. 1 shows an external view of the stacked-type fuel cell. Fig. 1 (A) is an external view showing the configuration of the stacked-type fuel cell. Fig. 1 (B) is a cross-sectional view showing the configuration of the stacked-type fuel cell. Fig. 1 (C) is a cross-sectional view showing the configuration of the cell unit.

As shown in Fig. 1 (A), both edges of the cell stack structure body 9 formed by stacking the cell units 8 are tightly held by the endplates 101 and 102. As shown in Fig. 1 (B), the endplates 101 and 102 install the external common manifolds 51, 52, 53, and the cell stack structure body 9 provides internally the internal common manifolds 41, 42, 43 so that various fluids including the fuel fluid, the cooling medium and the oxidizing fluid are supplied and exhausted, respectively.

The cell unit 8 has a laminated structure shown in Fig. 1 (B), provided with an electrolyte membrane 1 and a pair of electrode catalyst layers 2, 3 (that is, a cathode side catalyst layer and an anode side catalyst layer) are arranged by sandwiching the electrolyte membrane 1. On the outer side of the electrode catalyst layers 2 and 3, gas diffusion layers 4 and 5 are arranged respectively. Further, on the outer side of the gas diffusion layers 4 and 5, a pair of separators 6 and 7 are arranged respectively. Membrane electrode assembly is comprised of the layers 1 through 5.

The fuel fluid and the oxidizing fluid of each embodiment of the present invention are described as gases. The stacked-type fuel cell according to each embodiment of the present invention can utilize various fuels such as pure hydrogen and methanol. The example below is explained by taking hydrogen as the fuel.

### Fuel Cell Mechanism

The mechanism of the stacked-type fuel cell follows below. Hydrogen gas is supplied to an anode (called fuel electrode) and a proton is removed from the supplied hydrogen gas, with an aid of the catalyst, and the electron is transferred to the external circuit. Here, the hydrogen is converted to hydrogen ion (called proton). Meanwhile, the oxygen gas is supplied to a cathode (called air electrode). The oxygen reacts with the proton permeating through the electrolyte membrane and the electron from the external circuit to generate water.

The stacked-type fuel cell of the present invention, as one example, the solid polymeric electrolyte is utilized as the electrolyte membrane 1. The anode side catalyst layer 2 and the cathode side catalyst layer 3 are attached to this electrolyte membrane 1. The anode side separator 6 is placed to the anode side catalyst layer 2 by intervening the anode side gas diffusion layer 4. At the same time, the cathode side separator 7 is placed at the cathode side catalyst layer 3 by intervening the cathode side gas diffusion layer 5, thereby configuring the cell unit 8. The polymer electrolyte fuel cell shown in Fig. 1 (A) is formed by stacking a multiple number of cell units 8. In the present invention, we have designed the layout arrangement of openings 11, 12, 13 formed in the plane of the cell unit 8 by using the basic unit 16 with a repeating pattern of various openings arranged in accordance with Bravais lattice in 2 dimensions, and we attempt to explain, by using the minimum power generating element 17, regarding the types of openings 11, 12, 13 that are the minimal requirement for generating power.

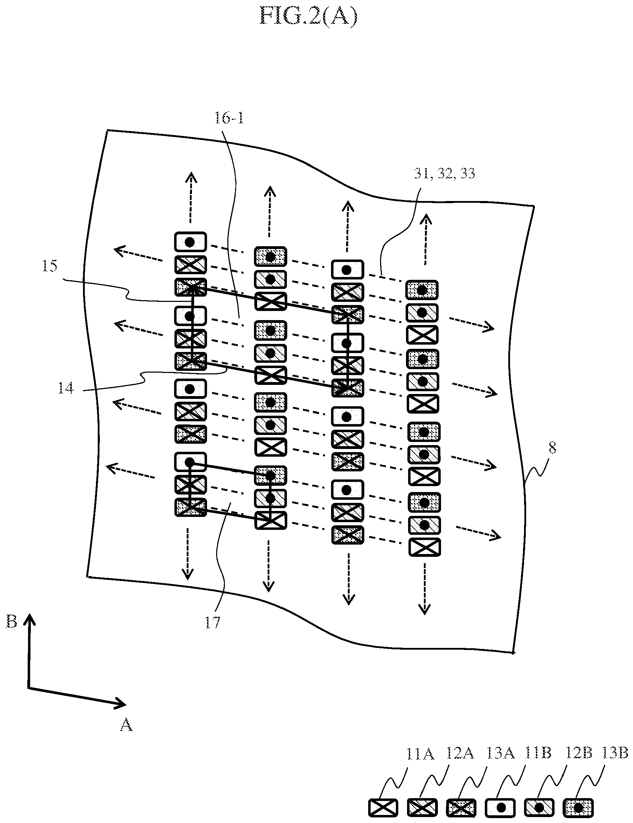

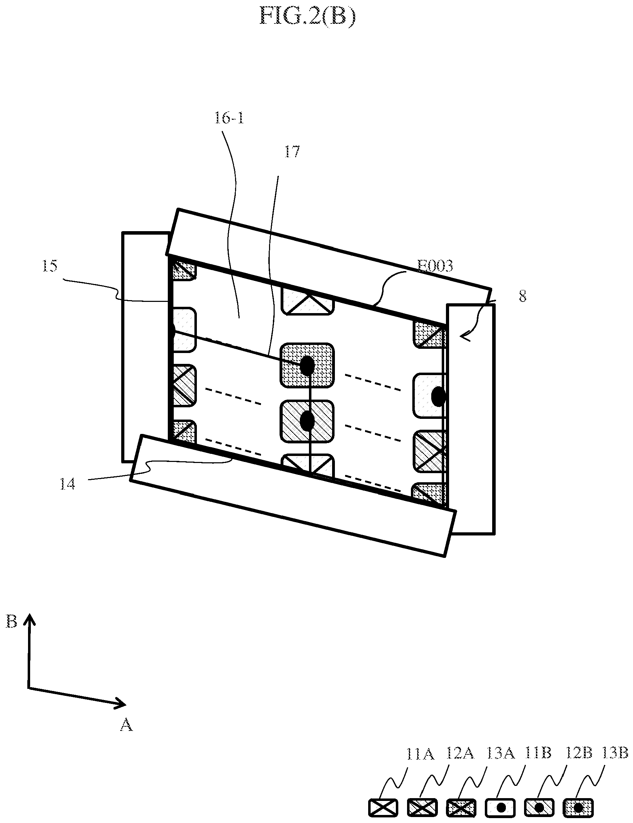

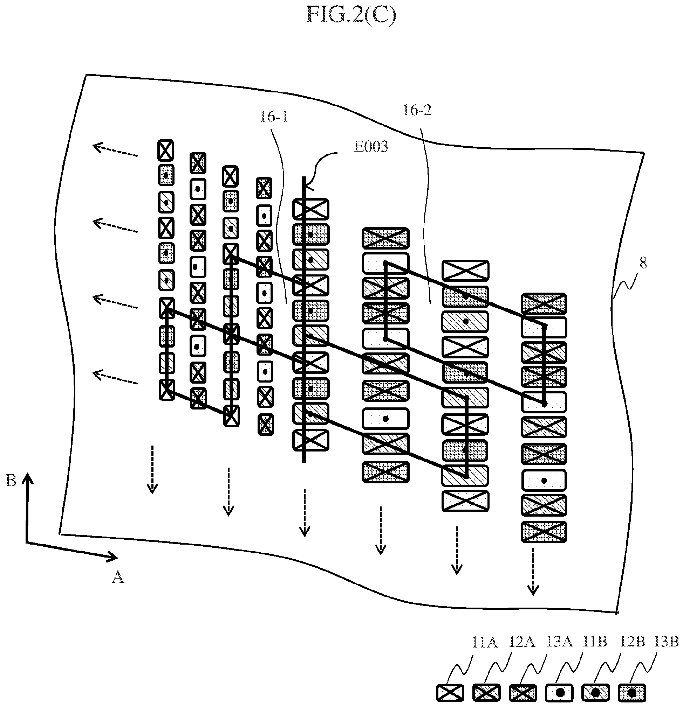

The concept drawing of the cell unit 8 shown in Figs. 2 (A), (B) and (C) express a single cell unit 8 for comprising the cell stack structure body 9 of Fig. 1. Fig. 2 indicates the arrangement of the openings 11, 12, 13 formed within the plane of the cell unit 8 of the present invention, which applies the regularity of Bravais lattice extended within 2 dimensions. The openings 11, 12, 13 indicated in Fig. 2 are respectively distinguished to the supply openings and the exhaust openings, as follows. The fuel fluid supply opening 11A, the cooling medium supply opening 12A, oxidizing fluid supply opening 13A, the fuel fluid supply opening 11B, the cooling medium supply opening 12B, and the oxidizing fluid supply opening 13B.

Here, Fig. 2 (A) shows an example configuring openings having the same basic unit periodically repeated. Fig. 2 (B) shows an example configuring openings with a single basic unit. Fig. 2 (C) shows an example of configuring openings having different basic units repeated periodically. As illustrated in Fig. 2, the basic unit 16 shows a minimum repeating unit of the pattern of various openings arranged in accordance with Bravais lattice in 2 dimensions, drawn by a vector A (reference sign 14 in Fig. 2) and a vector B (reference sign 15 in Fig. 2). The minimum power generating element 17 includes 6 types of the supply openings 11A, 12A, 13A and the exhaust openings 11B, 12B, 13B, which is the minimally required openings for generating power. In the following explanation, Fig.2 (A) is taken as an example.

The dotted arrows extended to four directions in Figs. 2 (A) and (C) indicate a portion where the openings 11, 12, 13 that continue to be arranged in repeat are abbreviated, due to the limitation in drawing capability. However, these dotted arrows do not imply that the repeated arrangement is extended infinitely. Also, a wave-shaped profile at 4 edges of the cell unit 8 of Figs. 2 (A) and (C) indicate the state of abbreviated portion being trimmed off. The reason for expressing "repeat" by the dotted line of Fig. 2 (A) is to realize the arrangement of openings 11, 12, 13 suitably by extending within 2 dimensions as required. Also, in Fig. 2, a symbol used to express the supply openings 11A, 12A, 13A for various fluids is "X". A symbol used to express the exhaust openings 11B, 12B, 13B for various fluids is black circle.

A broken line sloping to the right in Fig. 2 (A), which is drawn between the rows of the openings 11, 12, 13 of the cell unit 8 of the present invention, indicates the concept line of the channels formed between the supply openings 11A, 12A, 13A and the exhaust openings 11B, 12B, 13B for various fluids (that is, the supply and exhaust channel for fuel fluid 31, supply and exhaust channel for the cooling medium flow 32, supply and exhaust channel for the oxidizing fluid flow 33), respectively. However, these concept lines drawn in Fig. 2 are not necessarily intended to be an exact match with the actual channels 31, 32, 33. Further, the various fluids flow from the supply openings 11A, 12A, 13A to the corresponding exhaust openings 11B, 12B, 13B positioned closest to them. However, even if the exhaust openings 11B, 12B, 12B are present at the closest corresponding position, under no circumstances the fluid flows towards the non-corresponding exhaust openings 11B, 12B, 13B unguided by the supply and exhaust channels 31, 32, 33.

One of the characteristics in the way of thinking about the arrangement of openings 11, 12, 13 applying the regularity of Bravais lattice extended within 2 dimensions being a structural concept, as shown in Fig. 2 (A), is to arrange the openings 11, 12, 13 by using the basic unit 16 of a pattern arranged in accordance with Bravais lattice extended within 2 dimensions, as a repeating unit. Specifically, in terms of the number of openings 11, 12, 13 encompassed by the 4 edge lines of the basic unit 16 shaping an oblique lattice drawn by vector A (reference sign 14 of Fig. 2) and vector B (reference sign 15 of Fig. 2), four fuel fluid openings 11A, 11B which are touching the 4 edge lines of the basic unit 16 are all half-sized inside the 4 edge lines, and together these are counted as two (1/2 x 4 = 2). Two cooling medium openings 12A touching the 2 edge lines of the basic unit 16 are all half-sized inside the 4 edge lines, and together these are counted as one (1/2 x 2 = 1). There is one cooling medium opening 12B inside the area encompassed by the basic unit 16, untouched by the edge lines, and altogether these are counted as two (1/2 x 2 + 1 = 2). Four oxidizing fluid openings 13A at the 4 corners of the basic unit 16 are approximately quarter sized inside the 4 edge lines, and together these are counted as one (1/4 x 4 = 1). There is one oxidizing fluid opening 13 inside the area encompassed by the basic unit 16, untouched by the edge lines, and altogether these are counted as two (1/4 X 4 + 1 = 2). Henceforth, the basic unit 16 shaping an oblique lattice is comprised of six openings altogether including two fuel fluid openings 11, two cooling medium openings 12 and two oxidizing fluid openings 13. The meaning of "encompass" in this context is a portion of the openings surrounded by the 4 edge lines (vectors) of the basic unit 16 shaping an oblique lattice of Bravais lattice in 2 dimensions. Besides, the basic unit 16 with the pattern arranged in accordance with Bravais lattice in 2 dimensions is not particularly limited to the example of oblique lattice. The basic unit 16 may adopt others such as rectangular lattice, hexagonal lattice, square lattice, and centered rectangular lattice.

Naturally, the openings 11, 12, 13 that are minimally required to generate the power of the stacked-type fuel cell of the present invention includes the following 6 types: the fuel fluid supply opening 11A, the cooling medium supply opening 12A, oxidizing fluid supply opening 13A, the fuel fluid exhaust opening 11B, the cooling medium exhaust opening 12B, and the oxidizing fluid exhaust opening 13B. These openings are indicated in Fig. 2 (A) as the minimum power generating element 17.

According to Fig. 2 (A), the number of openings 11, 12, 13 for various fluids in the minimum power generating element 17 includes a quarter or more, or less than quarter of the fuel fluid supply opening 11A, a quarter or more, or less than quarter of the fuel fluid exhaust opening 11B, a half or more, or less than half of the cooling medium supply opening 12A, a half or more, or less than half of the cooling medium exhaust opening 12B, a quarter or more, or less than quarter of the oxidizing fluid supply opening 13A, and a quarter or more, or less than quarter of the oxidizing fluid exhaust opening 13B.

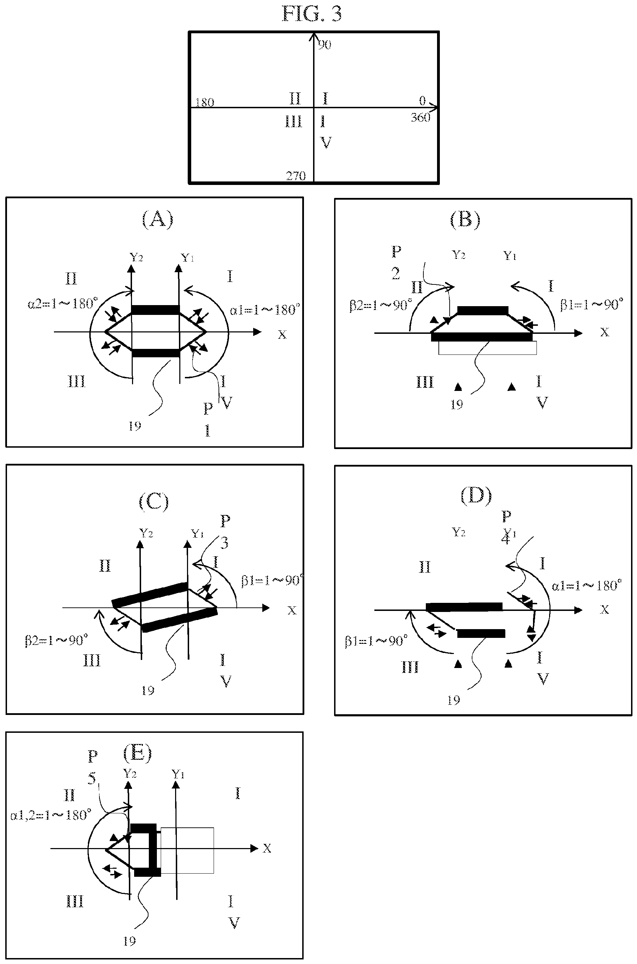

As shown in Fig. 3, according to the plane shapes of the ports of the openings 11, 12, 13 formed within the plane of the cell unit 8, the geometric shapes of the fuel fluid opening 11 and the oxidizing fluid opening 13 are similar. Also, Fig. 3 (A) illustrates the port of the all-directional type openings. Figs. 3 (B), (C) and (E) illustrate the ports of the half-directional type openings, and Fig. 3 (D) illustrates the port of the semi-directional type opening. What we mean by "port" mentioned in the present specification is that it points to a boundary between the outer rim of the opening where the fluid goes in or out and the first guide channel, and represented by reference signs P1 to P5 in Fig. 3. By applying the sealing material 19 to the entire outer periphery of the opening that contacts a certain functional layer of the cell unit 8, the supply flow from the opening into this functional layer, or supply from the opening into this functional layer and the adjacent layers, or the exhaust flow from this functional layer out of the opening, or exhaust flow from this functional layer and the adjacent layers out of the opening, are completely blocked. On the other hand, by applying the sealing material 19 to a part of the outer periphery of the opening that contacts a certain functional layer of the cell unit 8, the supply flow from the opening into this functional layer, the supply from the opening into this functional layer and the adjacent layers, the exhaust flow from this functional layer out of the opening, or the exhaust flow from this functional layer to the adjacent layers out of the opening, are created. That is, it can be said that the flow of various fluids in and out of the cell unit 8 are controlled by the sealing material 19.

The shape of the openings can be classified according to the plane shapes of the openings 11, 12, 13 and the portion of applying the sealing material 19. In Fig. 3, the ports of the 5 types of openings are divided into the first quadrant, the second quadrant, the third quadrant and the fourth quadrant, by using two Y-axes and one x-axis. For all openings (A) through (E) shown in Fig. 3, the rotation angle of the first quadrant is 0 to 90 degrees. The rotation angle of the second quadrant is 90 to 180 degrees. The rotation angle of the third quadrant is 180 to 270 degrees. The rotation angle of the fourth quadrant is 270 to 360 degrees. The sealing material 19 is applied at a portion between y1-axis and the y2-axis where the fluid flow is blocked so this portion does not belong to any one of the above-mentioned quadrants. According to Fig. 3, the ports of the openings in each quadrant have the divergent angles (alpha 1 and beta 1) and the convergent angles (alpha 2 and beta 2) as follows. The divergent angle alpha 1 is 1 to 180 degrees, the divergent angle beta 1 is 1 to 90 degrees, the convergent angle alpha 2 is 1 to 180 degrees, the convergent angle beta 2 is 1 to 90 degrees.

Each drawing of Fig. 3 will be explained in detail. According to the example of the all-directional type opening of Fig. 3 (A), its port P1 is positioned at all of the first quadrant, the second quadrant, the third quadrant and the fourth quadrant, and a port or more than 1 port is/are positioned at each quadrant entirely or partially. The position for applying the sealing material 19 is located between Y1-axis and Y2-axis which is the non-active zone not belonging to any quadrant. In this example, the number of ports is 4. The port of the half-directional type opening is positioned at any two quadrants selected from the four quadrants including the first quadrant, second quadrant, third quadrant and fourth quadrant entirely or partially. According to the example of the half-directional type opening of Fig. 3 (B), a port P2 of the opening are positioned entirely or partially within the first quadrant and the second quadrant. The position for applying the sealing material 19 are located between Y1-axis and Y2-axis which is the non-active zone not belonging to any quadrant and at the third quadrant and the fourth quadrant entirely. In this example, the number of ports is 2. This half-directional type opening has an inverted type shape. According to another example of the half-directional type opening of Fig. 3 (C), its port P3 is positioned within the first quadrant and the third quadrant entirely or partially. The positions for applying the sealing material 19 are located between Y1-axis and Y2-axis which is the non-active zone not belonging to any quadrant and at the second quadrant and the fourth quadrant entirely. In this example, the number of ports is 2. This half-directional type opening has an inverted type shape. The port of the semi-directional type opening is positioned entirely or partially at any three quadrants selected from the four quadrants including the first quadrant, second quadrant, third quadrant and fourth quadrant. According to the example of the semi-directional type opening of Fig. 3 (D), its ports P4 are positioned entirely or partially at the first quadrant, the third quadrant and the fourth quadrant. The positions of applying the sealing material 19 are located between Y1-axis and Y2-axis which is the non-active zone not belonging to any quadrant and the second quadrant entirely. In this example, the number of ports is 3. d the fourth quadrant entirely. In this example, the number of ports is 2. This semi-directional type opening has an inverted type shape. According to another example of the half-directional type opening of Fig. 3 (E), its ports P5 are positioned entirely or partially at the second quadrant and the third quadrant. The positions of applying sealing material 19 are located between Y1-axis and Y2-axis which is the non-active zone not belonging to any quadrant and the first quadrant and the fourth quadrant entirely. In this example, the number of ports is 2. This half-directional type opening has an inverted type shape.

Also, three types of opening shapes are illustrated in Fig. 3, however, the present invention is not limited to these shapes.

### First Embodiment

The embodiments for carrying out of the present invention will be described with reference to the attached drawings. The same reference signs are designated to the equivalent or corresponding portions, and their duplicated explanation is simplified or omitted.

Hereinbelow, the stacked-type fuel cell for the first embodiment of the present invention will be described by using Figs. 1, 4 to 13. Further, the present invention is not limited only to the first embodiment.

The cell unit 8 according to the embodiments of the present invention comprises the following structural components: the electrolyte membrane 1, the catalyst layers 2, 3, the gas diffusion layers, 4, 5, and the separators 6, 7. In the first embodiment of the present invention, these structural components and the stacked-type fuel cell incorporating the elements related to these structural components will be described.

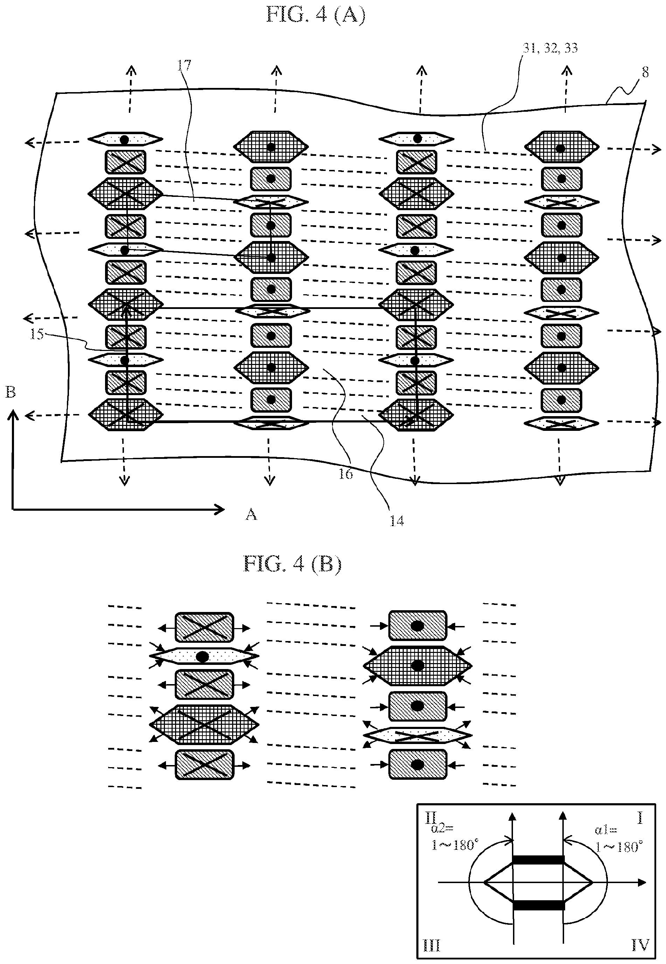

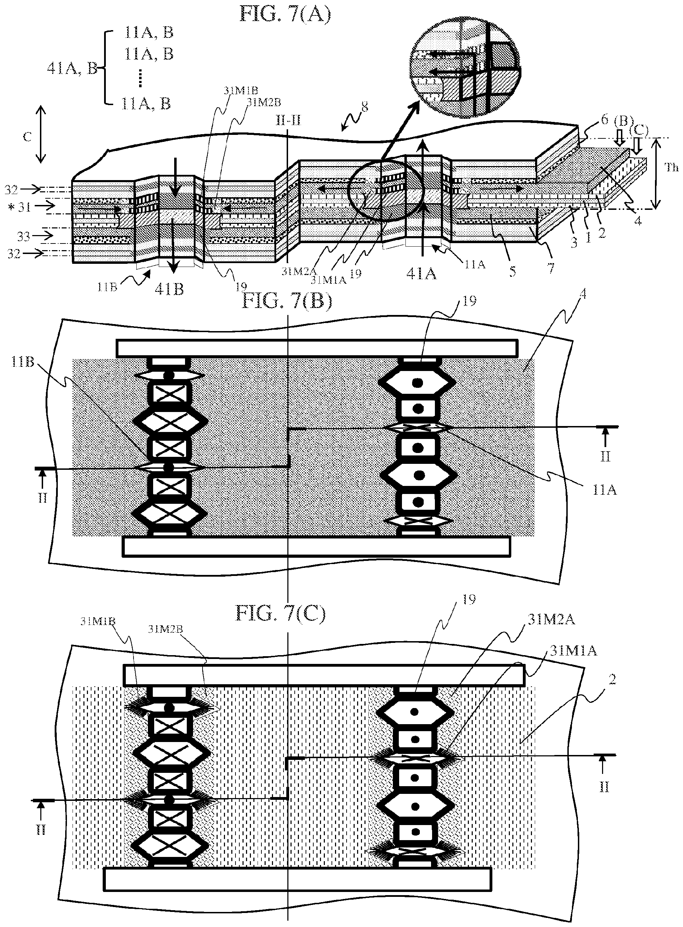

The all-directional type openings 11, 12, 13 shown in Fig. 4 are formed in the plane of the cell unit 8 for forming the internal common manifolds 41, 42, 43. As shown in Figs. 7 to 11, the all-directional type openings 11, 12, 13 for forming the internal common manifolds 41, 42, 43 are formed in the anode side gas diffusion layer 4, the cathode side gas diffusion layer 5, the anode side separator 6 and the cathode side separator 7. As a result of stacking a plurality of cell units 8 where the arrangement of all-directional type openings 11, 12, 13 are extended, the internal common manifolds 41, 42, 43 are disposed internally at cell stack structure body 9.

The cell unit 8 is laminated by 7 functional layers in the following order, namely: an anode side separator 6, an anode side gas diffusion layer 4, an anode side catalyst layer 2, an electrolyte membrane 1, a cathode side catalyst layer 3, a cathode side gas diffusion sheet 5, and a cathode side separator 7. It is preferable to form a thin cell unit 8 much thinner than the fuel battery cells that are commonly being used today. Referring to Figs . 7 to 11, a periodic thickness of cell stack structure body according to the embodiments of the present invention, that is, a distance (Th) of the two adjacent cell units between their above surfaces (or their below surfaces), wherein the thickness is preferably Th = 0.9 mm or more and 1.2 mm or less, more preferably 0.5 mm or more and 0.9 mm or less. Most preferably, the thickness Th = 0.1 mm or more and 1.2 mm or less. The above-mentioned thickness includes a gap of cooling medium channel 32 and the thickness of cell unit 8. One can see that the maximum thickness of the cell unit 8 does not exceed 1.2 mm. Normally, thick cell unit thickness can suppress the manufacturing cost, however, the cell energy density becomes low. On the other hand, thin cell unit thickness result in high manufacturing cost, however, the cell energy density can be elevated. An appropriate thickness range can be selected to balance out the manufacturing cost and the cell output density.

The structural components of the cell unit 8 and the associated elements pertaining to the embodiments of the present invention can be formed by using the known base materials. Also, the structural components of the cell unit 8 and their associated elements can be manufactured by using the conventional techniques. The present invention does not particularly restrict the known base materials and the conventional techniques. Hereinafter, each structural component will be explained briefly.

### [Electrolyte membrane]

In general, the electrolyte membrane 1 serving as the electricity generating unit is roughly classified into fluorine-based polymer electrolyte membranes and hydrocarbon-based polymer electrolyte membranes. Also, both the fluorine-based and hydrocarbon-based polymer electrolyte membranes can preferably be used. Also, an electrolyte membrane can be used solely, or 2 or more types can be combined for use. To name the main functional features desired of the electrolyte membrane 1, it should have a good proton conductivity, a favorable impermeability of reaction gases, a high electron insulation property and a high tolerance to physical and chemical properties.

### [Catalyst layer]

An anode fuel cell reaction and a cathode fuel cell reaction occur on the anode side catalyst layer 2 and the cathode side catalyst layer 3 arranged at both sides of the electrolyte membrane 1. Dissociation of hydrogen into proton and electron (hydrogen oxidation reaction) is promoted at the anode side catalyst layer 2. Reactions for forming water from the proton, the electron and oxygen (oxygen reduction reaction) are promoted at the cathode side catalyst layer 3. The catalyst layer is comprised of catalyst component such as catalyst carrier carbon black and platinum. The anode side catalyst layer 2 and the cathode side catalyst layer 3 includes, as a catalyst, a platinum or an alloy including the platinum and other metals, for example.

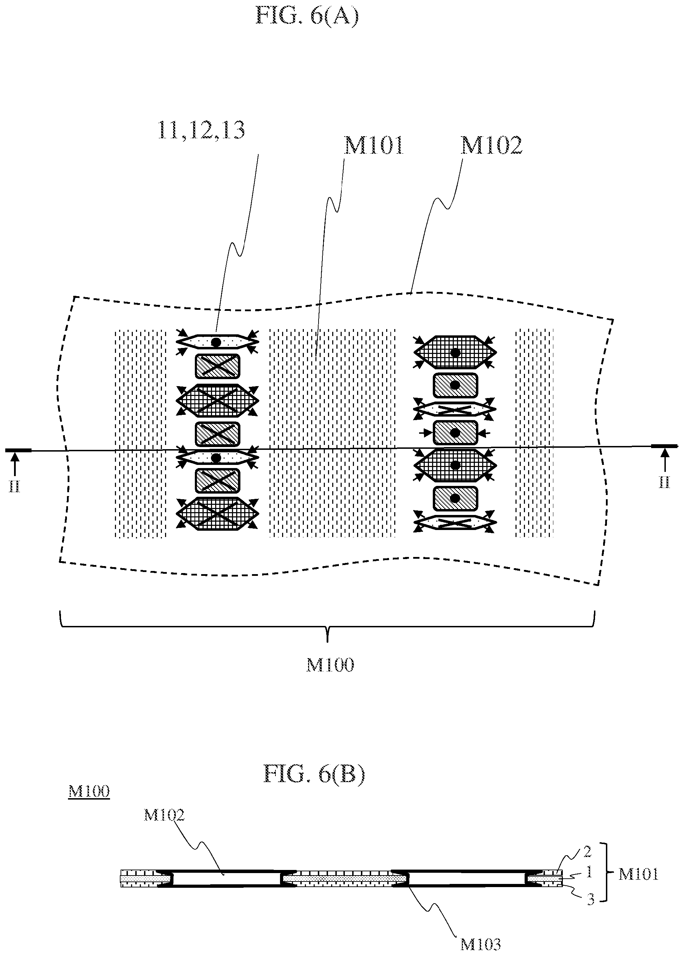

Further, referring to Fig. 6, a CCM membrane M101 is a catalyst coated membrane that comprises the electrolyte membrane 1, and the anode side catalyst layer 2 and the cathode side catalyst layer 3 positioned at both sides of the catalyst membrane 1. A CCM sheet M100 mentioned in the present invention comprises the CCM membrane M101, a CCM holder film M102 and a fitting structure M103.

### [Gas diffusion layer]

The anode side gas diffusion layer 4 is positioned between the CCM sheet M100 and the anode side separator 6. The cathode side gas diffusion layer 5 is positioned between the CCM sheet M100 and the cathode side separator 7. The gas diffusion layer 4, 5 is a functional layer for efficiently guiding the hydrogen and air required in the chemical reaction along the plane direction of the electrolyte membrane 1. That is, as shown in various drawings, a channel is provided to enable the fuel fluid to be diffused in the anode side gas diffusion layer 4, and a channel is provided to enable the oxidizing fluid to be diffused in the cathode side gas diffusion layer 5. The anode side gas diffusion layer 4 and the cathode side gas diffusion layer 5, for example, are preferably made of carbon cloth formed by carbon fiber string, alternatively, a carbon paper or carbon felted cloth.

### [Separator]

Separator is a metallic sheet for separating the cell units 8 serving as a power generating body. The electrolyte membrane 1 required for generating power, the anode side catalyst layer 2, the cathode side catalyst layer 3, the anode side gas diffusion layer 4, the cathode side gas diffusion layer 5 are accommodated between a pair of separators 6, 7. On the faces of the anode side separator 6 and the cathode side separator 7 facing the gas diffusion layers 4 and 5, the first guide channel, the second guide channel, and the main channel are formed, respectively, where the reaction gases flow. On the opposite face of the anode side separator 6 and the cathode side separator 7, the channel for circulating the cooling medium are formed, respectively.

The separator 6, 7 is made of a sheet having a fluid blocking property, the chemical stability, and the conductivity. As separators, for example, various metal sheets, metal foils or metal films such as aluminum, copper, and stainless can be used. Such metal sheets, metal foils or metal films are preferably made from conductive material having high resistance to corrosion and mechanical strength. Further, the metal sheets, metal foils or metal foils are preferably coated, and their surfaces are processed physically and chemically for increasing even more the conductivity, the resistance to corrosion, and the mechanical strength.

Further, the structural component embodied in the present invention are not limited to the above-described configuration, and they can be modified as appropriate.

Hereinbelow, the characteristics of the port of the all-directional type opening and its arrangement layout in accordance with the first embodiment of the present invention will be described by referring to Figs. 3 and 4.

Fig. 4 illustrates the arrangement of the all-directional type openings 11, 12, 13 formed in the plane of the cell unit 8 of the present invention that has applied the regularity of Bravais lattice extended within 2 dimensions. The all-directional type openings 11, 12, 13 shown in Fig. 4 are respectively distinguished to the supply openings and the exhaust openings for various fluids, as follows. These include a fuel fluid supply opening 11A, a cooling medium supply opening 12A, an oxidizing fluid supply opening 13A, a fuel fluid exhaust opening 11B, a cooling medium exhaust opening 12B, and an oxidizing fluid exhaust opening 13B. In Fig. 4, the all-directional type is proposed as one example of the variety of opening shapes, wherein the all-directional type opening can be set to have a divergent angle to allow flow-out. In the example shown in Fig. 4, the arrangement of the port of the all-directional type openings 11, 12, 13 is designed so that various fluids flowing out via the ports positioned at the first quadrant and the fourth quadrant or the second quadrant and the third quadrant flow out in all direction having the divergent angle of more than 1 degree and less than 180 degrees. Also, the ports positioned at the above-mentioned quadrants have been designed so that various fluids flow in at all direction having the convergent angle of more than 1 degree and less than 180 degrees.

Since the various fluid flows are invisible to human eyes, therefore, we have attempted to visualize the flow by using the arrows. The arrows drawn towards the ports of the all-directional type openings positioned at the first quadrant, the second quadrant, the third quadrant and the fourth quadrant specify the flowing-in direction of various fluids to the all-directional type openings. The arrows drawn to radiate out from the ports of all-directional type openings positioned at the first quadrant, the second quadrant, the third quadrant and the fourth quadrant specify the flowing-out direction of various fluids from the all-directional type openings. In Fig. 4, the shapes of the all-directional type opening include a rectangle for the cooling medium opening 12 and hexagons having different areas for the fuel fluid opening 11 and the oxidizing fluid opening 13 (that is, the area of the oxidizing fluid opening 13 is greater than the area of the fuel fluid opening 11) . Note that the shape of the all-directional type opening of Fig. 3 (A) is symmetrical thus it has no inverted shape.

The basic unit 16 expresses a minimum repeating unit of a pattern in which the openings are arranged in accordance with Bravais lattice in 2 dimensions, which is drawn by a vector A (reference sign 14 of Fig. 4) and a vector B (reference sign 15 of Fig. 4) . The basic unit 16 is a repeating unit for extending the 2-dimensional arrangement of the all-directional type openings (the extension within 2 dimensions in this context is adopted to the plane of the cell unit 8 positioned on the plane comprised of A-axis and B-axis of Figs. 2 and 4). The arrangement pattern of the all-directional type opening is a pattern acquired by moving the basic unit 16 repeatedly in parallel, along the direction A and/or its reverse direction of the vector A (reference sign 14 of Fig. 4) and/or along the direction B and/or its reverse direction of the vector B (reference sign 15 of Fig. 4). The arrangement of the all-directional type opening is arranged periodically or semi-periodically in accordance with this pattern. The minimum power generating element is a minimum structural element 17 having the all-directional type openings types that are required to generate power, wherein the minimum structural element 17 includes 6 types: namely; supply openings for various fluids 11A, 12A, 13A and the exhaust openings for various fluids 11B, 12B, 13B, which are the minimal requirement for generating power.

The dotted arrows extended to four directions in Fig. 4 indicate a portion where the all-directional type openings 11, 12, 13 that continue to be arranged in repeat are abbreviated, due to the limitation in drawing capability. However, these dotted arrows do not imply that the repeated arrangement is extended infinitely. Also, a wave-shaped profile at 4 edges of the cell unit 8 of Fig. 4 indicates the state of abbreviated portion being trimmed off. The reason for expressing "repeat" by the dotted line of Fig. 4 is to realize the arrangement of the all-directional type openings 11, 12, 13 suitably by extending within 2 dimensions as required. Also, in Fig. 4, a symbol used to express the supply openings 11A, 12A, 13A for various fluids is "X". A symbol used to express the exhaust openings 11B, 12B, 13B for various fluids is black circle.

A broken line sloping to the right in Fig. 4, which is drawn between the rows of the all-directional type openings 11, 12, 13 of the cell unit 8 of the present invention, indicates the concept line of the channels formed between the supply openings 11A, 12A, 13A and the exhaust openings 11B, 12B, 13B for various fluids (that is, the fuel fluid supply and exhaust channel 31, the cooling medium supply and exhaust channel 32, and the oxidizing fluid supply and exhaust channel 33), respectively. However, these concept lines drawn in Fig. 4 are not necessarily intended to be an exact match with the actual channels 31, 32, 33. Further, the various fluids flow from the supply openings 11A, 12A, 13A to the exhaust openings 11B, 12B, 13B at the corresponding position closest to them. However, even if the exhaust openings 11B, 12B, 12B are present at the closest corresponding position, under no circumstances the fluid flows towards the non-corresponding exhaust openings 11B, 12B, 13B unguided by the supply and exhaust channels 31, 32, 33.

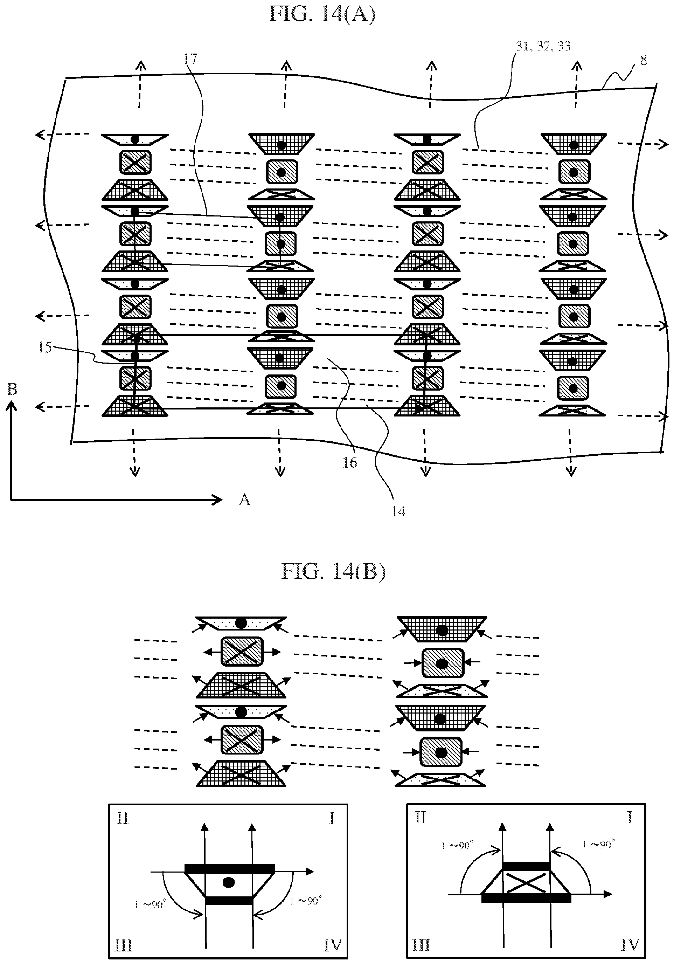

One of the characteristics in the way of thinking about the arrangement of the all-directional type openings 11, 12, 13 according to the first embodiment of the present invention applying the regularity of Bravais lattice extended within 2 dimensions, as shown in Fig. 4, is to arrange the all-directional type openings 11, 12, 13 by using the basic unit 16 of a pattern arranged in accordance with the Bravais lattice extended within 2 dimensions, as a minimum repeating unit. As one example, in terms of the areas of the all-directional type openings 11, 12, 13 encompassed by the 4 edge lines of the basic unit 16 shaping an oblique lattice drawn by a vector A (reference sign 14 of Fig. 4) and a vector B (reference sign 15 of Fig. 14), the four fuel fluid openings 11A, 11B touching the 4 edge lines of the basic unit 16 are all one and half in size inside the 4 edge lines, and altogether these are counted as two openings (1/2 x 4 = 2). Among them, four cooling medium openings 12A touching the 2 edge lines which are all half in size inside, and together these are counted as two (1/2 x 4 = 2). There is two more cooling medium opening 12B inside the area surrounded by the basic unit 16, untouched by the edge lines. Altogether these are counted as four openings (1/2 x 4 + 2 = 4). Four oxidizing fluid openings 13A at the 4 corners of the basic unit 16 are all 1/4 in size inside the basic unit 16, and together these are counted as one opening (1/4 X 4 = 1). There is one more oxidizing fluid opening 13B inside the area encompassed by the basic unit 16, untouched by the edge lines. These are totally counted as eight openings. Henceforth, the basic unit 16 shaping an oblique lattice is comprised of eight supply openings and exhaust opening altogether (two fuel fluid openings 11, four cooling medium openings 12, and two oxidizing fluid openings 13), including the openings 12B, 13B encompassed but not touched by the edge lines. The meaning of "encompass" in this context is a portion of the all-directional type openings surrounded by the 4 edge lines (vectors) of the basic unit 16 with Bravais lattice in 2 dimensions shaping an oblique lattice. Also, the basic unit 16 of Bravais lattice in 2 dimensions is not particularly limited to the example of oblique lattice. The basic unit 16 may adopt others such as rectangular lattice, hexagonal lattice, square lattice, and centered rectangular lattice.

Naturally, the all-directional type openings 11, 12, 13 that are minimally required for generating the power of the stacked-type fuel cell of the first embodiment of the present invention include the following 6 types: the fuel fluid supply opening 11A, the cooling medium supply opening 12A, oxidizing fluid supply opening 13A, the fuel fluid supply opening 11B, the cooling medium supply opening 12B, and the oxidizing fluid supply opening 13B. These openings are indicated in Fig. 4 as the minimum power generating element 17. As the point of necessity in designing the layout arrangement of the all-directional type openings 11, 12, 13 for the first embodiment of the present invention, in order to acquire the stacked fuel cell having a high output density and a high capacity, it is preferable to provide the minimally required 6 types of the all-directional type openings 11, 12, 13 for spreading out that the reaction gases most efficiently to the power generating areas of the anode side catalyst layer 2 and the cathode side catalyst layer 3 of the cell unit 8 and for efficiently cooling the heat. Also, at least, the type and the area of the all-directional type openings 11, 12, 13 designed by using the basic unit 16 should meet the type and the area of the all-directional type openings 11, 12, 13 of the minimum power generating element 17. Regarding the type and the area of the all-directional type openings 11, 12, 13, the basic unit 16 and the minimum power generating element 17 may be equal, and the basic unit 16 may be greater than the minimum power generating element 17, however, the basic unit 16 cannot be less than the minimum power generating element 17.

According to Fig. 4, the area of the all-directional type openings 11, 12, 13 for various fluids in the minimum power generating element 17 includes a quarter area of the fuel fluid supply opening 11A, a quarter area of the fuel fluid exhaust opening 11B, a half area of the cooling medium supply opening 12A, a half area of the cooling medium exhaust opening 12B, a quarter area of the oxidizing fluid supply opening 13A, and a quarter area of the oxidizing fluid exhaust opening 13B.

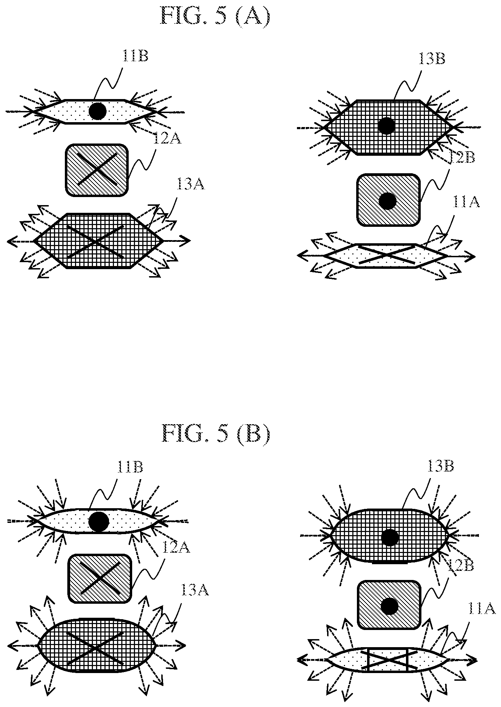

Hereinbelow, the flow of various fluids (reaction gases) in and out from the ports of the all-directional type openings will be described by using Fig. 5. However, the present invention is not just limited to this shape (the all-directional type).

According to the example which shows the flow related to the all-directional type opening in Fig. 5, the port shape is designed so that the divergent angle of the reaction gases (the fuel fluid and the oxidizing fluid) flowing out of the port positioned at the first quadrant and the fourth quadrant or the second quadrant and the third quadrant of each opening to be more than 1 degree and less than 180 degrees. Since the flows of various reaction gases are not visible to human eyes, therefore, the flows are visualized by using the arrows in Fig. 5. The arrows drawn towards the port of the all-directional type opening indicate a flow line of the reaction gases from the first guide channels to the all-directional type exhaust openings 11B, 13B, via the ports . The arrows drawn to radially release (circular arc like) from the ports of the all-directional type opening indicate the flow line of the reaction gases from the all-directional type supply opening 11A, 13A to the first guide channels, via the ports. Fig. 5 illustrates the situation of various reaction gases flowing in and out from the ports present at the right and left positions of the all-directional type opening for fuel fluid 11 and the all-directional type opening for oxidizing fluid 13 (that is, from the first quadrant to the fourth quadrant). Fig. 5 (A) illustrates the hexagonal port shapes having different areas for the all-directional type openings for fuel fluid 11 and the all-directional type openings for oxidizing fluid 13. Fig. 5 (B) illustrates the similar port shapes with rounded edges. Further, the port shape according to the present invention is implementable at any one of the following shapes including polygons, deformed polygons, non-circular, circular and their elongated shapes, or can be their combinations. Also, as the port shape of the first embodiment of the present invention needs not be limited to the sole structure of the all-directional type opening. Other port shapes which will be described later in the present specification (the half-directional type and the semi-directional type etc.) can be formed on the cell unit 8 at various combinations.

As described above, the channel design is optimized by changing the port shapes of the all-directional type openings 11, 12, 13 according to the first embodiment of the present invention, therefore, the power generating amount of CCM can be maximized.

Hereinbelow, the CCM sheet M100 comprising a part of the cell unit 8 for the embodiments of the present invention will be described in detail. The CCM is an abbreviation for "catalyst coated membrane". The CCM is also known as a 3-layered membrane electrode assembly. The CCM sheet M100 is a generic term for a CCM membrane M101 comprised of the electrolyte membrane 1, the anode side catalyst layer 2 and the cathode side catalyst layer 3, a CCM holder film M102 for holding the CCM membrane M101, and the opening 11, 12, 13 perforated through them, and so forth.

Fig. 6 (A) is a schematic plan view showing the structure of the CCM sheet M100 including the CCM membrane M101, the CCM holder film M102 for holding it, and the openings 11, 12, 13, according to the embodiments of the present invention. Fig. 6 (B) is a cross-sectional view of the CCM sheet M100 along the line II-II of Fig. 6 (A).

The CCM membrane M101 is placed at the both sides of the openings 11, 12, 13 shown in Fig. 6. Fig. 6 shows the all-directional case for embodiments of the present invention. The same can be applied to the half-directional case mentioned in the second embodiment and the semi-directional case mentioned in the other modifications which will be described later. As shown in the cross-sectional view of Fig. 6 (B), the fitting structure M103 is provided to the CCM holder film M102 for engaging a plurality of CCM membranes M101. Retention method is adopted for holding and engaging the CCM membranes M101 in position at both edges with the fitting structure M103. As shown in Fig. 6, the openings 11, 12, 13 are perforated to the base of the CCM holder film M102. Further, the first guide channel and the second guide channel are formed at the vicinity of the openings 11, 12, 13. The CCM holder film M102 at least has the sealer material at the side wall of the openings 11, 12, 13, for preventing flow-in of fuel fluid, cooling medium and oxidizing fluid from the openings 11, 12, 13 into the CCM membrane 101, along the extended direction of the cell unit 8. Typically, the support membrane M102 wholly can be made from the sealer material. If the CCM holder film M102 has at least the sealer material at the side wall of the openings 11, 12, 13, the same material as the sealing material 19 can be selected as the sealer material of this layer, or different material can be selected. As shown in Fig. 6, the openings 11, 12, 13 are perforated to the base of the CCM holder film M102. The CCM membranes M101 are sandwiched by the fitting structure M103 located at the edges of the CCM holder film M102. The CCM sheet M100 is configured accordingly. At the anode side, the fuel fluid, water and vapor are supplied from the port of the fuel fluid supply opening 11A, and they flow to the CCM membranes M101 being sandwiched at both sides, and the hydrogen ion acquired from the catalyst reaction permeates through the CCM membrane M101, and the unreacted fuel fluid, water and vapor are exhausted from the port of the fuel fluid exhaust opening 11B. At the cathode side, the oxidizing fluid, water and vapor are supplied from the port of the oxidizing fluid supply opening 13A, and the oxidizing fluid reacts with the hydrogen ion that permeated through the CCM membrane M101 to form water, and the water formed by this reaction is exhausted from the port of the oxidizing fluid exhaust opening 13B together with unreacted oxidizing fluid, water and vapor.

By employing the design of alternately sandwiching the openings 11, 12, 13 and the CCM membrane M101, the CCM membrane M101 cut into small pieces can be utilized without wasting a single piece. The expensive CCM membrane M101 can be utilized effectively, and there is an advantage of improving the productivity.

Next, the channel formation related to the gas diffusion layers 4, 5 and the sealing material 19 will be described with reference to Figs. 7 to 11, and 16 to 20. In these drawings, for the ease of viewing and to meet the convenience of explanation, the drawings are not drawn to a scale accurately, and some thin structural components are displayed as having a greater thickness than the actual thickness. In these drawings, the same reference sign is used for the same component throughout.

In the embodiments of the present invention, the portions for applying the sealing material 19 are the peripheries of the openings 11, 12, 13. There are ports at the peripheries of the openings 11, 13, serving as the portions of flowing-in and flowing-out of the reaction gases where the sealing material 19 is not applied. These ports are directly connected to the first guide channels 31M1, 33M1. The first guide channels 31M1, 33M1 are expressed by a minute beard-like line.

According to the embodiments of the present invention, the sealing material 19 is appropriately formed within the cell unit 8 and between the cell units 8, thereby forming the connection portions between the cooling medium supply and exhaust channel 32 formed between the two adjacent cell units 8 and the openings for various fluids 11, 12, 13, and, the connection portions between the supply and exhaust channel for fuel fluid 31 and the openings for various fluids 11, 12, 13, and, the connection portions between the supply and exhaust channel for oxidizing fluid 33 and the openings for various fluids 11, 12, 13. In this way, the sealing material 19 serves a role of guiding the supply flow and the exhaust flow of the reaction gases and the cooling medium in and out of the cell unit 8.

The sealing material 19 that is usable in the present invention is not particularly restricted, however, a rubber, adhesive tape, rubber seal, sealant adhesive agent and the like can be used, that can be applied by screen printing to the flat portion. The sealing material 19 is applied to the outer rim of the supply opening and the exhaust opening mentioned above. For the portion that require gas sealing, the sealing material 19 needs be sealed completely so the gas will not leak. Further, it is preferable to acquire the sealing structure having a stable chemical and thermal properties and an excellent strength and durability.

At first, the anode side channel of the cell unit 8 and the peripheral structure of the all-directional type openings 11, 12, 13 for the first embodiment of the present invention will be described by referring to Fig. 7.

Fig. 7 is a drawing for explaining the anode side channel of the CCM sheet M100 for the first embodiment of the present invention. Fig. 7 (A) is a 3-dimensional cross-section view of the cell unit 8 along II-II of Figs. 7 (B) and (C). Fig. 7 (B) is a plan view of the anode side gas diffusion layer 4 that appears when removing the anode side separator 6. Fig. 7 (C) is a plan view of the CCM sheet M100 that appears when removing the anode side gas diffusion layer 4. A vertical both-headed arrow C located at the upper left of Fig. 7 (A) shows the stacking direction C of the cell units 8. The position relationship of the supply and exhaust channels 31, 32, 33 is illustrated on the right-hand side of Fig. 7 (A) showing a single cell unit 8. The channel with asterisk "*" attached, the channel 31 in the example of Fig. 7 (A), is the active channel. The other channel is non-active channel, however, when the fuel cell is in fact operating, one having ordinary skill in the art can understand that other channels are in operation at the same time. The horizontal arrows drawn within the active channel 31 show the flow direction of the fuel fluid channel 31. The upward vertical arrow shows the flow within the fuel fluid supply internal common manifold 41A, and the downward vertical arrow shows the flow within the fuel fluid exhaust internal common manifold 41B.

According to the first embodiment or the present invention, the flows of various fluids are controlled by the sealing material 19 at the peripheries of the all-directional type openings 11, 12, 13. Specifically, as is apparent from the plan view of the anode side gas diffusion layer 4 of Fig. 7 (B), for allowing the hydrogen ion to permeate through the CCM membrane M101, the sealing material 19 is applied to the supply and exhaust openings for cooling medium 12A and 12B and the supply and exhaust openings for oxidizing fluid 13A and 13B so that the cooling medium and the oxidizing fluid will not flow into the anode side gas diffusion layer 4. The sealing material 19 is not applied to the port of the supply and exhaust openings for fuel fluid 11A and 11B so that the fuel fluid will flow into the anode side gas diffusion layer 4.

As is apparent from the plan view of the CCM sheet M100 of Fig. 7 (C), the first guide channels 31M1A, 31M1B and the second guide channels 31M2A, 31M2B are provided at the vicinity of the fuel fluid supply and exhaust openings 11A and 11B at the CCM sheet M100 side facing the anode side gas diffusion layer 4. The sealing material 19 is provided at the peripheries of the cooling medium opening 12 and the oxidizing fluid opening 13 that are not relevant. The sealing material 19 may or may not be unified for each all-directional type openings 12, 13.

The 3-dimensional cross-sectional view of Fig. 7 (A) illustrates the sealing positions of the fuel fluid supply opening 11A and the exhaust opening 11B. The sealing material 19 is not applied to the anode side gas diffusion layer 4 and the ports for the fuel fluid openings 11A and 11B connected to the first guide channel 31M1A, 31M1B adjacent to the anode side gas diffusion layer 4, thereby securing the fuel fluid flow into the channel 31. At the same time, the contacting positions of the fuel fluid openings 11A and 11B with the cathode side gas diffusion layer 5 and the oxidizing fluid channel 33, and the positions of the fuel fluid openings 11A and 11B contacting the cooling medium channel 32 between the anode side separator 6 and its adjacent cathode side separator 7 are all blocked by the sealing material 19. Therefore, the fuel fluid will not flow into the irrelevant channels, that is, the channels 32 and 33.

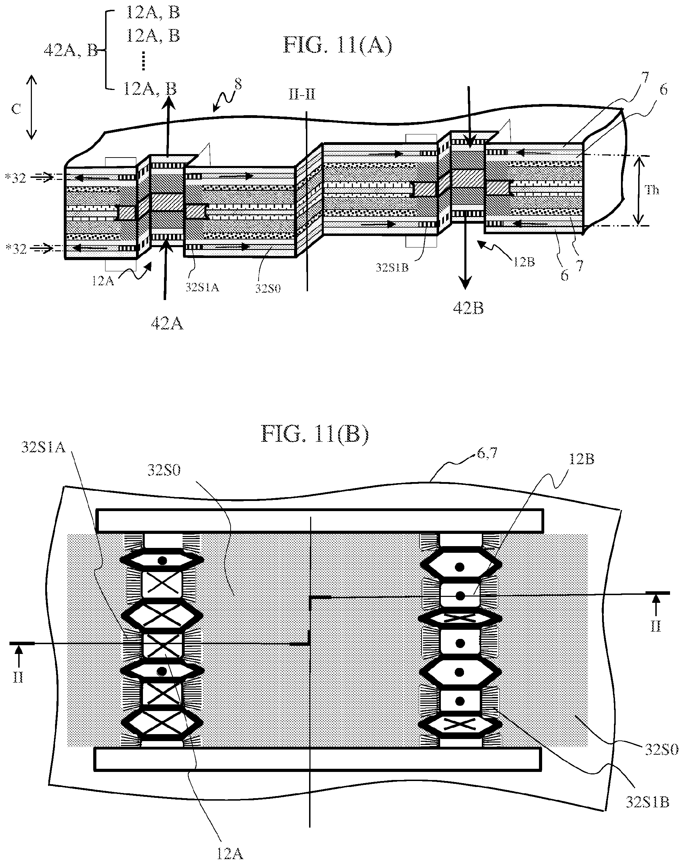

Also, as is apparent from the enlarged view of Fig. 7 (A), the fuel fluid flow supplied from the fuel fluid supply internal common manifold 41A is diverged to two flows at the fuel fluid supply opening 11A. Among the two flows, a flow indicated by the upper side arrow shows the flows of the first guide channel 31S1A, the second guide channel 31S2A, and the main channel 31S0 provided to the anode side separator 6 configuring one component the cell unit 8 which will be described later in Fig. 11. The flow indicated by the lower side arrow shows the flows of the first guide channel 31M1A and the second guide channel 31M2A provided to the CCM sheet M100 facing the anode side gas diffusion layer 4. Henceforth, the active fuel fluid channel 31 comprises these two channels. One channel is a channel provided at the anode side separator 6 comprising the first guide channel 31S1A, the second guide channel 31S2A and the main channel 31S0. Another channel is a channel provided at the CCM sheet M100 comprising the first guide channel 31M1A and the second guide channel 31M2A. Likewise, the two unreacted fuel fluid flows diverged as described above is converged at the fuel fluid exhaust opening 11B and exhausted out to the fuel fluid exhaust internal common manifold 41B.

The fuel fluid flow route 31 flows in the following order. That is, the supply routes of the fuel fluid are: 1) the route of the anode side separator 6 side involving the fuel fluid supply opening 11A, the first guide channel 31S1A, the second guide channel 31S2A, the main channel 31S0, and the anode side gas diffusion layer 4; and 2) the route of CCM sheet M100 side involving the fuel fluid supply opening 11A, the first guide channel 31M1A, the second guide channel 31M2A and the anode side gas diffusion layer 4. A portion of the fuel fluid supplied accordingly diffuses through the anode side gas diffusion layer 4, the hydrogen oxidation reaction is promoted at the anode side catalyst layer 2, and the hydrogen ion permeates the CCM membrane M101. On the other hand, the exhaust routes of the unreacted fuel fluid are: 1) the route of the anode side separator 6 side involving the main channel 31S0 (includes the anode side gas diffusion layer 4 and the main channel 31S0), the second guide channel 31S2B, the first guide channel 31S1B, and the fuel fluid exhaust opening 11B; and 2) the route of the CCM sheet M100 side involving the anode side gas diffusion layer 4, the second guide channel 31M2B, the first guide channel 31M1B, and the fuel fluid exhaust opening 11B. These supply and exhaust routes are referred to as "supply and exhaust channel 31". Further, a guide channel is not limited to the guide channels described above. For example, a third channel can be formed.

Furthermore, the cooling medium channel 32 (to be described later) is provided between the anode side separator 6 configuring one component of the cell unit 8 and the cathode side separator 7 configuring one component of the cell unit 8 adjacent to it.

Also, as shown in Figs. 7 (B) and (C), the sealing material 19 applied to the periphery of the oxidizing fluid all-directional type opening 13 and the sealing material 19 applied to the periphery of the cooling medium all-directional type opening 12 can be unified, or they may not be joined to each other, so that processing of the sealing material 19 becomes easy.

Further, as is apparent from Fig. 7 (A), the anode side gas diffusion layer 4 is superimposed on the fuel fluid supply and exhaust channel 31 (the first guide channel 31M1, and the second guide channel 31M2) formed on the CCM sheet M100 side. At the same time, this anode side gas diffusion layer 4 is disposed over the fuel fluid supply and exhaust channel 31 (the first guide channel 31S1, the second guide channel 31S2 and the main channel 31S0) formed on the side facing the anode side separator 6.

Furthermore, the arrangement layout of the all-directional type opening shown in Fig. 7 is the example of providing the supply openings and the exhaust openings for various fluids, where either the supply opening or the exhaust opening of the same kind only is arranged on the same row. The distance between the rows comprising the supply openings and the exhaust openings for various fluids are arranged at approximately equal interval. Further, the arrangement layout of the all-directional type opening is not particularly limited to this example.

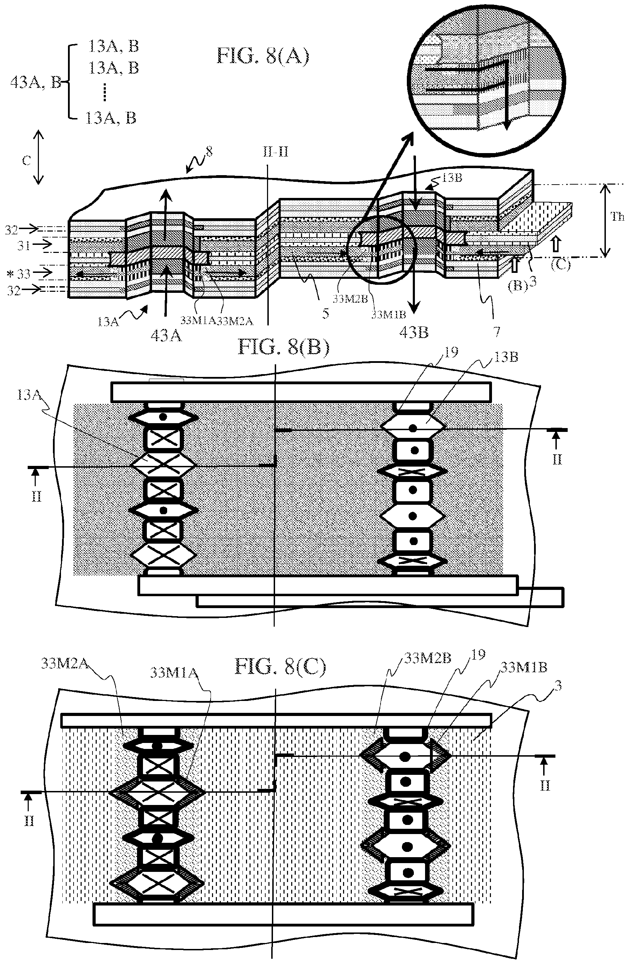

Next, the cathode side channel of the cell unit 8 and the peripheral structure of the all-directional type openings 11, 12, 13 for the first embodiment of the present invention will be described by referring to Fig. 8.

Fig. 8 is a drawing for explaining the cathode side channel of the CCM sheet M100 for the first embodiment of the present invention. Fig. 8 (A) is a 3-dimensional cross-section view of the cell unit 8 along II-II of Figs. 8 (B) and (C). Fig. 8 (B) is a plan view of the cathode side gas diffusion layer 5 that appears when removing the cathode side separator 7. Fig. 8 (C) is a plan view of the CCM sheet M100 that appears when removing the cathode side gas diffusion layer 5. Vertical both-headed arrow C located at the upper left of Fig. 8 (A) shows the stacking direction C of the cell units 8. The position relationship of the supply and exhaust channels 31, 32, 33 is illustrated on the right-hand side of Fig. 8 (A) showing a single cell unit 8. The channel with asterisk "*" attached, the channel 33 in the example of Fig. 8 (A), is the active channel. However, when the fuel cell is in fact operating, one having ordinary skill in the art can understand that other channels are in operation at the same time. The horizontal arrows drawn within the active channel 33 in Fig. 8 (A) shows the flow direction of the oxidizing fluid channel 33. The upward vertical arrow shows the flow within the oxidizing fluid supply internal common manifold 43A, and the downward vertical arrow shows the flow within the oxidizing fluid exhaust internal common manifold 43B.

According to the first embodiment of the present invention, the flows of various fluids are controlled by the sealing material 19 at the peripheries of the all-directional type openings 11, 12, 13. Specifically, as is apparent from the plan view of the cathode side gas diffusion layer 5 of Fig. 8 (B), in order to promote the reaction of hydrogen ion that permeated through the CCM membrane M101 with the oxidizing fluid, the sealing material 19 is applied to the supply and exhaust openings for fuel fluid 11A and 11B and the supply and exhaust openings for cooling medium 12A and 12B so that the fuel fluid and the cooling medium will not flow into the cathode side gas diffusion layer 5. The sealing material 19 is not applied to the ports of the supply and exhaust openings for oxidizing fluid 13A and 13B so that the oxidizing fluid will flow into the cathode side gas diffusion layer 5.

As is apparent from the plan view of the CCM sheet M100 of Fig. 8 (C), the first guide channels 33M1A, 33M1B and the second guide channels 33M2A, 33M2B are provided at the peripheries of the supply and exhaust openings for oxidizing fluid 13A and 13B at the CCM sheet M100 side facing the cathode side gas diffusion layer 5. The sealing material 19 is provided at the peripheries of the fuel fluid opening 11 and the cooling medium opening 12 that are not relevant. The sealing material 19 may or may not be joined for each all-directional type opening 11, 12.

The 3-dimensional cross-section view of Fig. 8 (A) illustrates the sealing positions of the supply opening 13A and the exhaust opening 13B for the oxidizing fluid. The sealing material 19 is not applied to the cathode side gas diffusion layer 5 and the ports of the oxidizing fluid openings 13A and 13B connected to the oxidizing fluid first guide channel 33M1A, 33M1B adjacent to the cathode side gas diffusion layer 5, thereby securing the oxidizing fluid flow into the channel 33. At the same time, the contacting positions of the oxidizing fluid openings 13A and 13B with the anode side gas diffusion layer 4 and the fuel fluid channel 31, and the contacting positions of the oxidizing fluid openings 13A and 13B with the cooling medium channel 32 between the anode side separator 6 and its adjacent cathode side separator 7 are all blocked by the sealing material 19. Therefore, the oxidizing fluid will not flow into the irrelevant channels, that is, the channels 31 and 32.

Also, like the fuel fluid flow shown in the enlarged view of Fig. 7(A), as is apparent from the drawing of Fig. 8 (A), the oxidizing fluid flow supplied from the oxidizing fluid supply internal common manifold 43A is diverged to two flows at the oxidizing fluid supply opening 13A. Among the two flows, the lower flow (the side of the cathode side separator 7) shows the flows of the first guide channel 33S1A, the second guide channel 33S2A, and the main channel 33S0 provided at the cathode side separator 7 configuring one component of the cell unit 8, which will be described later. The upper flow (the side of the CCM sheet M100) shows the flows of the first guide channel 33M1A and the second guide channel 33M2A provided at the CCM sheet M100 facing the cathode side gas diffusion layer 5. Henceforth, the active oxidizing fluid channel 33 comprises these two channels. One channel is a channel provided at the cathode side separator 7 comprising the first guide channel 33S1A, the second guide channel 33S2A, and the main channel 33S0. Another channel is a channel provided at the CCM sheet M100 comprising the first guide channel 33M1A and the second guide channel 33M2A. Likewise, as is apparent from the enlarged view of Fig. 8 (A), the two unreacted oxidizing fluid flows diverged as described above is converged at the oxidizing fluid exhaust opening 13B and exhausted out to the oxidizing fluid exhaust internal common manifold 43B.

The oxidizing fluid flow route 33 flows in the following order. That is, the supply routes of the oxidizing fluid are: 1) the route of the cathode side separator 7 side involving the oxidizing fluid supply opening 13A, the first guide channel 33S1A, the second guide channel 33S2A, the main channel 33S0, and the cathode side gas diffusion layer 5; and 2) the route of CCM sheet M100 side involving the oxidizing fluid supply opening 13A, the first guide channel 33M1A, the second guide channel 33M2A and the cathode side gas diffusion layer 5. A portion of the oxidizing fluid supplied accordingly diffuses to the cathode side gas diffusion layer 5, the oxygen reduction reaction is promoted at the cathode side catalyst layer 3 by reacting with the hydrogen ion permeated from the CCM membrane M101. On the other hand, the exhaust routes of the unreacted oxidizing fluid are: 1) the route of the cathode side separator 7 side involving the main channel 33S0 (includes the cathode side gas diffusion layer 5 and the main channel 33S0), the second guide channel 33S2B, the first guide channel 33S1B, and the oxidizing fluid exhaust opening 13B; and 2) the route of the CCM sheet M100 side involving the cathode side gas diffusion layer 5, the second guide channel 33M2B, the first guide channel 33M1B, and the oxidizing fluid exhaust opening 13B. These supply and exhaust routes are referred to as "supply and exhaust channel 33". Further, a guide channel is not limited to the guide channels described above. For example, a third channel can be formed.

Furthermore, the cooling medium channel 32 (to be described later) is provided between the cathode side separator 7 configuring one component of the cell unit 8 and the anode side separator 6 configuring one component of the cell unit 8 adjacent to it.

Also, as shown in Figs. 8 (B) and (C), the sealing material 19 applied to the periphery of the all-directional type opening for fuel fluid 11 and the sealing material 19 applied to the periphery of the all-directional type opening for cooling medium 12 can be unified, or they may not be joined to each other, so that processing of the sealing material 19 becomes easy.

Further, as is apparent from Fig. 8 (A), the cathode side gas diffusion layer 5 is superimposed on the oxidizing fluid supply and exhaust channel 33 (the first guide channel 33M1, and the second guide channel 33M2) formed on the CCM sheet M100 side. At the same time, this cathode side gas diffusion layer 5 is disposed over the oxidizing fluid supply and exhaust channel 33 (the first guide channel 33S1, the second guide channel 33S2 and the main channel 33S0) formed on the side facing the cathode side separator 7.

Furthermore, the arrangement layout of the all-directional type opening shown in Fig. 8 is the example of providing the supply openings and the exhaust openings for various fluids, where either the supply opening or the exhaust opening of the same kind only is arranged on the same row. The space between the rows comprising the supply openings and the exhaust openings for various fluids are arranged at approximately equal interval. Note that the arrangement layout of the all-directional type opening is not particularly limited to this example.

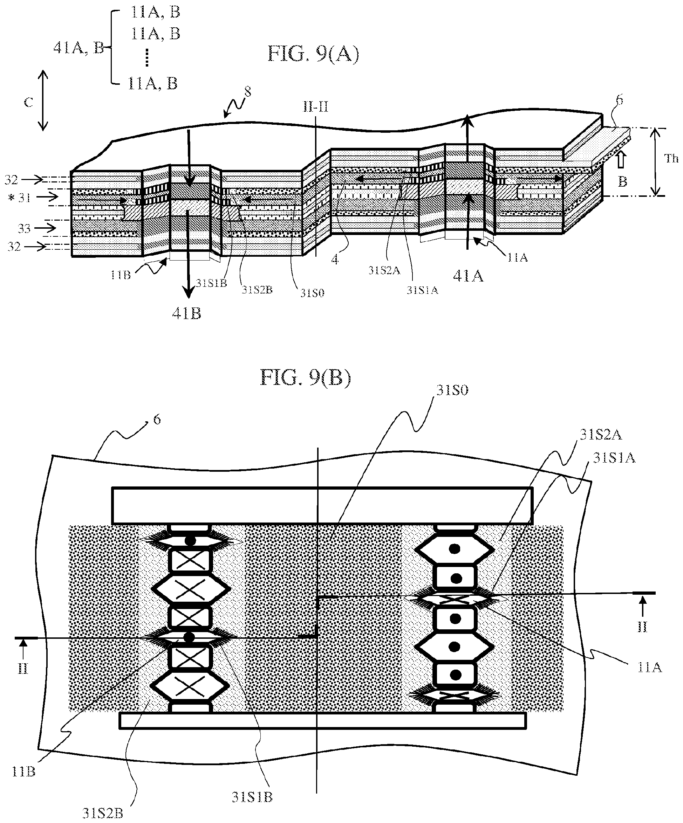

Next, the channel formation related to the separators will be described with reference to Figs. 9, 10 and 11. In these drawings, for the ease of viewing and to meet the convenience of explanation, the drawings do not represent and drawn to a scale accurately, and some thin structural components are displayed as having a greater thickness than the actual thickness.

Fig. 9 is a drawing for explaining the channel formed on the anode side separator 6, according to the first embodiment of the present invention; Fig. 9 (A) is a 3-dimensional cross-section view of the cell unit 8 along the line II-II of Fig. 9 (B); Fig. 9 (B) is a drawing showing the structure of one of the faces of the anode side separator 6 where the port of the all-directional type opening for fuel fluid 11 and the fuel fluid channel 31 are formed.

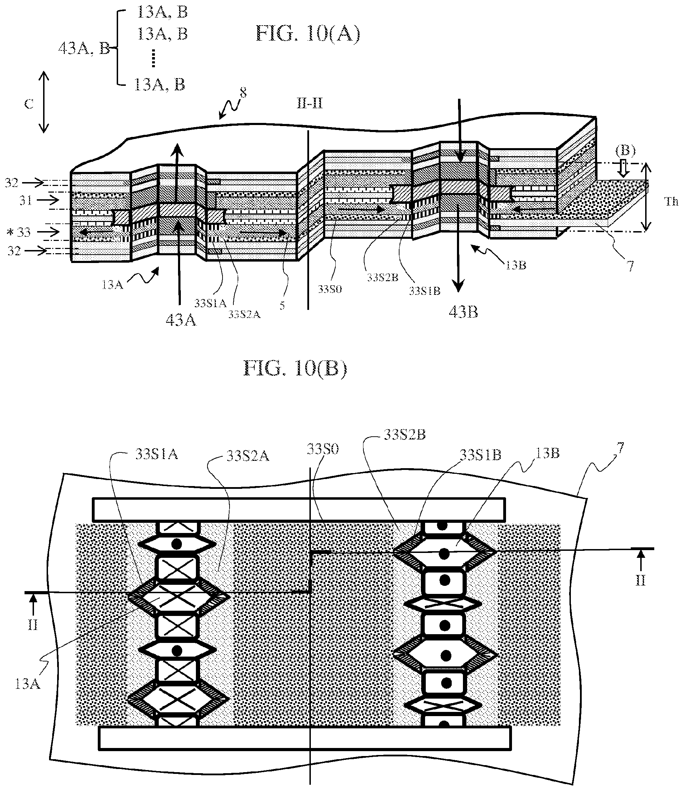

Fig. 10 is a drawing for explaining the channel formed on the cathode side separator 7, according to the first embodiment of the present invention; Fig. 10 (A) is a 3-dimensional cross-section view of the cell unit 8 along the line II-II of Fig. 10 (B) ; Fig. 10 (B) is a drawing showing the structure of one of the faces of the cathode side separator 7 where the port of the all-directional type opening for oxidizing fluid 13 and the oxidizing fluid channel 33 are formed.

Fig. 11 is a drawing for explaining the cooling medium channel 32 formed between the anode side separator 6 and the cathode side separator 7, according to the first embodiment of the present invention; Fig. 11 (A) is a 3-dimensional cross-section view of the cell unit 8 along the line II-II of Fig. 11 (B) ; and Fig. 11 (B) is a plan view showing the structure of the sides facing the separators 6 and 7 where the port of all-directional type opening for cooling medium 12 and the cooling medium channel 32 are formed, respectively. The first guide channel 32S1 and the main channel 32S0 are provided for forming the cooling medium channel 32 between the adjacent separators 6, 7.

Referring to Fig. 9 (B), among the two faces of the anode side separator 6 for the first embodiment of the present invention, the fuel fluid (the anode gas) supply and exhaust channel 31 (includes the first guide channel 31S1, the second guide channel 31S2, and the main channel 31S0) is formed at the side facing the anode side gas diffusion layer 4. Fig. 9 (B) is a plan view of the anode side of the separator 6 when removing the anode side separator 6. That is, the fuel fluid supplied from the supply internal common manifold 41A flows through the supply opening 11A and flows into the first guide channel 31S1A, the second guide channel 31S2A and the main channel 31S0, and the fuel fluid diffuses through the anode side gas diffusion layer 4. On the other hand, the unreacted fuel fluid flows through the main channel 31S0, the second guide channel 31S2B, the first guide channel 31S1B, and the exhaust opening 11B.

Among the two faces of the anode side separator 6 of Fig. 9, the supply and exhaust channel 32 where the cooling medium flows through is formed (refer to Fig. 11) at the opposite side face from the position of the anode side gas diffusion layer 4. The cooling medium supplied from the internal common manifold 42A flows through the supply opening 12A and flows into the first guide channel 32S1A and the main channel 32S0. The cooling medium as it cools down the power generation area passes through the main channel 32S0 and the first guide channel 32S1B and guided out to the exhaust internal common manifold 42B. Further, as shown in Fig. 11, only the first guide channel 32S1 is formed as the guide channel, formed at the sides facing the anode side separator 6 and the cathode side separator 7, however, the second guide channel can be formed. Further, the guide channel is not limited to the various guide channels described above. For example, a third channel can be formed.

Also, referring to Fig. 10 (B), among the two faces of the cathode side separator 7 for the first embodiment of the present invention, the oxidizing fluid (the cathode gas) supply and exhaust channel 33 (includes the first guide channel 33S1, the second guide channel 33S2, and the main channel 33S0) is formed at the side facing the cathode side gas diffusion layer 5. Fig. 10 (B) is a plan view of the cathode side of the separator 7 when removing the cathode side separator 7. That is, the oxidizing fluid supplied from the supply internal common manifold 43A flows through the supply opening 13A and flows to the first guide channel 33S1A, the second guide channel 33S2A and the main channel 33S0, and the oxidizing fluid is diffuses through the cathode side gas diffusion layer 5. On the other hand, the unreacted oxidizing fluid flows through the main channel 33S0, the second guide channel 33S2B, the first guide channel 33S1B, and the exhaust opening 13B.

Among the two faces of the cathode side separator 7 of Fig. 10, the supply and exhaust channel 32 where the cooling medium flows through is formed (refer to Fig. 11) at the opposite side face from the position of the cathode side gas diffusion layer 5. The cooling medium supplied from the internal common manifold flows through the cooling medium supply opening 12A and flows to the first guide channel 32S1A and the main channel 32S0. The cooling medium as it cools down the power generation area passes through the main channel 32S0 and the first guide channel 32S1B and guided out to the exhaust internal common manifold 42B. As shown in Fig. 11, only the first guide channel 32S1 is formed as the guide channel, formed at the side facing the anode side separator 6 and the cathode side separator 7, however, the second guide channel can be formed. Further, the guide channel is not limited to the various guide channels described above. For example, a third channel can be formed.

According to the first embodiment of the present invention, the first guide channels, the second guide channels and the main channels are respectively formed at the supply and exhaust channels 31, 32, 33. However, the channels are not particularly limited to these, and various other guide channels and the main channels can be formed.

Hereinbelow, the edge processing performed on the internal common manifolds 41, 42, 43 and the external common manifolds 51, 52, 53 for the stacked-type fuel cell according to the embodiments of the present invention will be described in detail by using Figs. 3, 12, 13 and 21. Further, in the present invention, only the edge structure implemented to the internal common manifolds 41, 42, 43 will be mentioned.

In fact, the 2-dimensinal extension of the openings 11, 12, 13 perforated through the plane of the unit e cell 8 does not continue endlessly. The extension must be terminated by forming an edge. The edge structure needs be provided to both the internal common manifolds 41, 42, 43 and the external common manifolds 51, 52, 53 so that the supply and exhaust of various fluids inputted from the external BOP (Balance of Plant: auxiliary power generating system) to the external common manifolds 51, 52, 53 formed inside of the endplates 101 and 102 and the internal common manifolds 41, 42, 43 disposed to the cell unit stack structure body 9 formed by stacking the cell units 8 are in the equilibrium states.

The basic unit 16 based on the periodicity (repeating) of the opening arrangement in accordance with the Bravais lattice extended within 2 dimensions and the minimum power generating element 17 minimally required for generating power have been described already. In the embodiments of the present invention, an oblique lattice of Bravais lattice in 2 dimensions is explained as one example, however, the preset invention is not limited to this example. Other opening arrangement layout that has applied the symmetry of other Bravais lattices with periodicity or with periodicity having some fluctuations can be adopted. "Fluctuation" means that the dimensions, shapes and layout positions of the openings 11, 12, 13 on the cell unit 8 designed and positioned on the plane of the cell unit 8 does not need to be perfect. They can be designed and positioned with slight fluctuations.

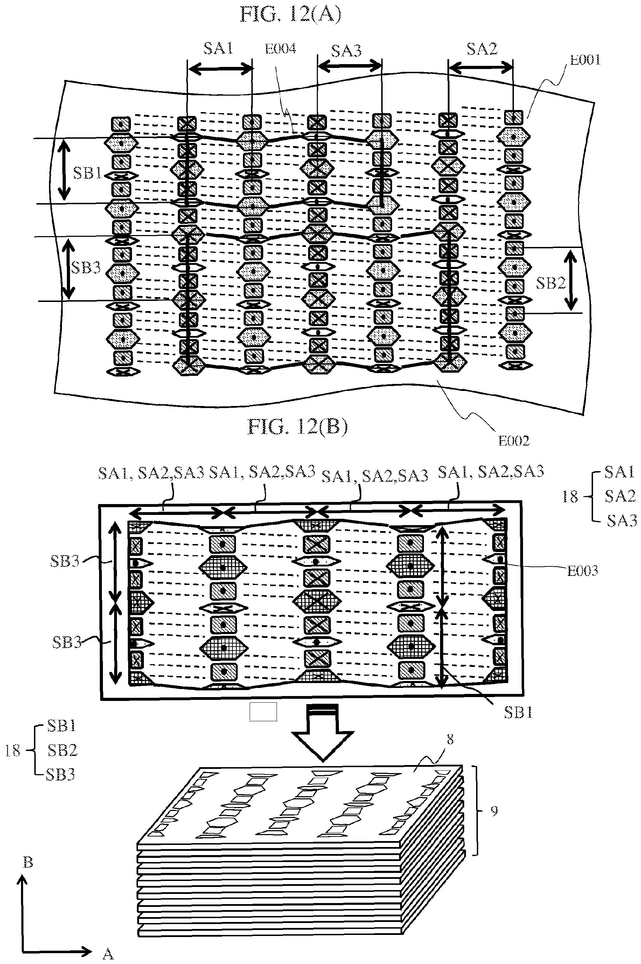

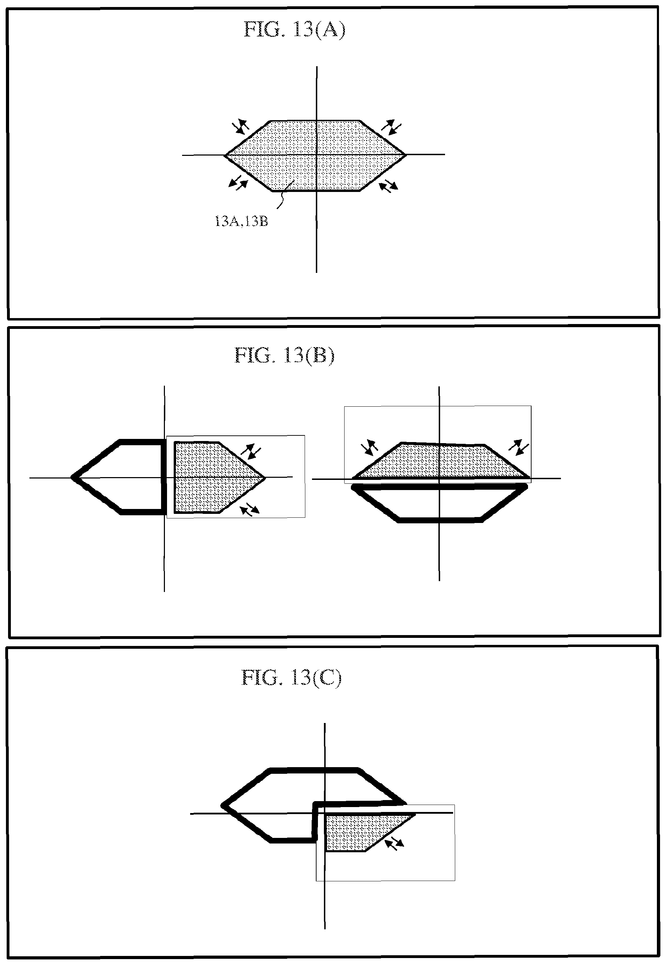

Hereinafter, the edge structure according to the first embodiment of the present invention will be described by using Figs. 12 and 13.

The edge structure according to the first embodiment of the present invention shown in Fig. 12 includes the edge structure that terminates the extension in the 2 directions of B-axis of the all-directional type opening arrangement pattern E001 (direction A of Fig. 12) and the edge structure that terminates the extension in the 2 directions of A-axis of the all-directional type opening arrangement pattern E001 (direction B of Fig. 12). In order to form the edge structure for these two edge portions, the all-directional type opening arrangement pattern E001 shown in Fig. 12 (A), which is based on the regularity of Bravais lattice in 2 dimensions, is divided by using the basic segment 18 and "edge post-processing all-directional type opening assigned area E002" encircled by a thick line in Figs. 12 (A) and (B) is cut out.

Fig. 12 (A) illustrates the arrangement pattern E001 of the all-directional type openings extended in 2 dimensions within the plane of the cell unit 8, and the all-directional type opening assigned area E002 after performing the two edge processings. Fig. 12 (B) is a schematic drawing showing the cell unit 8 having the edge processed opening assigned structure E003 in which the edge post-processing all-directional type opening assigned area E002 has been cut out from the all-directional type opening arrangement pattern E001, and the cell stack structure body 9 obtained by stacking the unit type cells 8. Within the edge post-processing all-directional type opening assigned area E002, in order to achieve the equilibrium for the total amount of supply flow and distribution and the total amount of exhaust flow and distribution for various fluids, the total area that combined the areas of the supply openings for various fluids 11A, 12A, 13A (at the edge portions and the intermediate portion) and the areas of the exhaust openings for various fluids 11B, 12B, 13B (at the edge portions and the intermediate portion) respectively are designed to be equal or approximately equal. The edge processing is carried out in this way.

As shown in Fig. 12 (A), the edge structure for terminating the extensions in the two axial directions for the A-axis and B-axis sets as a reference a segment with an integer multiple of the basic segment 18 corresponding to the respective extensions in the axial directions. The characteristics of the basic segment 18 is that it is comprised of 3 types of openings 11, 12, 13 for the fuel fluid, the cooling medium and the oxidizing fluid, for maintaining the power generating function, and/or, it is comprised of the supply opening and the exhaust opening for various fluids at one-to-one relationship. To maintain equilibriums for supply and exhaust of each reaction gas flowing within the cell unit 8 and the cooling medium flowing between the two cell units 8, the extensions of the all-directional type openings in the two axial directions comprised of A-axis and B-axis are terminated based on a segment with an integer multiple of the basic segment 18 as the standard.

Hereinbelow, 2X4 edge structure will be taken and the explanation follows below as example. Without doubt that the edge structure of the present invention is not limited to this example.

The edge structure for terminating the 2-dimensional extension in the two directions of B-axis (the direction A of Fig. 12 (B)) of the all-directional type opening arrangement pattern E001 according to the first embodiment of the present invention is the edge structure provided along the direction A of the edge post-processing all-directional type opening assigned area E002 of Fig 12 (A) . As shown in Fig. 12 (A), the reference of division of the edge structure for terminating the 2-dimensional extension in the two directions of B-axis (the direction A of Fig. 12 (B)) of the all-directional type opening arrangement pattern E001 is the integer multiple of the basic segments SB1, SB2 and SB3. The extension in the two directions of B-axis of the all-directional type opening arrangement pattern E001 is terminated by taking the integer multiple of the basic segments SA1, SA2 and SA3 based on the division (segment) of the basic segment SA1 and/or the basic segment SA2 and/or the basic segment SA3 as the standard. Referring to Fig. 3 (A), the port of the all-directional type openings is positioned within all of the first quadrant, the second quadrant, the third quadrant and the fourth quadrant. To terminate the extension in the two directions of B-axis of the all-directional type opening arrangement pattern E001, the all-directional type opening is divided into 2 by cutting through a zone located between the first and fourth quadrants and the second and third quadrants, as shown in Fig. 13. Referring to Fig. 12, the all-directional type opening serving as the start point of the basic segments SB1, SB2 and SB3 is of the same kind as the all-directional type opening serving as the end point of the basic segments. These are, the fuel fluid opening 11 divided into two, the cooling medium opening 12 divided into two, and the oxidizing fluid opening 13 divided into two, respectively. Therefore, as depicted in Fig. 12 (A), the basic segment SB1 comprises the two fuel fluid openings 11 divided, the two cooling medium openings 12 divided, and one oxidizing fluid opening 13. The basic segment SB2 comprises two cooling medium openings 12 divided into two, one fuel fluid opening 11, one cooling medium opening 12, and one oxidizing fluid opening 13. The basic segment SB3 comprises two oxidizing fluid opening 13 divided into two, two cooling medium openings 12, and one fuel fluid opening 11. The length of the basic segments SB1, SB2 and SB3 (the length in direction B) can be the same or different. The case in which the length in direction B will be different is that, although the example of Fig. 12 illustrates the case of arranging the fuel fluid opening 11, the cooling medium opening 12 and the oxidizing fluid opening 13 on the same row in a straight manner and the lengths of the basic segment SB1, SB2 and SB3 will all be the same. However, in the case that the fuel fluid opening 11, the cooling medium opening 12 and the oxidizing fluid opening 13 are arranged in a jig-zag manner in the direction B, then the lengths of the basic segments SB1, SB2 and SB3 along the direction B will become different. Therefore, in the 2X4 edge structure shown in Fig. 12 (B), the edge structure for terminating the extension in the two directions of B-axis (the direction A of Fig. 12) is comprised of two basic segment SB1 and two basic segment SB3.

The edge structure for terminating the extension in the two directions of A-axis (the direction B of Fig. 12 (B)) of the all-directional type opening arrangement pattern E001 is the edge structure provided along the direction B of the edge post-processing all-directional type opening assigned area E002 of Fig 12 (A) . As shown in Fig. 12 (A), the reference division of the edge structure for terminating the extension in the two directions of A-axis (the direction B of Fig. 12 (B)) of the all-directional type opening arrangement pattern E001 is an integer multiple of the basic segments SA1, SA2 and SA3. The extension in the two directions of A-axis of the all-directional type opening arrangement pattern E001 is terminated by taking the integer multiple of the basic segments SA1, SA2 and SA3 based on the division (segment) of the basic segment SA1 and/or the basic segment SA2 and/or the basic segment SA3 as the standard. Referring to Fig. 3 (A), the port of the all-directional type openings is positioned at all of the first quadrant, the second quadrant, the third quadrant and the fourth quadrant. To terminate the extension in the two directions of A-axis of the all-directional type openings, the all-directional type opening is divided into 2 by cutting through a middle of the zone located between the first and second quadrants and the third and fourth quadrants, as shown in Fig. 13. Referring to Fig. 12, the all-directional type opening serving as the start point of the basic segments SA1, SA2 and SA3 is of the same kind as the all-directional type opening serving as the end point of the basic segments. These are, the fuel fluid opening 11 divided into two, the cooling medium opening 12 divided into two, and the oxidizing fluid opening 13 divided into two, respectively. Therefore, as depicted in Fig. 12 (A), the basic segment SA1 comprises one of the fuel fluid supply openings 11A divided into two, and one of the fuel fluid exhaust opening 11B divided into two. The basic segment SA2 comprises one of the cooling medium supply opening 12A divided into two, and one of the cooling medium exhaust opening 12B divided into two. The basic segment SA3 comprises one of the oxidized supply gas opening 13A divided into two, and one of the oxidizing fluid exhaust opening 13B divided into two. In the example of Fig. 12 (A), the fuel fluid opening 11, the cooling medium opening 12 and the oxidizing fluid opening 13 are arranged on the same row B so that the length of the basic segments SA1, SA2 and SA3 will all be the same, that is, it becomes the same as the distance between the rows B. The lengths of the basic segments SA1, SA2 and SA3 (the length in direction A) can be the same or different. In the case that the fuel fluid opening 11, the cooling medium opening 12 and the oxidizing fluid opening 13 are arranged in a jig-zag manner in the direction A, then the lengths of the basic segments SA1, SA2 and SA3 along the direction A will be different.

Therefore, in the 2X4 edge structure shown in Fig. 12 (B), the edge structure for terminating the extension in the two directions of A-axis (the direction B of Fig. 12) is comprised of four basic segments SA1, four basic segments SA2 and four basic segments SA3.

The 2X4 edge structure shown in Fig. 12 (A) and (B) are formed by using the basic segments accordingly. Similarly, by referring to Fig. 2 (B), the edge processing is carried out even for the cell unit 8 having only one basic unit. Referring to Fig. 2 (C), the edge processing is carried out at the boundary of different basic units for the cell unit having a plurality of different basic units repeated periodically.

Accordingly, the positions and the cross sectional areas (the supply distribution and the flow amount) of the supply internal common manifolds for various fluids 41A, 42A and 43A, and the positions and the cross-sectional areas (the exhaust distribution and the flow amount) of the exhaust internal common manifolds for various fluids 41B, 42B and 43B are in the equilibrium states within the plane of the cell unit 8 where the all-directional type openings 11, 12, 13 of the first embodiment of the present invention are arranged.

Table 1 below shows the number of all-directional type openings included in the edge processed opening assigned structure E003 of Fig. 12(B) .

**[Table 1]**

| **First Embodiment All-directional type** | **Number of openings (1=fully-shaped opening)** | | | |
|---|---|---|---|---|
| **Type of openings** | **Middle** | **Edge** | **Corner** | **Total** |
| Fuel fluid supply 11A | 2 | 1/2X4=2 | - | 4 |
| Fuel fluid exhaust 11B | 2 | 1/2X4=2 | - | 4 |
| Cooling medium supply 12A | 4 | 1/2X8=4 | - | 8 |
| Cooling medium exhaust 12B | 8 | - | - | 8 |
| Oxidizing fluid supply 13A | 1 | 1/2X4=2 | 1/4X4=1 | 4 |
| Oxidizing fluid exhaust 13B | 4 | - | - | 4 |

As shown in the above Table 1, one will find that the total number (area) of supply openings and the total number (area) of the exhaust openings of the same type included in the edge processed opening assigned structure E003 are the same.

As can be understood by seeing Fig. 12 (B), in the example showing the all-directional type opening arrangement layout having the edge processed opening assigned structure E003 encircled by a thick line, that is, the edge structure divided with the basic segment of 2X4 has, as for the all-directional type openings located at its 4 corners (in this example, these are all oxidizing fluid supply openings 13A) is a quarter of the fully-shaped all-directional type opening located at the middle (in this example, the oxidizing fluid exhaust opening 13B), provided that the area of the fully-shaped all-directional type opening locate at the middle is 1. The equilibrium state of supply and exhaust (whether or not one-to-one relationship is established totally) can be confirmed by counting the number (area) of the all-directional type openings for each kind.

As a result of this, by cutting out the edge post-processing all-directional type opening assigned area E002 from the 2-dimensionally extended all-directional type opening arrangement pattern E001 of Fig. 12(A), the cell unit 8 having the edge processed opening assigned structure E003 is completed by arranging the all-directional type openings 11, 12, 13 at the supply and exhaust balanced relation. In Fig. 12, the surface of the 2-dimensionally extended pattern of all-directional type opening arrangement that applied the regularity of Bravais lattice E001 is encompassed by a thick line as "edge post-processing all-directional type opening assigned area E002" and that portion is cut out. In the first embodiment of the present invention, the all-directional type openings 11, 12, 13 are arranged within the plane of the cell unit 8 based on the "edge post-processing all-directional type opening assigned area E002".

The special case of the shape of the all-directional type openings 11, 12, 13 used to form the edge structure being one of the characteristics of the present invention will be specifically described by referring to Fig. 13. Fig. 13 is a drawing showing the plane shape of the all-directional type opening for the oxidizing fluid having the edge structure according to the first embodiment of the present invention; Fig. 13 (A) shows a fully-shaped all-directional type opening, Fig. 13 (B) shows two kinds of the all-directional type opening that divided the fully-shaped into two; and Fig. 13 (C) shows the shape of the all-directional type opening that divided the fully-shaped into four.

To be specific, what we mean by implementing the edge processing to terminate the extension in 2 dimensions is that, as shown in the all-directional type opening of Fig. 13 (B), the halved shape of the total area of the all-directional type opening is positioned at the edge portion (at the edge) of the cell stack structure body 9. In case of positioning the all-directional type opening with halved area of Fig. 13 (B) at the edge portion (the oxidizing fluid supply opening 13A, for example), the fully-shaped oxidizing fluid exhaust opening 13B is provided at the middle which is the position other than the edge, and the oxidizing fluid supply opening 13A with halved area is provided at the opposing edge. In this way, the supply and exhaust are in the equilibrium state totally, and the edge structure is established. What we mean by forming the edge structure in the present invention is that, given that the area of fully-shaped all-directional type opening is 1 as shown in Fig. 13 (A), then the all-directional type openings depicted in Fig. 13 (B) and (C) is provided at the edge (the edge portion and the corner) is 1 or less (half or quarter) . As a result of this, the edge structure of 2X4 is formed. In simple terms, since the flow from the all-directional type opening is panorama in every direction (360 degrees), when the all-directional type opening is divided into two, then the halved opening can be utilized as the all-directional type opening for the edge portions (the edge) . Also, if the all-directional type opening is divided into four, then the quarter-sized opening an be utilized as the all-directional type opening at the edge portions (the corner).

Note that the all-directional type opening that is divided into two as shown in Fig. 13 (B) has two kinds. Their respective types have an inverted type, so that there is going to be a total of 4 kinds of all-directional type openings that are divided into two. The all-directional type openings having various orientation as described above is suitably set to the appropriate positions and the edge structure is successfully formed. The example of Fig. 13 illustrates the example of oxidizing fluid opening 13 only, however, the fuel fluid opening 11 and the cooling medium opening 12 can form the edge structure under the same concept.

As shown in Fig. 13 (A), (B) and (C), the characteristics of the edge structure related to the all-directional type opening of the first embodiment of the present invention is that the dimensions, shapes and areas of the all-directional type openings provided along the edge of the cell unit 8 (half and more or less than half), the dimensions, shapes and areas of the all-directional type openings provided along the corner of the cell unit 8 (quarter and more or less than quarter), and all other all-directional type opening, that is, the dimensions, shapes and areas of the all-directional type openings provided along the middle of the cell unit 8 (one and more or less than one) are different, respectively. The values indicated in brackets above are the value when taking the area of the fully-shaped all-directional type opening as 1.

The edge structure within the plane of the cell unit 8 has been described above based on the notion of the all-directional type openings. Next, the edge structure related to the internal common manifolds communicated to the all-directional type openings will be described. The internal common manifolds are formed at an inner side of the cell stack structure body 9 formed by stacking the cell units 8 of the present invention. Therefore, if the supply and exhaust of the all-directional type openings for various fluids 11, 12, 13 are in the equilibrium states within the plane of a single cell unit 8, then even if the shape and size of the internal common manifolds are modified or changed, as a whole, the supply and exhaust of the internal common manifolds are also in the equilibrium states.

That is, the cross-sectional shape and the cross-sectional area of the internal common manifolds are basically the same as the shape and the area of the all-directional type openings. Similar to the plane shape and the area of the all-directional type openings provided at the plane of the cell unit 8, the cross-sectional shape and the cross-sectional area of the internal common manifold are different at the corner and the edge (the edge portions) and the middle (the portion other than the edge portions), respectively. In comparison, if the cross-sectional area of the fully-shaped internal common manifold at the middle is regarded as 1, then the cross-sectional area of the internal common manifold at the edge is smaller than the cross-section of the internal common manifold at the middle, being approximately half . The cross-sectional area of the internal common manifold at the corner, is smaller than the cross-section of the internal common manifold at the middle, being approximately quarter. The above-described structure is applied to both the internal common manifolds and the external common manifolds.

For this reason, in the plane of the cell unit 8 according to the first embodiment of the present invention, the position and the cross-sectional area of the fuel fluid supply internal common manifold 41A (the supply distribution and the flow amount) and the position and the cross-sectional area of the fuel fluid exhaust internal common manifold 41B (the exhaust distribution and the flow amount) are in the equilibrium state. The position and the cross-sectional area of the cooling medium supply internal common manifold 42A (the supply distribution and the flow amount) and the position and the cross-sectional area of the cooling medium exhaust internal common manifold 42B (the exhaust distribution and the flow amount) are in the equilibrium state. The position and the cross-sectional area of the oxidizing fluid supply internal common manifold 43A (the supply distribution and the flow amount) and the position and the cross-sectional area of the oxidizing fluid exhaust internal common manifold 43B (the exhaust distribution and the flow amount) are in the equilibrium state.

In the case of the all-directional type opening according to the first embodiment of the present invention, the extension of the arrangement in accordance with Bravais lattice in 2 dimensions is terminated by providing the above-described edge structure.

As described above, the edge structure pertaining to the first embodiment of the present invention is just one example, and needless to say that it should not be limited to the contents mentioned in the present patent specification.

Their effects are the effective use and uniformization of supply and exhaust for various fluids supplied to and exhausted from the cell unit 8 having arranged the all-directional type openings 11, 12, 13 thereon.

Without the edge structure, the supply and exhaust balance of various fluids around the edge is lost, and the local stress is increased to give a significant damage to the catalyst layer. This will cause damage to the catalyst layer, and its durability may also decrease considerably.

### Second Embodiment

Next, the stacked-type fuel cell in accordance with the second embodiment of the present invention will be explained by using Figs. 1 to 3, and 14 to 21. Note that the present invention is not limited to the second embodiment.

Regarding the second embodiment of the present invention, as shown in Figs. 1 to 3 and 14 to 21, the main point of difference is that the second embodiment is implemented by using the layout that arranged the half-directional type opening within the plane of the staked-type fuel cell. Other structures and mechanisms are mostly the same as the first embodiment shown in Figs. 1 to 13. Note that the portions identical to the content of the first embodiment shown in Figs. 1 to 13 are annotated with the same reference signs, and their explanations are partially omitted.

Hereinbelow, the characteristics of the port of the half-directional type opening and its arrangement layout in accordance with the second embodiment of the present invention will be described by referring to Figs. 3 and 14.

Fig. 14 illustrates the arrangement of the half-directional type openings 11, 12, 13 formed in the plane of the cell unit 8 of the present invention that has applied the regularity of the Bravais lattice extended within 2 dimensions. The half-directional type openings 11, 12, 13 shown in Fig. 14 are respectively distinguished to the supply openings and the exhaust openings for various fluids, as follows. These include a fuel fluid supply opening 11A, a cooling medium supply opening 12A, an oxidizing fluid supply opening 13A, a fuel fluid exhaust opening 11B, a cooling medium exhaust opening 12B, and an oxidizing fluid exhaust opening 13B. In Fig. 14, the half-directional type is proposed as one example of the variety of opening shapes, wherein the half-directional type opening can be set to have a divergent angle to allow flow-out. In the example shown in Fig. 14, the arrangement of the port of the half-directional type openings 11, 12, 13 is designed so that various fluids flowing out via the ports positioned at the first quadrant and the second quadrant or the third quadrant and the fourth quadrant flow out in half direction having the divergent angle of more than 1 degree and less than 90 degrees. Also, the ports positioned at the above-mentioned quadrants have been designed so that various fluids flow in at half direction having the convergent angle of more than 1 degree and less than 90 degrees.

Since the various fluid flows are invisible to human eyes, therefore, we have attempted to visualize the flow by using the arrows. The arrows drawn towards the ports of the half-directional type openings positioned at the first quadrant and the second quadrant or the third quadrant and the fourth quadrant specify the flowing-in direction of various fluids to the half-directional type openings. The arrows drawn to release in circular arc from the ports of the half-directional type openings positioned at the first quadrant and the second quadrant or the third quadrant and the fourth quadrant specify the flowing-out direction of various fluid from the half-directional type openings. In Fig. 14, the shapes of the all-directional type opening include a rectangle for the cooling medium opening 12 and trapezoid having different areas for the fuel fluid opening 11 and the oxidizing fluid opening 13 (that is, the area of the oxidizing fluid opening 13 is greater than the area of the fuel fluid opening 11).

Note that the shape of the half-directional type openings for reaction gases shown in Fig. 3 (B) is asymmetrical above-and-below direction thus it has an inverted type shape, for the respective reaction gases. Utilizing this feature, in the example shown in Fig. 14 uses the half-directional type opening having an upward-facing port (normal trapezoid) as the supply opening and the half-directional type opening having a downward-facing port (reversed trapezoid) as the exhaust opening. Owing to this, the ports of the supply opening are positioned at the first quadrant and the second quadrant and the ports of the corresponding exhaust opening are positioned at the third quadrant and the fourth quadrant. The reaction fluid flow from the port is successfully facing and matching with each other in the supply and exhaust channel directions. Also, besides the example illustrated in Fig. 14, similarly, the port of exhaust openings are positioned at the first quadrant and the second quadrant and the ports of the corresponding supply opening are positioned at the third quadrant and the fourth quadrant. The reaction gas flow from the port is successfully facing and matching with each other in the supply and exhaust channel directions. Also, the shape of the half-directional type opening of the reaction gases shown in Fig. 3 (C) is asymmetrical in shape, therefore, it has an inverted type. Further, the shape of the half-directional type opening of the reaction fluids shown in Fig. 3 (E) is asymmetrical in shape, therefore it has an inverted type.

The basic unit 16 expresses a minimum repeating unit of a pattern in which the openings are arranged in accordance with Bravais lattice in 2 dimensions, which is drawn by a vector A (reference sign 14 of Fig. 4) and a vector B (reference sign 15 of Fig. 4). The basic unit 16 is a repeating unit for extending the 2-dimensional arrangement of the half-directional type openings (the extension within 2 dimensions in this context is adopted to the plane of the cell unit 8 positioned on the plane comprised of A-axis and B-axis of Figs. 2 and 14). The arrangement pattern of the half-directional type opening is a pattern acquired by moving the basic unit 16 repeatedly in parallel, along the direction A and/or its reverse direction of the vector A (reference sign 14 of Fig. 4) and/or along the direction B and/or its reverse direction of the vector B (reference sign 15 of Fig. 4). The arrangement of the half-directional type opening is arranged periodically or semi-periodically in accordance with this pattern. The minimum power generating element is a minimum structural element 17 having the half-directional type openings types that are required to generate power, wherein the minimum structural element 17 includes 6 types: namely; supply openings for various fluids 11A, 12A, 13A and the exhaust openings for various fluids 11B, 12B, 13B, which are the minimal requirement for generating power.

The dotted arrows extended to four directions in Fig. 14 indicate a portion where the half-directional type openings 11, 12, 13 that continue to be arranged in repeat are abbreviated, due to the limitation in drawing capability. However, these dotted arrows do not imply that the repeated arrangement is extended infinitely. Also, a wave-shaped profile at 4 edges of the cell unit 8 of Fig. 14 indicates the state of abbreviated portion being trimmed off. The reason for expressing "repeat" by the dotted line of Fig. 14 is to realize the arrangement of the half-directional type openings 11, 12, 13 suitably by extending within 2 dimensions as required. Also, in Fig. 14, a symbol used to express the supply openings 11A, 12A, 13A for various fluids is "X". A symbol used to express the exhaust openings 11B, 12B, 13B for various fluids is black circle.

A broken line sloping to the right in Fig. 14, which is drawn between the rows of the half-directional type openings 11, 12, 13 of the cell unit 8 of the present invention, indicates the concept line of the channels formed between the supply openings 11A, 12A, 13A and the exhaust openings 11B, 12B, 13B for various fluids (that is, the fuel fluid supply and exhaust channel 31, the cooling medium supply and exhaust channel 32, and the oxidizing fluid supply and exhaust channel 33), respectively. However, these concept lines drawn in Fig. 4 are not necessarily intended to be an exact match with the actual channels 31, 32, 33. Further, the various fluids flow from the supply openings 11A, 12A, 13A to the exhaust openings 11B, 12B, 13B at the corresponding position closest to them. However, even if the exhaust openings 11B, 12B, 12B are present at the closest corresponding position, under no circumstances the fluid flows towards the non-corresponding exhaust openings 11B, 12B, 13B unguided by the supply and exhaust channels 31, 32, 33.

One of the characteristics in the way of thinking about the arrangement of the half-directional type openings 11, 12, 13 according to the second embodiment of the present invention applying the regularity of Bravais lattice extended within 2 dimensions, as shown in Fig. 14, is to arrange the half-directional type openings 11, 12, 13 by using the basic unit 16 of a pattern arranged in accordance with the Bravais lattice extended within 2 dimensions, as a minimum repeating unit. As one example, in terms of the areas of the half-directional type openings 11, 12, 13 encompassed by the 4 edge lines of the basic unit 16 shaping an oblique lattice drawn by a vector A (reference sign 14 of Fig. 4) and a vector B (reference sign 15 of Fig. 14), the four fuel fluid openings 11A, 11B touching the 4 edge lines of the basic unit 16 are all approximately one half in size inside the 4 edge lines, and altogether these are counted as two openings (1/2 x 4 = 2). Among them, two cooling medium openings 12A touching the 2 edge lines which are all half in size inside, and together these are counted as one opening (1/2 x 1 = 1) . There is one more cooling medium opening 12B inside the area surrounded by the basic unit 16, untouched by the edge lines. Altogether these are counted as two openings (1/2 x 1 + 1 = 2). Four oxidizing fluid openings 13A at the 4 corners of the basic unit 16 are all approximately 1/4 in size inside the basic unit 16. There is one more oxidizing fluid opening 13B inside the area encompassed by the basic unit 16, untouched by the edge lines. Altogether these are counted as four openings (1/4 x 4 + 1 = 2). These are totally counted as six openings. Henceforth, the basic unit 16 shaping an oblique lattice is comprised of six supply openings and exhaust opening altogether (two fuel fluid openings 11, two cooling medium openings 12, and two oxidizing fluid openings 13), including the openings 12B, 13B encompassed but not touched by the edge lines. The meaning of "encompass" in this context is a portion of the half-directional type openings surrounded by the 4 edge lines (vectors) of the basic unit 16 with Bravais lattice in 2 dimensions shaping an oblique lattice. Also, the basic unit 16 of Bravais lattice in 2 dimensions is not particularly limited to the example of oblique lattice. The basic unit 16 may adopt others such as rectangular lattice, hexagonal lattice, square lattice, and centered rectangular lattice.

Naturally, the half-directional type openings 11, 12, 13 that are minimally required for generating the power of the stacked-type fuel cell of the second embodiment of the present invention include the following 6 types: the fuel fluid supply opening 11A, the cooling medium supply opening 12A, oxidizing fluid supply opening 13A, the fuel fluid supply opening 11B, the cooling medium supply opening 12B, and the oxidizing fluid supply opening 13B. These openings are indicated in Fig. 14 as the minimum power generating element 17. As the point of necessity in designing the layout arrangement of the half-directional type openings 11, 12, 13 for the second embodiment of the present invention, in order to acquire the stacked fuel cell having a high output density and a high capacity, it is preferable to provide the minimally required 6 types of the half-directional type openings 11, 12, 13 for spreading out that the reaction fluids most efficiently to the power generating areas of the anode side catalyst layer 2 and the cathode side catalyst layer 3 of the cell unit 8 and for efficiently cooling the heat. Also, at least, the type and the area of the all-directional type openings 11, 12, 13 designed by using the basic unit 16 should meet the type and the area of the half-directional type openings 11, 12, 13 of the minimum power generating element 17. Regarding the type and the area of the half-directional type openings 11, 12, 13, the basic unit 16 and the minimum power generating element 17 may be equal, and the basic unit 16 may be greater than the minimum power generating element 17, however, the basic unit 16 cannot be less than the minimum power generating element 17.

According to Fig. 14, the area of the half-directional type openings 11, 12, 13 for various fluids in the minimum power generating element 17 includes approximately quarter area of the fuel fluid supply opening 11A, approximately quarter area of the fuel fluid exhaust opening 11B, a half area of the cooling medium supply opening 12A, a half area of the cooling medium exhaust opening 12B, approximately area of the oxidizing fluid supply opening 13A, and approximately quarter area of the oxidizing fluid exhaust opening 13B.

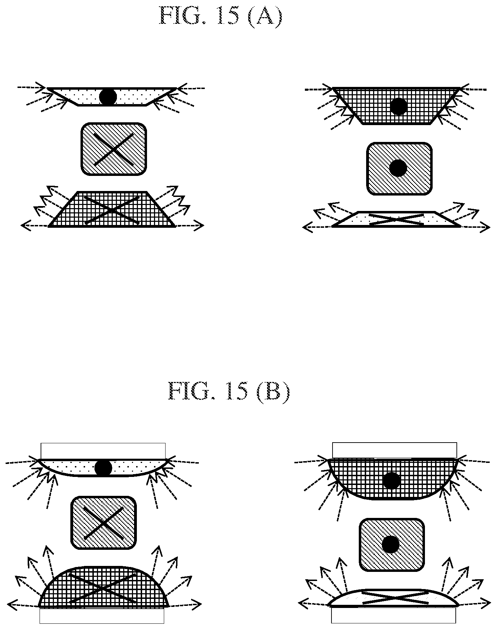

Hereinbelow, the flow of various fluids (reaction fluids) in and out from the ports of the all-directional type openings will be described by using Fig. 15. However, the present invention is not just limited to this shape (the half-directional type).

According to the example which shows the flow related to the half-directional type opening in Fig. 15, the port shape is designed so that the divergent angle of the reaction gases (the fuel fluid and the oxidizing fluid) flowing out of the port positioned at the first quadrant and the fourth quadrant or the second quadrant and the third quadrant of each opening to be more than 1 degree and less than 90 degrees. Since the flows of various reaction gases are not visible to human eyes, therefore, the flows are visualized by using the arrows in Fig. 15. The arrows drawn towards the port of the half-directional type opening indicate a flow line of the reaction gases from the first guide channels to the half-directional type exhaust openings 11B, 13B, via the ports. The arrows drawn to radially release (circular arc like) from the ports of the half-directional type opening indicate the flow line of the reaction gases from the half-directional type supply opening 11A, 13A to the first guide channels, via the ports. Fig. 15 illustrates the situation of various reaction gases flowing in and out from the ports present at the right and left positions of the half-directional type opening for fuel fluid 11 and the half-directional type opening for oxidizing fluid 13 (that is, from the first quadrant to the fourth quadrant) . Fig. 15 (A) illustrates the trapezoid port shapes having different areas for the half-directional type openings for fuel fluid 11 and the half-directional type openings for oxidizing fluid 13. Fig. 15 (B) illustrates the similar port shapes with rounded edges. Further, the port shape according to the present invention is implementable at any one of the following shapes including polygons, deformed polygons, non-circular, circular and their elongated shapes, or can be their combinations. Also, as the port shape of the second embodiment of the present invention needs not be limited to the sole structure of the half-directional type opening. The port shape of the all-directional type opening already described in the first embodiment and other shapes which will be described later in the other modifications of the present patent specification (the semi-directional type) can be formed on the cell unit 8 at various combinations.

As described above, the channel design is optimized by changing the port shapes of the half-directional type openings 11, 12, 13 according to the second embodiment of the present invention, therefore, the power generating amount of CCM can be maximized.

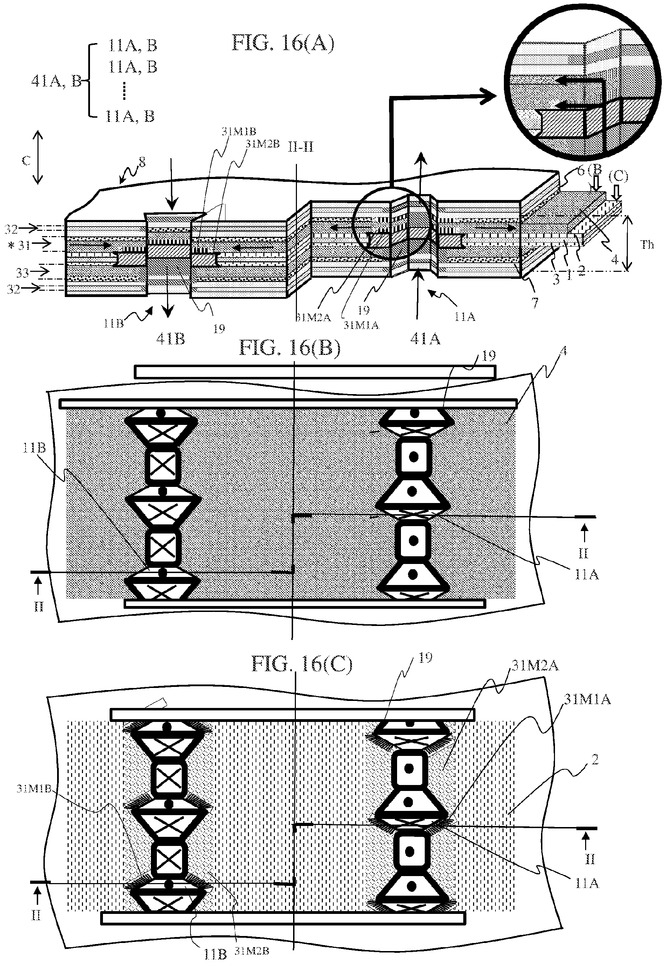

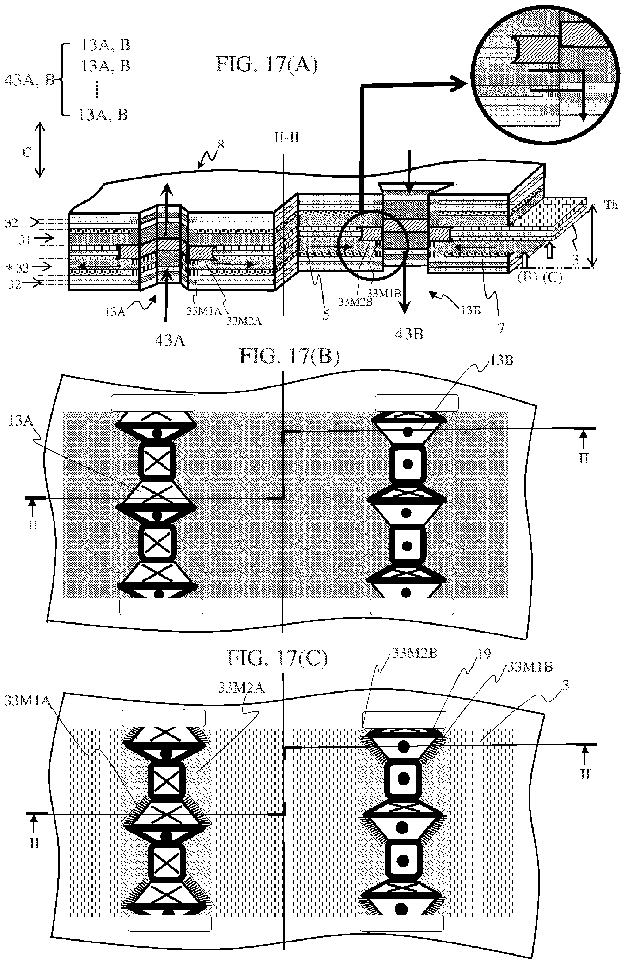

Next, the channel formation related to the gas diffusion layers 4, 5 and the sealing material 19 will be described with reference to Figs. 16 and 17. In these drawings, for the ease of viewing and to meet the convenience of explanation, the drawings are not represent and drawn to a scale accurately, and some thin structural components are displayed as having a greater thickness than the actual thickness. In these drawings, the same reference sign is used for the same component throughout.

At first, the anode side channel of the cell unit 8 and the peripheral structure of the half-directional type openings 11, 12, 13 for the second embodiment of the present invention will be described by referring to Fig. 16. Note that Fig. 16 is more of the same as Fig. 7 described in the first embodiment and that the same reference signs are annotated to the duplicated portions.

Fig. 16 is a drawing for explaining the anode side channel of the CCM sheet M100 for the second embodiment of the present invention. Fig. 16 (A) is a 3-dimensional cross-section view of the cell unit 8 along II-II of Figs. 16 (B) and (C). Fig. 16 (B) is a plan view of the anode side gas diffusion layer 4 that appears when removing the anode side separator 6. Fig. 16 (C) is a plan view of the CCM sheet M100 that appears when removing the anode side gas diffusion layer 4. A vertical both-headed arrow C located at the upper left of Fig. 16 (A) shows the stacking direction C of the cell units 8. The position relationship of the supply and exhaust channels 31, 32, 33 is illustrated on the right-hand side of Fig. 16 (A) showing a single cell unit 8. The channel with asterisk "*" attached, the channel 31 in the example of Fig. 16 (A), is the active channel. However, when the fuel cell is operating, one having ordinary skill in the art can understand that other channels are in operation at the same time. The horizontal arrows drawn within the active channel 31 of Fig. 16 (A) show the flow direction of the fuel fluid channel 31. The upward vertical arrow shows the flow within the fuel fluid supply internal common manifold 41A, and the downward vertical arrow shows the flow within the fuel fluid exhaust internal common manifold 41B.

According to the second embodiment or the present invention, the flows of various fluids are controlled by the sealing material 19 at the peripheries of the half-directional type openings 11, 12, 13. Specifically, as is apparent from the plan view of the anode side gas diffusion layer 4 of Fig. 16 (B), for allowing the hydrogen ion to permeate through the CCM membrane M101, the sealing material 19 is applied to the supply and exhaust openings for cooling medium 12A and 12B and the supply and exhaust openings for oxidizing fluid 13A and 13B so that the cooling medium and the oxidizing fluid will not flow into the anode side gas diffusion layer 4. The sealing material 19 is not applied to the port of the supply and exhaust openings for fuel fluid 11A and 11B so that the fuel fluid will flow into the anode side gas diffusion layer 4.

As is apparent from the plan view of the CCM sheet M100 of Fig. 16 (C), the first guide channels 31M1A, 31M1B and the second guide channels 31M2A, 31M2B are provided at the vicinity of the fuel fluid supply and exhaust openings 11A and 11B at the CCM sheet M100 side facing the anode side gas diffusion layer 4. The sealing material 19 is provided at the peripheries of the cooling medium opening 12 and the oxidizing fluid opening 13 that are not relevant. The sealing material 19 may or may not be unified for each half-directional type openings 12, 13.

The 3-dimensional cross-section view of Fig. 16 (A) illustrates the sealing positions of the fuel fluid supply opening 11A and the exhaust opening 11B. The sealing material 19 is not applied to the anode side gas diffusion layer 4 and the ports for the fuel fluid openings 11A and 11B connected to the first guide channel 31M1A, 31M1B adjacent to the anode side gas diffusion layer 4, thereby securing the fuel fluid flow into the channel 31. At the same time, the contacting positions of the fuel fluid openings 11A and 11B with the cathode side gas diffusion layer 5 and the oxidizing fluid channel 33, and the contacting positions of the fuel fluid openings 11A and 11B with the cooling medium channel 32 between the anode side separator 6 and its adjacent cathode side separator 7 are all blocked by the sealing material 19. Therefore, the fuel fluid will not flow into the irrelevant channels, that is, the channels 32 and 33.

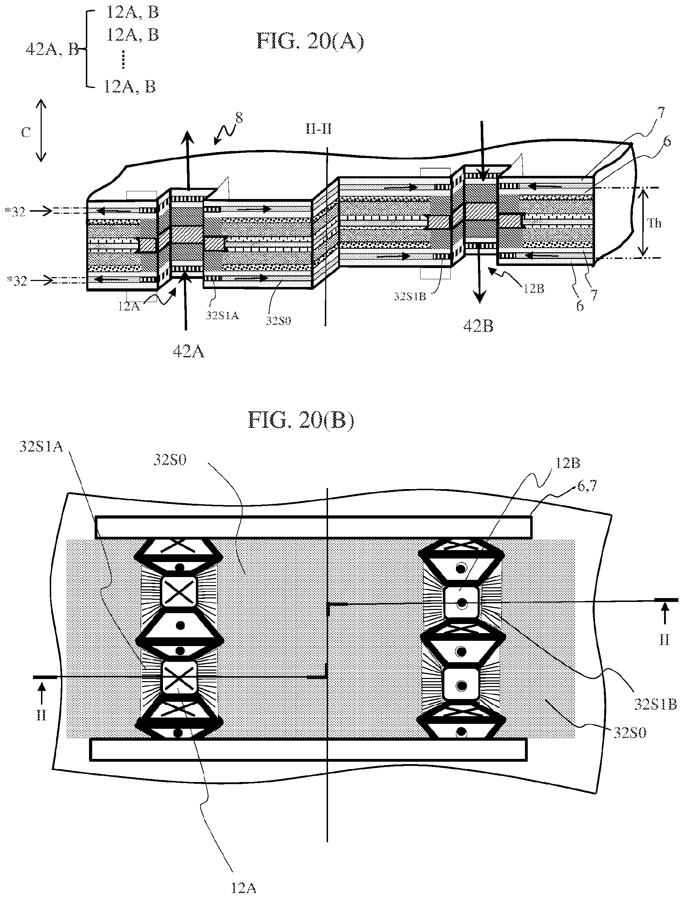

Also, as is apparent from the enlarged view of Fig. 16 (A), the fuel fluid flow supplied from the fuel fluid supply internal common manifold 41A is diverged to two flows at the fuel fluid supply opening 11A. Among the two flows, a flow indicated by the upper side arrow shows the flows of the first guide channel 31S1A, the second guide channel 31S2A, and the main channel 31S0 provided to the anode side separator 6 configuring one component of the cell unit 8 which will be described later in Fig. 20. The flow indicated by the lower side arrow shows the flows of the first guide channel 31M1A and the second guide channel 31M2A provided to the CCM sheet M100 facing the anode side gas diffusion layer 4. Henceforth, the active fuel fluid channel 31 comprises these two channels. One channel is a channel provided at the anode side separator 6 comprising the first guide channel 31S1A, the second guide channel 31S2A and the main channel 31S0. Another channel is a channel provided at the CCM sheet M100 comprising the first guide channel 31M1A and the second guide channel 31M2A. Likewise, the two unreacted fuel fluid flows diverged as described above is converged at the fuel fluid exhaust opening 11B and exhausted out to the fuel fluid exhaust internal common manifold 41B.

The fuel fluid flow route 31 flows in the following order. That is, the supply routes of the fuel fluid are: 1) the route of the anode side separator 6 side involving the fuel fluid supply opening 11A, the first guide channel 31S1A, the second guide channel 31S2A, the main channel 31S0, and the anode side gas diffusion layer 4; and 2) the route of CCM sheet M100 side involving the fuel fluid supply opening 11A, the first guide channel 31M1A, the second guide channel 31M2A and the anode side gas diffusion layer 4. A portion of the fuel fluid supplied accordingly diffuses through the anode side gas diffusion layer 4, the hydrogen oxidation reaction is promoted at the anode side catalyst layer 2, and the hydrogen ion permeates the CCM membrane M101. On the other hand, the exhaust routes of the unreacted fuel fluid are: 1) the route of the anode side separator 6 side involving the main channel 31S0 (includes the anode side gas diffusion layer 4 and the main channel 31S0), the second guide channel 31S2B, the first guide channel 31S1B, and the fuel fluid exhaust opening 11B; and 2) the route of the CCM sheet M100 side involving the anode side gas diffusion layer 4, the second guide channel 31M2B, the first guide channel 31M1B, and the fuel fluid exhaust opening 11B. These supply and exhaust routes are referred to as "supply and exhaust channel 31". Further, a guide channel is not limited to the guide channels described above. For example, a third channel can be formed.

Furthermore, the cooling medium channel 32 (to be described later) is provided between the anode side separator 6 configuring one component of the cell unit 8 and the cathode side separator 7 configuring one component of the cell unit 8 adjacent to it.

Also, as shown in Figs. 16 (B) and (C), the sealing material 19 applied to the periphery of the oxidizing fluid half-directional type opening 13 and the sealing material 19 applied to the periphery of the cooling medium half-directional type opening 12 can be unified, or they may not be joined to each other, so that processing of the sealing material 19 becomes easy.

Further, as is apparent from Fig. 16 (A), the anode side gas diffusion layer 4 is superimposed on the fuel fluid supply and exhaust channel 31 (the first guide channel 31M1, and the second guide channel 31M2) formed on the CCM sheet M100 side. At the same time, this anode side gas diffusion layer 4 is disposed over the fuel fluid supply and exhaust channel 31 (the first guide channel 31S1, the second guide channel 31S2 and the main channel 31S0) formed on the side facing the anode side separator 6.

Furthermore, the arrangement layout of the half-directional type opening shown in Fig. 16 is the example of providing the supply openings and the exhaust openings for various fluids, where either the supply opening or the exhaust opening of the same kind only is arranged on the same row. The distance between the rows comprising the supply openings and the exhaust openings for various fluids are arranged at approximately equal interval. Further, the arrangement layout of the half-directional type opening is not particularly limited to this example.

Next, the cathode side channel of the cell unit 8 and the peripheral structure of the half-directional type openings 11, 12, 13 for the second embodiment of the present invention will be described by referring to Fig. 17. Note that Fig. 17 is more of the same as Fig. 8 described in the first embodiment and that the same reference signs are annotated to the duplicated portions.

Fig. 17 is a drawing for explaining the cathode side channel of the CCM sheet M100 for the second embodiment of the present invention. Fig. 17(A) is a 3-dimensional cross-section view of the cell unit 8 along II-II of Figs. 17 (B) and (C). Fig. 17 (B) is a plan view of the cathode side gas diffusion layer 5 that appears when removing the cathode side separator 7. Fig. 17 (C) is a plan view of the CCM sheet M100 that appears when removing the cathode side gas diffusion layer 5. Vertical both-headed arrow C located at the upper left of Fig. 17 (A) shows the stacking direction C of the cell units 8. The position relationship of the supply and exhaust channels 31, 32, 33 is illustrated on the right-hand side of Fig. 17 (A) showing a single cell unit 8. The channel with asterisk "*" attached, the channel 33 in the example of Fig. 17 (A), is the active channel. However, when the fuel cell is in fact operating, one having ordinary skill in the art can understand that other channels are in operation at the same time. The horizontal arrows drawn within the active channel 33 in Fig. 17 (A) shows the flow direction of the oxidizing fluid channel 33. The upward vertical arrow shows the flow within the oxidizing fluid supply internal common manifold 43A and the downward vertical arrow shows the flow within the oxidizing fluid exhaust internal common manifold 43B.

According to the second embodiment of the present invention, the flows of various fluids are controlled by the sealing material 19 at the peripheries of the half-directional type openings 11, 12, 13. Specifically, as is apparent from the plan view of the cathode side gas diffusion layer 5 of Fig. 17 (B), in order to promote the reaction of hydrogen ion that permeated through the CCM membrane M101 with the oxidizing fluid, the sealing material 19 is applied to the supply and exhaust openings for fuel fluid 11A and 11B and the supply and exhaust openings for cooling medium 12A and 12B so that the fuel fluid and the cooling medium will not flow into the cathode side gas diffusion layer 5. The sealing material 19 is not applied to the ports of the supply and exhaust openings for oxidizing fluid 13A and 13B so that the oxidizing fluid will flow into the cathode side gas diffusion layer 5.

As is apparent from the plan view of the CCM sheet M100 of Fig. 17(C), the first guide channels 33M1A, 33M1B and the second guide channels 33M2A, 33M2B are provided at the vicinity of the supply and exhaust openings for oxidizing fluid 13A and 13B at the CCM sheet M100 side facing the cathode side gas diffusion layer 5. The sealing material 19 is provided at the peripheries of the fuel fluid opening 11 and the cooling medium opening 12 that are not relevant. The sealing material 19 may or may not be joined for each half-directional type opening 11, 12.

The 3-dimensional cross-section view of Fig. 17 (A) illustrates the sealing positions of the supply opening 13A and the exhaust opening 13B for the oxidizing fluid. The sealing material 19 is not applied to the cathode side gas diffusion layer 5 and the ports for the oxidizing fluid openings 13A and 13B connected to the first guide channel 33M1A, 33M1B adjacent to the cathode side gas diffusion layer 5, thereby securing the oxidizing fluid flow to the channel 33. At the same time, the contacting positions of the oxidizing fluid openings 13A and 13B with the anode side gas diffusion layer 4 and the fuel fluid channel 31, and the contacting positions of the oxidizing fluid openings 13A and 13B with the cooling medium channel 32 between the anode side separator 6 and its adjacent cathode side separator 7 are all blocked by the sealing material 19. Therefore, the oxidizing fluid will not flow into the irrelevant channels, that is, the channels 31 and 32.

Also, like the fuel fluid flow shown in the enlarged view of Fig. 16(A), as is apparent from the drawing of Fig. 17 (A), the oxidizing fluid flow supplied from the oxidizing fluid supply internal common manifold 43A is diverged to two flows at the oxidizing fluid supply opening 13A. Among the two flows, the lower flow (the side of the cathode side separator 7) shows the flows of the first guide channel 33S1A, the second guide channel 33S2A, and the main channel 33S0 provided at the cathode side separator 7 configuring one component of the cell unit 8, which will be described later. The upper flow (the CCM sheet M100 side) shows the flow of the first guide channel 33M1A and the second guide channel 33M2A provided at the CCM sheet M100 facing the cathode side gas diffusion layer 5. Henceforth, the active oxidizing fluid channel 33 comprises these two channels. One channel is a channel provided at the cathode side separator 7 comprising the first guide channel 33S1A, the second guide channel 33S2A, and the main channel 33S0. Another channel is a channel provided at the CCM sheet M100 comprising the first guide channel 33M1A and the second guide channel 33M2A. Likewise, as is apparent from the enlarged view of Fig. 17 (A), the two unreacted oxidizing fluid flows diverged as described above is converged at the oxidizing fluid exhaust opening 13B and exhausted out to the oxidizing fluid exhaust internal common manifold 43B.

The oxidizing fluid flow route 33 flows in the following order. That is, the supply routes of the oxidizing fluid are: 1) the route of the cathode side separator 7 side involving the oxidizing fluid supply opening 13A, the first guide channel 33S1A, the second guide channel 33S2A, the main channel 33S0, and the cathode side gas diffusion layer 5; and 2) the route of CCM sheet M100 side involving the oxidizing fluid supply opening 13A, the first guide channel 33M1A, the second guide channel 33M2A and the cathode side gas diffusion layer 5. A portion of the oxidizing fluid supplied accordingly diffuses to the cathode side gas diffusion layer 5, the oxygen reduction reaction is promoted at the cathode side catalyst layer 3 by reacting with the hydrogen ion permeated from the CCM membrane M101. On the other hand, the exhaust routes of the unreacted oxidizing fluid are: 1) the route of the cathode side separator 7 side involving the main channel 33S0 (includes the cathode side gas diffusion layer 5 and the main channel 33S0), the second guide channel 33S2B, the first guide channel 33S1B, and the oxidizing fluid exhaust opening 13B; and 2) the route of the CCM sheet M100 side involving the cathode side gas diffusion layer 5, the second guide channel 33M2B, the first guide channel 33M1B, and the oxidizing fluid exhaust opening 13B. These supply and exhaust routes are referred to as "supply and exhaust channel 33". Further, a guide channel is not limited to the guide channels described above. For example, a third channel can be formed.

Furthermore, the cooling medium channel 32 (to be described later) is provided between the cathode side separator 7 configuring one component of the cell unit 8 and the anode side separator 6 configuring one component of the cell unit 8 adjacent to it.

Also, as shown in Figs. 17 (B) and (C), the sealing material 19 applied to the periphery of the half-directional type opening for fuel fluid 11 and the sealing material 19 applied to the periphery of the half-directional type opening for cooling medium 12 can be unified, or they may not be joined to each other, so that processing of the sealing material 19 becomes easy.

Further, as is apparent from Fig. 17 (A), the cathode side gas diffusion layer 5 is superimposed on the oxidizing fluid supply and exhaust channel 33 (the first guide channel 33M1, and the second guide channel 33M2) formed on the CCM sheet M100 side. At the same time, this cathode side gas diffusion layer 5 is disposed over the oxidizing fluid supply and exhaust channel 33 (the first guide channel 33S1, the second guide channel 33S2 and the main channel 33S0) formed on the side facing the cathode side separator 7.

Furthermore, the arrangement layout of the half-directional type opening shown in Fig. 17 is the example of providing the supply openings and the exhaust openings for various fluids, where either the supply opening or the exhaust opening of the same kind only is arranged on the same row. The distance between the rows comprising the supply openings and the exhaust openings for various fluids are arranged at approximately equal interval. Further, the arrangement layout of the half-directional type opening is not particularly limited to this example.

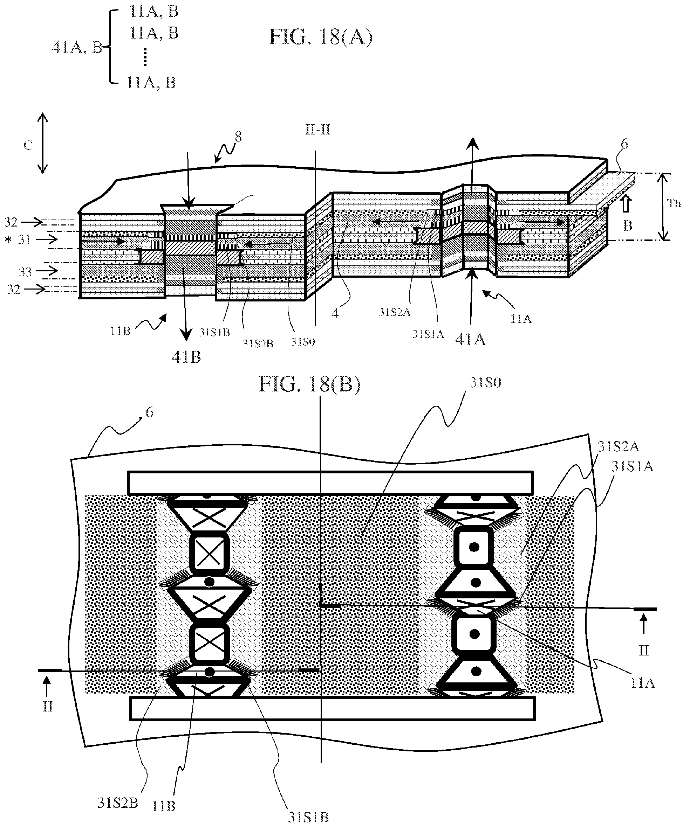

Next, the channel formation related to the separators will be described with reference to Figs. 18, 19 and 20. In these drawings, for the ease of viewing and to meet the convenience of explanation, the drawings are not drawn to a scale accurately, and some thin structural components are displayed as having a greater thickness than the actual thickness. In these drawings, the same reference sign is used for the same component throughout.

Fig. 18 is a drawing for explaining the channel formed on the anode side separator 6, according to the second embodiment of the present invention; Fig. 18 (A) is a 3-dimensional cross-section view of the cell unit 8 along the line II-II of Fig. 18 (B); Fig. 18 (B) is a drawing showing the structure of one of the faces of the anode side separator 6 where the port of the half-directional type opening for fuel fluid 11 and the fuel fluid channel 31 are formed. Note that Fig. 18 is more of the same as Fig. 9 described in the first embodiment and that the same reference signs are annotated to the duplicated portions.

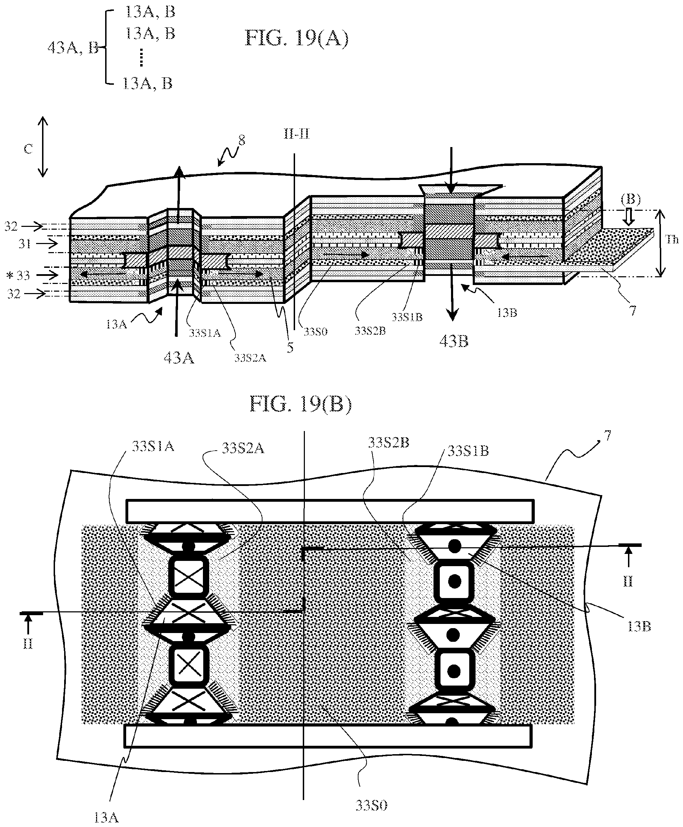

Fig. 19 is a drawing for explaining the channel formed on the cathode side separator 7, according to the second embodiment of the present invention; Fig. 19 (A) is a 3-dimensional cross-section view of the cell unit 8 along the line II-II of Fig. 19 (B); Fig. 19 (B) is a drawing showing the structure of one of the faces of the cathode side separator 7 where the port of the half-directional type opening for oxidizing fluid 13 and the oxidizing fluid channel 33 are formed. Note that Fig. 19 is more of the same as Fig. 10 described in the first embodiment and that the same reference signs are annotated to the duplicated portions.

Fig. 20 is a drawing for explaining the cooling medium channel 32 formed between the anode side separator 6 and the cathode side separator 7, according to the second embodiment of the present invention; Fig. 20 (A) is a 3-dimensional cross-section view of the cell unit 8 along the line II-II of Fig. 20 (B); and Fig. 20 (B) is a plan view showing the structure of the sides facing the separators 6 and 7 where the port of half-directional type opening for cooling medium 12 and the cooling medium channel 32 are respectively formed. The first guide channel 32S1 and the main channel 32S0 are provided for forming the cooling medium channel 32 between the adjacent separators 6, 7. Note that Fig. 20 is more of the same as Fig. 11 described in the first embodiment and that the same reference signs are annotated to the duplicated portions.

Referring to Fig. 18 (B), among the two faces of the anode side separator 6 for the second embodiment of the present invention, the fuel fluid (the anode gas) supply and exhaust channel 31 (includes the first guide channel 31S1, the second guide channel 31S2, and the main channel 31S0) is formed at the side facing the anode side gas diffusion layer 4. Fig. 18 (B) is a plan view of the anode side of the separator 6 when removing the anode side separator 6. That is, the fuel fluid supplied from the supply internal common manifold 41A flows through the supply opening 11A and flows into the first guide channel 31S1A, the second guide channel 31S2A and the main channel 31S0, and the fuel fluid is diffuses through the anode side gas diffusion layer 4. On the other hand, the unreacted fuel fluid flows through the main channel 31S0, the second guide channel 31S2B, the first guide channel 31S1B, and the exhaust opening 11B.

Among the two faces of the anode side separator 6 of Fig. 18, the supply and exhaust channel 32 where the cooling medium flows through is formed (refer to Fig. 20) at the opposite side face from the position of the anode side gas diffusion layer 4. The cooling medium supplied from the internal common manifold 42A flows through the supply opening 12A and flows to the first guide channel 32S1A and the main channel 32S0. The cooling medium as it cools down the power generation area passes through the main channel 32S0 and the first guide channel 32S1B and guided out to the exhaust internal common manifold 42B. Further, as shown in Fig. 20, only the first guide channel 32S1 is formed as the guide channel, formed at the side facing the anode side separator 6and the cathode side separator 7, however, the second guide channel can be formed.

Also, referring to Fig. 19 (B), among the two faces of the cathode side separator 7 for the second embodiment of the present invention, the oxidizing fluid (the cathode gas) supply and exhaust channel 33 (includes the first guide channel 33S1, the second guide channel 33S2, and the main channel 33S0) is formed at the side facing the cathode side gas diffusion layer 5. Fig. 19 (B) is a plan view of the cathode side of the separator 7 when removing the cathode side separator 7. That is, the oxidizing fluid supplied from the supply internal common manifold 43A flows through the supply opening 13A and flows to the first guide channel 33S1A, the second guide channel 33S2A and the main channel 33S0, and the oxidizing fluid is diffused at the cathode side gas diffusion layer 5. On the other hand, the unreacted oxidizing fluid passes through the main channel 33S0, the second guide channel 33S2B, the first guide channel 33S1B, and the exhaust opening 13B.

Among the two faces of the cathode side separator 7 of Fig. 19, the supply and exhaust channel 32 where the cooling medium flows through is formed (refer to Fig. 20) at the opposite side face from the position of the cathode side gas diffusion layer 5. The cooling medium supplied from the internal common manifold 42A flows through the supply opening 12A and flows to the first guide channel 32S1A and the main channel 32S0. The cooling medium as it cools down the power generation area passes through the main channel 32S0 and the first guide channel 32S1B and guided out to the exhaust internal common manifold 42B. As shown in Fig. 20, only the first guide channel 32S1 is formed as the guide channel, formed at the side facing the anode side separator 6 and the cathode side separator 7, however, the second guide channel can be formed. Further, the guide channel is not limited to the various guide channels described above. For example, a third channel can be formed.

According to the second embodiment of the present invention, the first guide channels, the second guide channels and the main channels are formed respectively to the supply and exhaust channels 31, 32, 33. However, the channels are not particularly limited to these, and various other guide channels and the main channels can be formed.

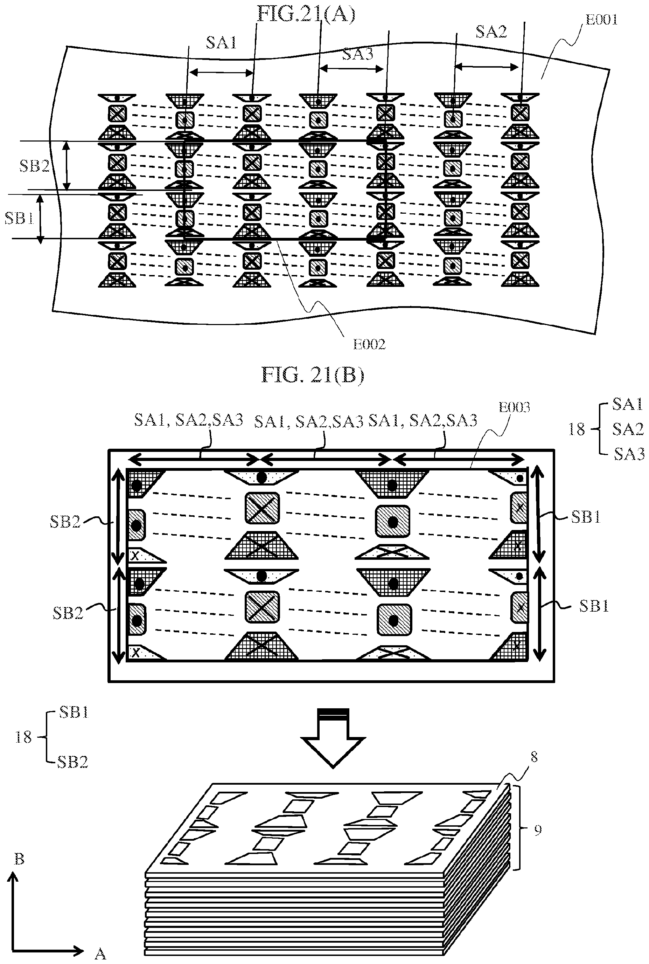

Hereinafter, the edge structure according to the second embodiment of the present invention will be described by using Figs. 13 and 21. Note that Fig. 21 is more of the same as the edge structure of Fig. 12 described in the first embodiment and that the same reference sign is annotated to the duplicated portions.

The edge structure according to the second embodiment of the present invention shown in Fig. 21 includes the edge structure that terminates the extension along the 2 directions of B-axis of the half-directional type opening arrangement pattern E001 (direction A of Fig. 21) and the edge structure that terminates the extension along the 2 directions of A-axis of the half-directional type opening arrangement pattern E001 (direction B of Fig. 21). In order to form the edge structure for these two edge portions, the half-directional type opening arrangement pattern E001 shown in Fig. 21(A), which is based on the regularity of Bravais lattice in 2 dimensions, is divided by using the basic segment 18 and "edge post-processing half-directional type opening assigned area E002" encircled by a thick line in Figs. 21 (A) and (B) is cut out.

Fig. 21 (A) illustrates the arrangement pattern E001 of the half-directional type opening extended in 2 dimensions within the plane of the cell unit 8, and the half-directional type opening assigned area E002 after performing the two edge processings. Fig. 21 (B) is a schematic drawing showing the cell unit 8 having the edge processed opening assigned structure E003 in which the edge post-processing half-directional type opening assigned area E002 has been cut out from the half-directional type opening arrangement pattern E001, and the cell stack structure body 9 obtained by stacking the cell units 8. Within the edge post-processing half-directional type opening assigned area E002, in order to achieve the equilibrium for the total amount of supply flow and distribution and the total amount of exhaust flow and distribution for various fluids, the total area that combined the areas of the supply openings for various fluids 11A, 12A, 13A (at the edge portions and the intermediate portion) and the areas of the exhaust openings for various fluids 11B, 12B, 13B (at the edge portions and the intermediate portion) respectively are designed to be equal or approximately equal. The edge processing is carried out in this way.

As shown in Fig. 21 (A), the edge structure for terminating the extensions in the two axial directions for the A-axis and B-axis sets as a standard a segment with an integer multiple of the basic segment 18 corresponding to the respective extensions in the axial directions. The characteristics of the basic segment 18 is that it is comprised of 3 types of openings 11, 12, 13 for the fuel fluid, the cooling medium and the oxidizing fluid, for maintaining the power generating function, and/or, it is comprised of the supply opening and the exhaust opening for various fluids at one-to-one relationship. To maintain equilibriums for supply and exhaust of each reaction gas flowing within the cell unit 8 and the cooling medium flowing between the two cell units 8, the extensions of the half-directional type openings in the two axial directions comprised of the A-axis and B-axis are terminated based on a segment with an integer multiple of the basic segment 18 as the standard.

Hereinbelow, 2X3 edge structure will be taken and the explanation follows below as example. Without doubt that the edge structure of the present invention is not limited to this example.

The edge structure for terminating the 2-dimensional extension in the two directions of B-axis (the direction A of Fig. 21 (B)) of the half-directional type opening arrangement pattern E001 according to the second embodiment of the present invention is the edge structure provided along the direction A of the edge post-processing half-directional type opening assigned area E002 of Fig 21 (A). As shown in Fig. 21 (A), the reference division of the edge structure for terminating the 2-dimensional extension in the two directions of B-axis (the direction A of Fig. 21 (B)) of the half-directional type opening pattern E001 is the integer multiple of the basic segments SB1 and SB2. The extension in the two directions of B-axis of the half-directional type opening arrangement pattern E001 is terminated by taking the integer multiple of the basic segments SB1, SB2 based on the division (segment) of the basic segment SB1 and/or the basic segment SB2 as the standard. Referring to Fig. 3 (B), the ports of the half-directional type openings are different from the port positions of the all-directional type openings having ports at all quadrants, and said ports are positioned at the first quadrant and the second quadrant, or the third quadrant and the fourth quadrant. The all-directional type opening is characterized for the coexistence of upward-facing and downward-facing port positions and the flows along the direction B, and the all-directional type opening itself is divided into two for forming the edge structure. On the other hand, the characteristics of the port of the half-directional type opening is that the flow in or out from the port does not show the radial flow line but spread in a circular sector at either one of the upper half or the lower half of the half-directional type opening. That is, the flow in or out of the port of the half-directional type opening is gathered to either the upper half or the lower half. The port position and the flow of this half-directional type opening is either one of upward facing or downward facing along the direction B, being different from the port position and the flow for the all-directional type opening where the upward facing and downward facing are co-existing. In order to terminate the extension in the two directions of B-axis of the half-directional type opening arrangement pattern E001, the half-directional type opening itself needs not be divided into two, instead, the segment can be placed between the two adjacent half-directional type openings. Further, in order to form the fuel fluid flow and the oxidizing fluid flow for maintaining the power generating function, the one-to-one relationship is established between the half-directional type opening for fuel fluid 11 having an upward-facing port and the half-directional type opening for oxidizing fluid 13 having a downward-facing port, and one-to-one relationship is established between the half-directional type opening for oxidizing fluid 13 having an upward-facing port and the half-directional type opening for fuel fluid 11 having a downward-facing port, for the basic segment SB1 and the basic segment SB2, respectively.

Therefore, as depicted in Fig. 21 (A), the basic segment SB1 comprises one fuel fluid opening 11 having the upward-facing port, one cooling medium opening 12, and one oxidizing fluid opening 13 having the downward-facing port. The basic segment SB2 comprises one oxidizing fluid opening 13 having the upward-facing port, one cooling medium opening 12, and one fuel fluid opening 11 having the downward-facing port. The length of the basic segments SB1 and SB2 (the length in direction B) can be the same or different. The case in which the length in direction B will be the same is that, in the example of Fig. 21 it illustrates the case of arranging the fuel fluid opening 11, the cooling medium opening 12 and the oxidizing fluid opening 13 on the same row in a straight manner and the lengths of the basic segment SB1 and SB2 will be the same. However, in the case that the fuel fluid opening 11, the cooling medium opening 12 and the oxidizing fluid opening 13 are arranged in a jig-zag manner in the direction B, then the lengths of the basic segments SB1 and SB2 along the direction A will become different. Therefore, in the 2X3 edge structure shown in Fig. 21 (B), the edge structure for terminating the extension in the two directions of B-axis (the direction A of Fig. 21) is comprised of two basic segment SB1 and two basic segment SB2.

The edge structure for terminating the 2-dimensional extension in the two directions of A-axis (the direction B of Fig. 21 (B)) of the half-directional type opening arrangement pattern E001 is the edge structure provided along the direction B of the edge post-processing half-directional type opening assigned area E002 of Fig 21 (A) . As shown in Fig. 21 (A), the segment reference of the edge structure for terminating the extension in the two directions of A-axis (the direction B of Fig. 21 (B)) of the half-directional type opening arrangement pattern E001 is an integer multiple of the basic segments SA1, SA2 and SA3. The extension in the two directions of A-axis of the half-directional type opening arrangement pattern E001 is terminated by taking the integer multiple of the basic segments SA1, SA2 and SA3 based on the division (segment) of the basic segment SA1 and/or the basic segment SA2 and/or the basic segment SA3 as the standard. Referring to Fig. 3 (B), the ports of the half-directional type openings are positioned at the first quadrant and the second quadrant, or the third quadrant or the fourth quadrant. To terminate the extension in the two directions of A-axis of the half-directional type openings, the half-directional type opening is divided into 2 by cutting through a middle of the zone located between the first and second quadrants and the third and fourth quadrants. Referring to Fig. 21, in order to form the fuel fluid flow and the oxidizing fluid flow for maintaining the power generating function, the one-to-one relationships are established between the ports of the half-directional type supply openings and the ports of the half-directional type exhaust openings, for the basic segment SA1, SA2 and SA3, respectively. Therefore, as depicted in Fig. 21(A), the basic segment SA1 comprises one of the fuel fluid supply opening 11A divided into two, and one of the fuel fluid exhaust opening 11B divided into two. The basic segment SA2 comprises one of the cooling medium supply opening 12A divided into two, and one of the cooling medium exhaust opening 12B divided into two. The basic segment SA3 comprises one of the oxidizing fluid supply opening 13A divided into two, and one of the oxidizing fluid exhaust opening 13B divided into two. In the example of Fig. 21 (A), the fuel fluid opening 11, the cooling medium opening 12 and the oxidizing fluid opening 13 are arranged on the same row B so that the lengths of the basic segments SA1, SA2 and SA3 will all be the same, that is, it becomes the same as the distance between the rows B. The lengths of the basic segments SA1, SA2 and SA3 (the length in direction A) can be the same or different. In the case that the fuel fluid opening 11, the cooling medium opening 12 and the oxidizing fluid opening 13 are arranged in a jig-zag manner in the direction A, then the lengths of the basic segments SA1, SA2 and SA3 along the direction A will be different.

Therefore, in the 2X3 edge structure shown in Fig. 21 (B), the edge structure for terminating the extension in the two directions of A-axis (the direction B of Fig. 21) is comprised of three basic segments SA1, SA2 and SA3.

The 2X3 edge structure shown in Figs. 21 (A) and (B) are formed by using the basic segments accordingly.

Accordingly, the positions and the cross sectional areas (the supply distribution and the flow amount) of the supply internal common manifolds for various fluids 41A, 42A and 43A, and the positions and the cross-sectional areas (the exhaust distribution and the flow amount) of the exhaust internal common manifolds for various fluids 41B, 42B and 43B are in the equilibrium states within the plane of the cell unit 8 where the half-directional type openings 11, 12, 13 of the second embodiment of the present invention are arranged.

Table 2 below shows the number of half-directional type openings included in the edge processed opening assigned structure E003 of Fig. 21(B) .

**[Table 2]**

| **Second embodiment Half-directional type** | **Number of openings (1=fully-shaped opening)** | | | |
|---|---|---|---|---|
| **Type of openings** | **Middle** | **Edge** | **Corner** | **Total** |
| Fuel fluid supply 11A | 2 | 1/2X1=1/2 | 1/2X1=1/2 | 3 |
| Fuel fluid exhaust 11B | 2 | 1/2X1=1/2 | 1/2X1=1/2 | 3 |
| Cooling medium supply 12A | 2 | 1/2X2=1 | - | 3 |
| Cooling medium exhaust 12B | 2 | 1/2X2=1 | - | 3 |
| Oxidizing fluid supply 13A | 2 | 1/2X1=1/2 | 1/2X1=1/2 | 3 |
| Oxidizing fluid exhaust 13B | 2 | 1/2X1=1/2 | 1/2X1=1/2 | 3 |

As shown in the above Table 2, one will find that the total number (area) of supply openings and the total number (area) of the exhaust openings of the same type included in the edge processed opening assigned structure E003 are the same.

As can be understood by seeing Fig. 21 (B), in the example showing the half-directional type opening arrangement layout having the edge processed opening assigned structure E003 encircled by a thick line, that is, the edge structure divided with the basic segment of 2X3 has, as for the half-directional type openings located at its 2 corners (in this example, these are the fuel fluid supply opening 11A, the oxidizing fluid supply opening 13A, the fuel fluid exhaust opening 11B, the oxidizing fluid exhaust opening 13B) are a half of the fully-shaped half-directional type opening located at the middle (in this example these are the fuel fluid supply opening 11A, the oxidizing fluid supply opening 13A, the fuel fluid exhaust opening 11B the oxidizing fluid exhaust opening 13B), provided that the area of the fully-shaped half-directional type opening locate at the middle is 1. The equilibrium state of supply and exhaust (whether or not one-to-one relationship is established totally) can be confirmed by counting the number (area) of the half-directional type openings for each kind.

As a result of this, by cutting out the edge post-processing half-directional type opening assigned area E002 from the 2-dimensionally extended half-directional type opening arrangement pattern E001 of Fig. 21(A), the cell unit 8 having the edge processed opening assigned structure E003 is completed by arranging the half-directional type openings 11, 12, 13 at the supply and exhaust balanced relation.

In Fig. 21, the surface of the 2-dimensionally extended pattern of half-directional type opening arrangement that applied the regularity of Bravais lattice E001 is encompassed by a thick line as "edge post-processing half-directional type opening assigned area E002" and that portion is cut out. In the second embodiment of the present invention, the half-directional type openings 11, 12, 13 are arranged within the plane of the cell unit 8 based on the "edge post-processing half-directional type opening assigned area E002".

The edge structure within the plane of the cell unit 8 has been described based on the notion of the half-directional type openings as above. Next, the edge structure related to the internal common manifolds communicated to the half-directional type openings will be described.

The internal common manifolds are formed at an inner side of the cell stack structure body 9 formed by stacking the cell units 8 of the present invention. Therefore, if the supply and exhaust of the half-directional type openings for various fluids 11, 12, 13 are in the equilibrium states within the plane of a single cell unit 8, then even if the shape and size of the internal common manifolds are modified or changed, as a whole, the supply and exhaust of the internal common manifolds are also in the equilibrium states.

That is, the cross-sectional shape and the cross-sectional area of the internal common manifolds are basically the same as the shape and the area of the half-directional type openings. Similar to the plane shape and the area of the half-directional type openings provided at the plane of the cell unit 8, the cross-sectional shape and the cross-sectional area of the internal common manifold are different at the corner and edge (the edge portions) and the middle (portion other than the edge portions), respectively. As for the internal common manifold having the edge structure, if the cross-sectional area of the fully-shaped internal common manifold at the middle is regarded as 1, then the cross-sectional area of the internal common manifold at the edge portions (the edges and the corner) along the direction B of Fig. 21 is approximately half the cross-sectional area of the fully-shaped internal common manifold at the middle. On the other hand, the cross-sectional area of the internal common manifold at the edges of the edge portions along the direction A of Fig. 21 is the same as the cross-sectional area of the fully-shaped internal common manifold at the middle. The above-described structure can be adopted to both the internal common manifolds and the external common manifolds.

For this reason, in the plane of the cell unit 8 according to the second embodiment of the present invention, the position and the cross-sectional area of the fuel fluid supply internal common manifold 41A (the supply distribution and the flow amount) and the position and the cross-sectional area of the fuel fluid exhaust internal common manifold 41B (the exhaust distribution and the flow amount) are in the equilibrium state. The position and the cross-sectional area of the cooling medium supply internal common manifold 42A (the supply distribution and the flow amount) and the position and the cross-sectional area of the cooling medium exhaust internal common manifold 42B (the exhaust distribution and the flow amount) are in the equilibrium state. The position and the cross-sectional area of the oxidizing fluid supply internal common manifold 43A (the supply distribution and the flow amount) and the position and the cross-sectional area of the oxidizing fluid exhaust internal common manifold 43B (the exhaust distribution and the flow amount) are in the equilibrium state.

In the case of the half-directional type opening according to the second embodiment of the present invention, the above-described edge structure is provided to terminate the extension of Bravais lattice in 2 dimensions.

As described above, the edge structure pertaining to the second embodiment of the present invention is just one example, and needless to say that it should not be limited to the contents mentioned in the present specification.

### Other modifications

Next, the stacked-type fuel cell in accordance with the other modifications of the present invention will be explained by using Fig. 3.

The main point of difference regarding the other modification is that it is implemented at the arrangement layout using the semi-directional type opening shown in Fig. 3 (D). The structure and mechanism for the example of the other modification is almost identical to those of the first embodiment shown in Figs. 1 to 13 and the second embodiment shown in Figs. 1 to 3 and 14 to 21.

As for the shape of the opening which is the one of the characteristics of the present invention, since the semi-directional type opening shown in Fig. 3 (D), like the half-directional type opening shown in Fig. 3 (B), (C) and (E), is asymmetrical in shape, therefore, they all have an inverted type shape, respectively. The all-directional type opening shown in Fig. 3 (A) is symmetrical shape, so that its inverted type does not exist. The inverted type exists if the shape is asymmetrical.

Referring to the other modifications of the present invention, the semi-directional type openings 11, 12, 13 can be arranged within the plane of the cell unit 8 of the present invention, having applied the regularity of Bravais lattice extended within 2 dimensions. The port position of the semi-directional type opening shown in Fig. 3 (D) is designed so that various fluid flowing out via the port positioned at the first quadrant, the third quadrant and the fourth quadrant are flowing semi-directionally with divergent angles of greater than 1 through less than 90 degrees and greater than 1 through less than 180 degrees. Also, the various fluid flowing in via the port positioned at the above-mentioned quadrants are designed to flow in semi-directionally with convergent angles of greater than 1 through less than 90 degrees and greater than 1 through less than 180 degrees

Also, the previously mentioned first embodiment has been described in detail regarding the arrangement layout using the all-directional type openings. The previously mentioned second embodiment has been described in detail regarding the arrangement layout using the half-directional type openings. The arrangement layout of the semi-directional type opening is briefly described in the present section of other modifications. The present invention is not limited to the arrangement layout using a single structure of these opening shapes solely. The present invention can be implemented by using the appropriate combination of the all-directional type openings, the half-directional type openings, and the semi-directional type openings.

One example of the port shape provided at the all-directional type opening according to the first embodiment of the present invention is shown in Fig. 3 (A) . Some examples of the port shapes provided to the half-directional type openings according to the second embodiment of the present invention are shown in Fig. 3 (B), (C) and (E). One example of the port shape provided to semi-directional type opening according to the other modifications of the present invention is shown in Fig. 3 (D). Incidentally, the port shape of the present invention needs not be limited to a sole structure of either one of the all-directional type, the half-directional type or the semi-directional type. They can be extended on the cell unit 8 at various combinations.

Also, the plane shape of the port provided to the all-directional type opening of Fig. 5, other than the hexagonal shape illustrated in Fig. 3 (A), any one of polygons, deformed polygons, non-circular, circular and their elongated shapes can be used solely or in combinations. Similarly, the plane shape of the port provided to the half-directional type opening of Fig. 15, other than the trapezoid, the parallelogram and the pentagon illustrated in Fig. 3 (B), (C) and (E), any one of polygons, deformed polygons, non-circular, circular and their elongated shapes can be used solely or in combinations. Similarly, the plane shape of the port provided to the semi-directional type opening, other than the deformed pentagon illustrated in Fig. 3 (D), any one of polygons, deformed polygons, non-circular, circular and their elongated shapes can be used solely or in combinations.

As other modifications, by taking into account of the characteristics of the openings having various shapes, including the semi-directional type opening, they are arranged on the cell unit 8 at a variety of combinations, and the channel design can be implemented depending on their features and the new features brought about from such combinations. In addition to that, the supply and exhaust of various fluids can be maintained at the equilibrium states by performing the edge processing in accordance with the various shapes of the openings.

Depending on the design specification, by appropriately selecting the various shapes of the openings, the flow direction, the divergent angle, the convergent angle can be freely selected, making it possible to implement the channel design for increasing the reaction efficiency.

### Effects of the present invention

The present invention has the following effectiveness based on the above-described configuration.

According to the present invention, the separator is formed so that channel part and metallic part are unified. The number of components can be reduced, at the same time, when manufacturing the fuel cell by stacking the cell units, the assembly becomes easy and definite.

According to the present invention, the cell unit of the fuel cell can demonstrate the durability, and that is not only inexpensive, but the manufacturing is readily performed. No doubt that the present invention is preferable from the viewpoint of reducing the manufacturing cost.

According to the embodiments of the present invention, the cooling efficiency of the fuel cell by the cooling medium is improved. Also, throughout the overall channels, the embodiments are effective in uniformly distributing the reaction gases.

The high power density of the fuel cell can be achieved by the various shaped openings, the internal common manifolds, and the external common manifolds, that can implement the 2-dimensional extension in the plane direction of the cell unit. Also, we can expect to obtain the effect of manufacturing at low cost by employing an inexpensive material in large amount, the cost deletion of the mass production applicability and reducing the number of components for assembly. According to the fuel cell configured accordingly, since the openings having various shapes are positioned by distributing them 2 dimensionally, therefore, the present invention is effective in supplying the reaction gases throughout the whole surface of each functional layer at equal concentration.

Now, the present invention is not limited to the above-mentioned embodiments. Various other modifications can be incorporated to the present invention at the scope conceivable by a person having ordinary skill in the art, and within the scope of the claims for which the various modifications are implemented without deviating from the purport.

### Industrial Applicability

The embodiments of the present invention can be utilized as the fuel cell for vehicle.

The present invention is not limited to the first and second embodiments and the other modifications described above, and it can be realized under various structures within the scope not deviating from the purport. For example, the technical features mentioned in the first and second embodiments in the description of the present invention, can appropriately be replaced or combined for solving all or part of the issues and effects mentioned above.

## Claims

1. A cell unit, comprising: a first separator and a second separator opposite to each other; and a membrane electrode assembly placed between the first and second separators; wherein the membrane electrode assembly includes a catalyst coated membrane, a first gas diffusion layer and a second gas diffusion layer provided to a first side and a second side of the catalyst coated membrane, respectively; wherein the cell unit includes the first separator and the second separator, a plurality of fuel fluid openings, a plurality of cooling medium openings, and a plurality of oxidizing fluid openings of the electrode membrane assembly that pass through an extension plane of the cell unit; wherein at least one of the fuel fluid openings, at least one of the cooling medium openings, and at least one of the oxidizing fluid openings, are arranged at a center area of the cell unit;
wherein, as for the first gas diffusion layer, at least one of the fuel fluid openings includes a fuel fluid port for allowing the fuel fluid to flow through the first gas diffusion layer in the extended direction of the cell unit; and as for the second gas diffusion layer, at least one of the fuel fluid openings includes a sealing material for preventing the fuel fluid to flow through the second gas diffusion layer in the extended direction of the cell unit;
wherein, as for the second gas diffusion layer, at least one of the oxidizing fluid openings includes an oxidizing fluid port for allowing the oxidizing fluid to flow through the second gas diffusion layer in the extended direction of the cell unit; and as for the first gas diffusion layer, at least one of the oxidizing fluid openings includes a sealing material for preventing the oxidizing fluid to flow through the first gas diffusion layer in the extended direction of the cell unit; and
wherein, as for the first gas diffusion layer, the catalyst coated membrane, and the second gas diffusion layer, at least one of the cooling medium openings includes a sealing material for preventing the cooling medium flow through the first gas diffusion layer, the catalyst coated membrane and the second gas diffusion layer, in the extended direction of the cell unit.

2. The cell unit according to claim 1, wherein the catalyst coated membrane includes an electrolyte membrane, a first catalyst layer and a second catalyst layer provided to a first side and a second side of the electrolyte membrane, respectively.

3. The cell unit according to claim 1, wherein the membrane electrode assembly further includes a CCM holder film for holding the catalyst coated membrane; wherein the fuel fluid openings, the cooling medium openings, and the oxidizing fluid openings penetrate the CCM holder film; wherein the CCM holder film comprises a sealing material at least to the side wall of the fuel fluid openings, the cooling medium openings, and the oxidizing fluid openings.

4. The cell unit according to claim 1, wherein the CCM holder film includes a fitting structure; and wherein the catalyst coated membrane is engaged by the fitting structure.

5. The cell unit according to claim 1, wherein the fuel fluid openings, the cooling medium openings, and the oxidizing fluid openings are periodically repeated throughout the cell unit or periodically repeated with fluctuation to some extent, and each periodic repeat is configured with at least one or a plurality of basic units of the same kind or at least one or a plurality of basic units of the different kinds; wherein the cell unit includes an edge structure that terminates the periodic repeat of the basic units, at the edge portions other than the center area and between the boundaries of the basic units of the different kinds.

6. The cell unit according to claim 1, wherein the fuel fluid openings, the cooling medium openings, and the oxidizing fluid openings positioned at the cell unit are configured with the basic units; wherein the cell unit comprises the edge structure that terminates the basic units at the edge portions other than the center area.

7. The cell unit according to claim 1, wherein the fuel fluid openings, the cooling medium openings, and the oxidizing fluid openings include the supply openings and the exhaust openings, respectively.

8. The cell unit according to claims 5 and 6, wherein the basic units are configured with at least two fuel fluid openings, at least two cooling medium openings, and at least two oxidizing fluid openings.

9. The cell unit according to claim 5, wherein the basic unit is a unit having a minimum repeat arrangement periodicity of the pattern of various openings formed in accordance with Bravais lattice arrangement in 2 dimensions.

10. The cell unit according to claim 5, wherein at the first gas diffusion layer, at least one of the fuel cell openings is an opening which is completely open or an opening which is partially sealed; and/or
wherein at the second gas diffusion layer, at least one of the oxidizing fluid openings is an opening which is completely open or an opening which is partially sealed.

11. The cell unit according to claim 5, wherein the catalyst coated membrane, the first gas diffusion layer and the second gas diffusion layer form the cell unit by using a laminating method.

12. The cell unit according to claim 1, wherein at least some of the shapes of the fuel fluid openings, the cooling medium openings, and the oxidizing fluid openings are designed as an all-directional type, that is, a divergent angle and/or a convergent angle for various fluid flow in and/or out of ports corresponding to the first quadrant, the second quadrant, the third quadrant and fourth quadrant are greater than 1 degree and less than 180 degrees.

13. The cell unit according to claim 1, wherein at least some of the shapes of the fuel fluid openings, the cooling medium openings, and the oxidizing fluid openings are designed as a half-directional type, that is, a divergent angle and/or a convergent angle for various fluids flow in and/or out of ports corresponding to the first quadrant and the fourth quadrant or the second quadrant and the third quadrant are 1 degree and more and 90 degrees and less.

14. The cell unit according to claim 1, wherein at least some of the shapes of the fuel fluid openings, the cooling medium openings, and the oxidizing fluid openings are designed as follows: a divergent angle and/or a convergent angle for various fluids flow in and/or out of the ports arranged solely to any one quadrant among the four quadrants are 1 degree and more and 90 degrees and less; and a divergent angle and/or convergent angle for various fluids flow in and/or out of the ports having any two adjacent quadrants among the four quadrants are 1 degree and more and 180 degrees and less.

15. The cell unit according to claim 1, wherein at least one of the fuel fluid openings, at least one of the cooling medium openings, and at least one of the oxidizing fluid openings have plane shapes including polygons, deformed polygons, non-circular, circular and their elongated shapes, or their combinations.

16. The cell unit according to claim 1 having installed a fuel fluid guide channel for the first gas diffusion layer, at a periphery of the fuel fluid port near to the catalyst coated membrane; wherein the fuel fluid guide channel connects a fuel fluid supply guide channel and a fuel fluid exhaust guide channel, positioned at both ends of the first gas diffusion layer.

17. The cell unit according to claim 1 having installed an oxidizing fluid guide channel near to the oxidizing fluid port and the catalyst coated membrane; wherein the oxidizing fluid guide channel connects an oxidizing fluid supply guide channel and an oxidizing fluid exhaust guide channel, positioned at both ends of the second gas diffusion layer.

18. The cell unit according to claim 1, wherein the first gas diffusion layer superimposes with a fuel fluid supply and exhaust channel provided at a side of the catalyst coated membrane, and with a fuel fluid supply and exhaust channel provided at a side of the separator; wherein the second gas diffusion layer superimposes with an oxidizing fluid supply and exhaust channel provided at a side of the catalyst coated membrane, and with an oxidizing fluid supply and exhaust channel provided at a side of the separator.

19. The cell unit according to any one of claims 12 to 14, as for the edge structure that terminates the extension in 2 dimensions of the all-directional type openings, in case of placing one of the supply openings for various fluids at the center, then one of the exhaust openings is divided into four to be placed at a corner, or one of the exhaust openings is divided into two to be placed at an edge, by utilizing the characteristics of flow in and/or out radially from the ports of the all-directional type openings; and as for the edge structure that terminates the extension in 2 dimensions of the half-directional type openings, in case of placing one of the supply openings for various fluids at the center, then one of the exhaust openings is divided into two to be placed at a corner, or one of the exhaust openings is divided into two to be placed at an edge, or one of the exhaust openings is directly placed at the other edge, by utilizing the characteristics of flow in and/or out in a circular-arc like manner from the ports of the half-directional type openings.

20. The cell unit according to claim 19, wherein the fuel fluid exhaust openings at the corners or the edge portions of the first gas diffusion layer include a fuel fluid port for flowing the fuel fluid in the extended direction of the cell unit; wherein the fuel fluid exhaust openings at the corners or the edge portions of the second gas diffusion layer include a sealing material for preventing flow of the oxidizing fluid to the extended direction of the cell unit;
wherein the oxidizing fluid exhaust openings at the corners or the edge portions of the second gas diffusion layer include an oxidizing fluid port for flowing the oxidizing fluid in the extended direction of the cell unit; wherein the oxidizing fluid exhaust openings at the corners or the edge portions of the first gas diffusion layer include a sealing material for preventing flow of the fuel fluid to the extended direction of the cell unit; and
wherein the cooling medium exhaust openings at the corners or the edge portions of the first gas diffusion layer, the catalyst coated membrane and the second gas diffusion layer have a sealing material for preventing flow of the corresponding fluids in the extended direction of the cell unit.

21. A cell stack structure body formed by stacking a plurality of cell units according to any one of claims 1 to 20, comprising: the fuel fluid openings, the cooling medium openings, and the oxidizing fluid openings of the plurality of cell units that are superimposed with each other to form their respective internal common manifolds of the cell stack structure body; wherein the internal common manifolds are used to supply and exhaust the fuel fluid, the cooling medium, and the oxidizing fluid to the plurality of cell units.

22. The cell stack structure body according to claim 21, between the adjacent separators of the adjacent cell units for providing the cooling medium flow, there is at least one of the cooling medium openings of the separators that includes a port for cooling medium of the separator where the cooling medium flows in the extended direction of the cell unit.

23. The cell stack structure body according to claim 22, wherein the separators include, at both its sides, a cooling medium guide channel which is connected to a cooling medium supply channel and a cooling medium exhaust channel.

24. The cell stack structure body according to claim 21, wherein an interval between upper surfaces of the first separators of the adjacent cell units is 0.1 mm or more and 1.2 mm or less.

25. A fuel cell having the cell stack structure body according to any one of claims 21 to 24, comprising: a first end plate; a second end plate;
and the cell stack structure body sandwiched by the first end plate and the second end plate from both sides; wherein at least either one of the first end plate or the second end plate includes the external common manifolds that correspond to the internal common manifolds for supplying and exhausting the fuel fluid, the cooling medium, and the oxidizing fluid.
